(19) Europäisches Patentamt
European Patent Office
Office européen des brevets

(11) EP 3 896 356 B1

(12) EUROPEAN PATENT SPECIFICATION

(45) Date of publication and mention of the grant of the patent:
**04.01.2023 Bulletin 2023/01**

(21) Application number: **19910535.4**

(22) Date of filing: **18.01.2019**

(51) International Patent Classification (IPC):
***F24F 11/79*** *(2018.01)* ***F24F 11/32*** *(2018.01)*
***F24F 11/74*** *(2018.01)* ***F24F 110/65*** *(2018.01)*
***F24F 120/12*** *(2018.01)* *F24F 110/30* *(2018.01)*

(52) Cooperative Patent Classification (CPC):
**F24F 11/36; F24F 11/64; F24F 11/79;**
F24F 2110/30; F24F 2110/65; F24F 2120/10;
Y02B 30/70

(86) International application number:
**PCT/JP2019/001506**

(87) International publication number:
**WO 2020/148897 (23.07.2020 Gazette 2020/30)**

# (54) AIR CONDITIONER AND CONTROL METHOD

KLIMAANLAGE UND STEUERUNGSVERFAHREN

CLIMATISEUR ET PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietor: **MITSUBISHI ELECTRIC CORPORATION**
**Chiyoda-ku**
**Tokyo 100-8310 (JP)**

(72) Inventors:
- **KOTAKE, Nobuki**
  **Tokyo 100-8310 (JP)**
- **SUZUKI, Masataka**
  **Tokyo 100-8310 (JP)**
- **YANAGISAWA, Takayuki**
  **Tokyo 100-8310 (JP)**
- **SHIGA, Akira**
  **Tokyo 100-8310 (JP)**
- **SAKAI, Yu**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
**WO-A1-2017/183104** **CN-A- 107 062 520**
**JP-A- 2012 013 348** **JP-A- 2012 122 950**
**JP-A- 2017 198 536** **JP-A- 2017 198 536**
**US-A1- 2017 010 008** **US-A1- 2018 363 935**
**US-B1- 9 644 857** **US-B1- 10 030 885**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

The present invention relates to an air conditioning device and a control method.

### BACKGROUND ART

Various devices for air conditioning have conventionally been developed. More specifically, an air conditioner, a fan, a blower, an air duct device, and the like have been developed. Hereinafter, each of these devices is referred to as an "air conditioning device". Furthermore, various techniques related to the air conditioning device have been conventionally developed. For example, Patent Literature 1 discloses a technique for detecting occurrence of refrigerant leakage in an indoor unit of an air conditioner. In the technique described in Patent Literature 1, a result of the detection is used for control of a blowing direction and a blowing air volume by the indoor unit.

### CITATION LIST

### PATENT LITERATURE

Patent Literature 1: WO 2017/013715 A
US 2017/010008 A1 discloses an air suction apparatus that includes an air suction port that is variable in an air suction mode including at least one of a shape, a size, a direction, an effective opening area, a position, or an air flow volume of an air suction port and an air suction controller that controls, according to a change in a dust concentration distribution in a periphery of the air suction port, the air suction port to vary at least one of the shape, the size, the direction, the effective opening area, the position, or the air flow volume of the air suction port such that an air suction flow distribution is changed according to the variation of the air suction mode.
JP 2017 198536 A relates to a technique for controlling the wavelength of laser light, and more particularly to a technique for controlling the wavelength of laser light used in a lidar apparatus.
The following references disclose further technological background: US 2018/363935 A1, US 9 644 857 B1, CN 107 062 520 A, US 10 030 885 B1, WO 2017/183104 A1.

### SUMMARY OF INVENTION

### TECHNICAL PROBLEM

Generally, when a gas appliance (for example, a gas stove) is provided in a room of a building, a gas alarm is provided in the room. For example, a gas alarm for so-called "city gas" is usually provided on a ceiling portion of the room. This is because the specific gravity of the city gas is smaller than a specific gravity of air. On the other hand, a gas alarm for so-called "propane gas" is usually provided at a position near a floor surface portion, of a wall surface portion in the room. This is because the specific gravity of the propane gas is larger than the specific gravity of air.
When gas leakage occurs from a gas appliance, the leaked gas rises or falls in the room. The rising gas or the falling gas reaches the gas alarm, whereby the gas alarm detects the occurrence of the gas leakage. Consequently, the gas alarm outputs an alarm.
Here, there has been a problem that gas leakage detection timing by the gas alarm is delayed from gas leakage occurrence timing depending on the speed and distance of the rising or falling of the leaked gas. As a result, there has been a problem that output timing of the alarm by the gas alarm is delayed. Furthermore, the gas alarm merely outputs the alarm, and users are required to execute work in response to the gas leakage (for example, work of opening a window). There has been a problem that execution timing of the work is also delayed due to the delay in the output timing of the alarm.
The present invention has been made to solve the problems as described above, and it is an object to provide an air conditioning device capable of detecting occurrence of gas leakage early and executing control in response to the detected gas leakage.

### SOLUTION TO PROBLEM

An air conditioning device of the present invention includes: a gas detection processing unit calculating a concentration value of a detection target gas in an air conditioning target space by using a lidar; a blowing control unit controlling a blowing direction with respect to the air conditioning target space by using the concentration value and a wind measurement processing unit calculating a wind direction value in the air conditioning target space by using the lidar. The blowing control unit controls the blowing direction by using the concentration value and the wind direction value.

## ADVANTAGEOUS EFFECTS OF INVENTION

The air conditioning device of the present invention can detect occurrence of gas leakage early and execute control in response to the detected gas leakage.

## BRIEF DESCRIPTION OF DRAWINGS

FIG. 1 is a block diagram illustrating a main part of an air conditioning device according to a first embodiment.
FIG. 2 is a block diagram illustrating a main part of an indoor unit of the air conditioning device according to the first embodiment.
FIG. 3 is an explanatory diagram illustrating an example of a first distance-intensity characteristic and an example of a second distance-intensity characteristic.
FIG. 4 is an explanatory diagram illustrating an example of a distribution of a first concentration value in a gas detection target space.
FIG. 5 is an explanatory diagram illustrating an example of a distribution of a second concentration value in the gas detection target space.
FIG. 6 is an explanatory diagram illustrating an example of a wind direction and wind speed model.
FIG. 7 is an explanatory diagram illustrating an example of blowing control for gas guidance.
FIG. 8A is an explanatory diagram illustrating a hardware configuration of a control device of the indoor unit of the air conditioning device according to the first embodiment.
FIG. 8B is an explanatory diagram illustrating another hardware configuration of the control device of the indoor unit of the air conditioning device according to the first embodiment.
FIG. 9 is a flowchart illustrating an operation of the control device of the indoor unit of the air conditioning device according to the first embodiment.
FIG. 10 is a block diagram illustrating a main part of an air conditioning device according to a second embodiment.
FIG. 11 is a block diagram illustrating a main part of an indoor unit of the air conditioning device according to the second embodiment.
FIG. 12 is an explanatory diagram illustrating an example of a first wind measurement target area.
FIG. 13 is an explanatory diagram illustrating an example of an N-th wind measurement target area.
FIG. 14A is a flowchart illustrating an operation of a control device of the indoor unit of the air conditioning device according to the second embodiment.
FIG. 14B is the flowchart illustrating an operation of the control device of the indoor unit of the air conditioning device according to the second embodiment.
FIG. 15 is an explanatory diagram illustrating an example of a plurality of wind measurement target areas.
FIG. 16 is a block diagram illustrating a main part of an air conditioning device according to a third embodiment.
FIG. 17 is a block diagram illustrating a main part of an indoor unit of the air conditioning device according to the third embodiment.
FIG. 18 is an explanatory diagram illustrating another example of the blowing control for gas guidance.
FIG. 19 is an explanatory diagram illustrating another example of the blowing control for gas guidance.
FIG. 20 is a flowchart illustrating an operation of a control device of the indoor unit of the air conditioning device according to the third embodiment.
FIG. 21 is a block diagram illustrating a main part of another indoor unit of the air conditioning device according to the third embodiment.
FIG. 22 is a block diagram illustrating a main part of another indoor unit of the air conditioning device according to the third embodiment.
FIG. 23 is a block diagram illustrating a main part of another indoor unit of the air conditioning device according to the third embodiment.
FIG. 24 is a block diagram illustrating a main part of another indoor unit of the air conditioning device according to the third embodiment.
FIG. 25 is a block diagram illustrating a main part of another indoor unit of the air conditioning device according to the third embodiment.
FIG. 26 is a block diagram illustrating a main part of an air conditioning device according to a fourth embodiment.
FIG. 27 is a block diagram illustrating a main part of an indoor unit of the air conditioning device according to the fourth embodiment.

FIG. 28 is an explanatory diagram illustrating another example of the blowing control for gas guidance.

FIG. 29 is a flowchart illustrating an operation of a control device of the indoor unit of the air conditioning device according to the fourth embodiment.

FIG. 30 is a block diagram illustrating a main part of another indoor unit of the air conditioning device according to the fourth embodiment.

FIG. 31 is a block diagram illustrating a main part of an air conditioning device according to a fifth embodiment.

FIG. 32 is a block diagram illustrating a main part of an indoor unit of the air conditioning device according to the fifth embodiment.

FIG. 33 is an explanatory diagram illustrating another example of the blowing control for gas guidance.

FIG. 34 is a block diagram illustrating a main part of another indoor unit of the air conditioning device according to the fifth embodiment.

FIG. 35 is a block diagram illustrating a main part of an air conditioning device according to a sixth embodiment.

FIG. 36 is a block diagram illustrating a main part of an indoor unit of the air conditioning device according to the sixth embodiment.

FIG. 37A is an explanatory diagram illustrating another example of the blowing control for gas guidance.

FIG. 37B is an explanatory diagram illustrating another example of the blowing control for gas guidance.

FIG. 37C is an explanatory diagram illustrating another example of the blowing control for gas guidance.

FIG. 38 is a flowchart illustrating an operation of a control device of the indoor unit of the air conditioning device according to the sixth embodiment.

FIG. 39 is a block diagram illustrating a main part of another indoor unit of the air conditioning device according to the sixth embodiment.

## DESCRIPTION OF EMBODIMENTS

Hereinafter, to explain the present invention in more detail, embodiments for carrying out the present invention will be described with reference to the accompanying drawings.

First Embodiment.

FIG. 1 is a block diagram illustrating a main part of an air conditioning device according to a first embodiment. FIG. 2 is a block diagram illustrating a main part of an indoor unit of the air conditioning device according to the first embodiment. An air conditioning device 200 of the first embodiment will be described with reference to FIGS. 1 and 2.

As illustrated in FIG. 1, the air conditioning device 200 includes an air conditioner. That is, the air conditioning device 200 includes an indoor unit 1 and an outdoor unit 2. The indoor unit 1 includes a heat exchanger (not illustrated), and the outdoor unit 2 includes another heat exchanger (not illustrated), and these heat exchangers are thermally connected to each other by a refrigerant pipe (not illustrated). Furthermore, the outdoor unit 2 includes a compressor (not illustrated) for refrigerant, and the like. Since structures, arrangements, operations, and the like of these members are known, detailed description thereof will be omitted. Furthermore, the air conditioning device 200 is operated by a remote controller 3.

Hereinafter, the left-right direction with respect to the indoor unit 1 is referred to as the "x direction". Furthermore, the front-back direction with respect to the indoor unit 1 is referred to as the "y direction". Furthermore, the up-down direction with respect to the indoor unit 1 is referred to as the "z direction". Furthermore, an azimuth direction with respect to the front-back direction of the indoor unit 1, that is, an azimuth direction with respect to the y direction is simply referred to as the "azimuth direction". Furthermore, an elevation or depression angle direction with respect to the front-back direction of the indoor unit 1, that is, an elevation or depression angle direction with respect to the y direction is simply referred to as the "elevation or depression angle direction".

Furthermore, a space S1 that is to be an air conditioning target of the air conditioning device 200 is referred to as the "air conditioning target space". Furthermore, out of blowing directions $\Phi_B$ and $\Theta_B$ with respect to the air conditioning target space S1 by the indoor unit 1, the blowing direction $\Phi_B$ with respect to the azimuth direction may be referred to as the "first blowing direction". Furthermore, the blowing direction $\Theta_B$ with respect to the elevation or depression angle direction may be referred to as the "second blowing direction".

As illustrated in FIG. 2, the indoor unit 1 includes a wind direction plate (hereinafter referred to as the "first wind direction plate") 11 whose mounting angle with respect to the azimuth direction is variable, a wind direction plate (hereinafter referred to as the "second wind direction plate") 12 whose mounting angle with respect to the elevation or depression angle direction is variable, and a fan (hereinafter referred to as the "blowing fan") 13 for blowing air to the air conditioning target space S1. Furthermore, the indoor unit 1 includes a drive motor 14 for the first wind direction plate 11, a drive motor 15 for the second wind direction plate 12, and a drive motor 16 for the blowing fan 13.

A blowing direction control unit 21 controls the first blowing direction $\Phi_B$ by controlling the mounting angle of the first wind direction plate 11, more specifically by controlling a rotation position of a rotor in the drive motor 14. Furthermore, the blowing direction control unit 21 controls the second blowing direction $\Theta_B$ by controlling the mounting angle of the second wind direction plate 12, more specifically by controlling a rotation position of a rotor in the drive motor 15.

A blowing air volume control unit 22 controls a blowing air volume $V_B$ by the indoor unit 1 to the air conditioning target space S1, by controlling a rotation speed of the blowing fan 13, more specifically by controlling a rotation speed of a rotor in the drive motor 16.

The mounting angle of the first wind direction plate 11, the mounting angle of the second wind direction plate 12, the rotation speed of the blowing fan 13, an operation of the compressor, and the like are controlled in response to an operation input to the remote controller 3 by a user. By controlling these, air conditioning (for example, cooling or heating) in the air conditioning target space S1 is implemented.

Hereinafter, the control of the blowing directions $\Phi_B$ and $\Theta_B$ by the blowing direction control unit 21 and the control of the blowing air volume $V_B$ by the blowing air volume control unit 22 are collectively referred to as the "blowing control". Furthermore, the blowing control for implementing air conditioning in the air conditioning target space S1 is referred to as the "blowing control for air conditioning". The blowing direction control unit 21 and the blowing air volume control unit 22 constitute a main part of a blowing control unit 23.

The indoor unit 1 includes a lidar 17. The lidar 17 includes, for example, a pulse modulation type lidar, or a continuous wave (CW) type lidar. Since the structure and operation principle of the lidar of each type are known, detailed description thereof will be omitted.

An output port O of laser light L by the lidar 17 is provided, for example, on a front surface portion of the indoor unit 1. In the lidar 17, an output direction (hereinafter referred to as the "line-of-sight direction") D of the laser light L is variable. The lidar 17 outputs the laser light L to the air conditioning target space S1, thereby acquiring a characteristic (hereinafter referred to as the "distance-intensity characteristic") indicating an intensity (hereinafter referred to as the "reception intensity") $P^{REC}$ of a received signal with respect to a distance Z in the line-of-sight direction D. The reception intensity $P^{REC}$ corresponds to, for example, a peak value of a power spectrum obtained by Fast Fourier Transform (FFT) for a time axis waveform of the received signal. That is, the reception intensity $P^{REC}$ corresponds to the intensity of the received signal at a peak frequency. Since the method for acquiring the distance-intensity characteristic by the lidar of each type is known, detailed description thereof will be omitted.

The lidar 17 acquires the distance-intensity characteristic in each of a plurality of the line-of-sight directions D by performing scanning in the air conditioning target space S1 in a raster scan manner. The lidar 17 outputs information (hereinafter referred to as the "distance-intensity characteristic information") indicating the distance-intensity characteristic in each of the plurality of line-of-sight directions D to a first gas concentration calculation unit 24. Note that, the distance-intensity characteristic information includes angle values $\varphi$ and $\theta$ indicating the line-of-sight direction D corresponding to each distance-intensity characteristic. $\varphi$ is an angle value with respect to the azimuth direction, and the $\theta$ is an angle value with respect to the elevation or depression angle direction.

Here, the lidar 17 includes a plurality of optical oscillators (not illustrated) corresponding to mutually different wavelengths $\lambda$. Alternatively, the lidar 17 includes a wavelength-tunable optical oscillator (not illustrated). As a result, the lidar 17 is capable of switching the wavelength $\lambda$ of the output laser light L. More specifically, the lidar 17 is capable of outputting laser light (hereinafter referred to as the "first wavelength light") $L_{OFF}$ having a predetermined wavelength (hereinafter referred to as the "first wavelength") $\lambda_{OFF}$, and is capable of outputting laser light (hereinafter referred to as the "second wavelength light") $L_{ON}$ having another predetermined wavelength (hereinafter referred to as the "second wavelength") $\lambda_{ON}$.

The lidar 17 acquires a distance-intensity characteristic (hereinafter, referred to as the "first distance-intensity characteristic") indicating a reception intensity (hereinafter referred to as the "first reception intensity") $P^{REC}_{OFF}$ due to the first wavelength light $L_{OFF}$ with respect to the distance Z in each of the plurality of line-of-sight directions D, and acquires a distance-intensity characteristic (hereinafter referred to as the "second distance-intensity characteristic") indicating a reception intensity (hereinafter referred to as the "second reception intensity") $P^{REC}_{ON}$ due to the second wavelength light $L_{ON}$ with respect to the distance Z. The distance-intensity characteristic information includes the first distance-intensity characteristic and the second distance-intensity characteristic in each of the plurality of line-of-sight directions D.

The first gas concentration calculation unit 24 calculates a concentration value (hereinafter referred to as the "first concentration value") N1 of a predetermined gas (hereinafter referred to as the "detection target gas") in each of a plurality of areas (hereinafter referred to as the "first gas detection target areas") A1 in the air conditioning target space S1, by using the distance-intensity characteristic information output by the lidar 17. Here, the plurality of first gas detection target areas A1 is formed by dividing a space (hereinafter referred to as the "gas detection target space") S2 that is at least a part of the air conditioning target space S1 at predetermined intervals in the x direction, the y direction, and the z direction.

The gas detection target space S2 is usually set to a space corresponding to substantially the entire air conditioning target space S1. The detection target gas is, for example, the city gas or the propane gas. The first gas concentration calculation unit 24 outputs information (hereinafter referred to as the "first gas concentration distribution information") indicating a distribution of the first concentration value N1 in the air conditioning target space S1 (more specifically, the gas detection target space S2) to a second gas concentration calculation unit 25.

The second gas concentration calculation unit 25 spatially averages the first concentration value N1 calculated by the first gas concentration calculation unit 24 by using the first gas concentration distribution information output by the first gas concentration calculation unit 24. More specifically, the second gas concentration calculation unit 25 averages the calculated first concentration value N1 for each predetermined distance range (for example, 60 centimeters) with respect to the x direction, the y direction, and the z direction. Note that, the second gas concentration calculation unit 25 may obtain a moving average. As a result, the second gas concentration calculation unit 25 calculates a concentration value (hereinafter referred to as the "second concentration value") N2 of the detection target gas in each of one or more areas (hereinafter referred to as the "second gas detection target areas") A2 in the air conditioning target space S1 (more specifically, the gas detection target space S2). That is, each second gas detection target area A2 is formed by spatially merging corresponding first gas detection target areas A1 of the plurality of first gas detection target areas A1.

The size of each first gas detection target area A1 is set to a value (for example, several centimeters) according to a spatial resolution of the lidar 17, for example. On the other hand, the size of each second gas detection target area A2 is larger than the size of each first gas detection target area A1. The size of each second gas detection target area A2 is set to, for example, a value (for example, 60 centimeters) according to the size of a general gas appliance (for example, a gas stove), or the size of a gas appliance (for example, a gas stove) installed in the air conditioning target space S1.

Hereinafter, the first concentration value N1 and the second concentration value N2 may be collectively referred to simply as the "concentration value". Furthermore, a reference sign "N" may be attached to this concentration value.

Furthermore, processing in which the first gas concentration calculation unit 24 calculates the first concentration value N1 and processing in which the second gas concentration calculation unit 25 calculates the second concentration value N2 are collectively referred to as the "gas detection processing". That is, the gas detection processing is processing of detecting the detection target gas in the air conditioning target space S1 (more specifically, the gas detection target space S2). The first gas concentration calculation unit 24 and the second gas concentration calculation unit 25 constitute a main part of a gas detection processing unit 26.

Here, with reference to FIGS. 3 to 5, descriptions will be given of a specific example of the first distance-intensity characteristic, a specific example of the second distance-intensity characteristic, a specific example of a method of calculating the first concentration value N1 by the first gas concentration calculation unit 24, and a specific example of a method of calculating the second concentration value N2 by the second gas concentration calculation unit 25.

The detection target gas has a so-called "absorption line". The second wavelength $\lambda_{ON}$ is set to a value corresponding to the absorption line of the detection target gas. For example, when the detection target gas is the city gas, the second wavelength $\lambda_{ON}$ is set to 2 micrometers. Alternatively, for example, when the detection target gas is the propane gas, the second wavelength $\lambda_{ON}$ is set to a value within a range of 3.2 to 3.4 micrometers. On the other hand, the first wavelength $\lambda_{OFF}$ is set to a value avoiding the absorption line of the detection target gas. For example, the first wavelength $\lambda_{OFF}$ is set to 1550 nanometers.

For this reason, when the detection target gas is present in an area (hereinafter referred to as the "distance section area") A3 corresponding to a distance section $\Delta Z$ in the line-of-sight direction D, the second reception intensity $P^{REC}_{ON}$ is smaller than the first reception intensity $P^{REC}_{OFF}$ in the distance section $\Delta Z$. Furthermore, a concentration value n of the detection target gas in the distance section area A3 corresponding to the distance section $\Delta Z$ is a value according to a ratio between the first reception intensity $P^{REC}_{OFF}$ and the second reception intensity $P^{REC}_{ON}$ in the distance section $\Delta Z$.

FIG. 3 illustrates an example of the first distance-intensity characteristic and an example of the second distance-intensity characteristic. A characteristic line I illustrates an example of the distance-intensity characteristic due to the first wavelength light $L_{OFF}$, that is, an example of the first distance-intensity characteristic. A characteristic line II illustrates an example of the distance-intensity characteristic due to the second wavelength light $L_{ON}$, that is, an example of the second distance-intensity characteristic. In the figure, i indicates a range bin number, R(i) indicates a range bin, and Z(i) indicates a distance value corresponding to each range bin. Further, $\Delta Z(i)$ indicates a distance section between a distance value Z(i) and a distance value Z(i+1).

As illustrated in FIG. 3, in distance sections $\Delta Z(1)$ to $\Delta Z(3)$, the second reception intensity $P^{REC}_{ON}$ is equivalent to the first reception intensity $P^{REC}_{OFF}$. Thus, it can be considered that the detection target gas is not present in the distance section area A3 corresponding to these distance sections $\Delta Z(1)$ to $\Delta Z(3)$. On the other hand, in distance sections $\Delta Z(4)$ to $\Delta Z(9)$, the second reception intensity $P^{RBC}_{ON}$ is smaller than the first reception intensity $P^{REC}_{OFF}$. For this reason, it can be considered that the detection target gas is present in the distance section area A3 corresponding to these distance sections $\Delta Z(4)$ to $\Delta Z(9)$.

First, the first gas concentration calculation unit 24 calculates a difference absorption amount due to the detection target gas (that is, an optical thickness of the detection target gas) $\Delta\tau$ in the distance section area A3 corresponding to each distance section $\Delta Z(i)$ by the following expression (1).

$$\Delta\tau\left(\frac{Z(i+1)+Z(i)}{2}\right)=\frac{1}{2}\ln\left(\frac{P_{ON}^{REC}(Z(i+1))-P_{ON}^{REC}(Z(i))}{P_{OFF}^{REC}(Z(i+1))-P_{OFF}^{REC}(Z(i))}\right) \qquad (1)$$

$P^{REC}_{OFF}(Z(i))$ indicates the first reception intensity $P^{REC}_{OFF}$ corresponding to the distance value Z(i). $P^{REC}_{OFF}(Z(i+1))$ indicates the first reception intensity $P^{RBC}_{OFF}$ corresponding to the distance value Z(i+1). $P^{REC}_{ON}(Z(i))$ indicates the second reception intensity $P^{REC}_{ON}$ corresponding to the distance value Z(i). $P^{REC}_{ON}(Z(i+1))$ indicates the second reception intensity $P^{REC}_{ON}$ corresponding to the distance value Z(i+1). These values are included in the distance-intensity characteristic information output by the lidar 17.

Next, the first gas concentration calculation unit 24 calculates a concentration value n(i) of the detection target gas in the distance section area A3 corresponding to each distance section $\Delta Z(i)$ by the following expression (2). The unit of the concentration value n(i) is [ppm].

$$n(i)=\frac{\Delta\tau}{\delta Z\cdot(k_{ON}-k_{OFF})} \qquad (2)$$

The distance resolution of the lidar 17 is indicated by $\delta Z$. The $\delta Z$ is expressed by the following expression (3). $k_{OFF}$ indicates an absorption coefficient of the first wavelength light $L_{OFF}$ due to the detection target gas. The value of $k_{OFF}$ is determined depending on a type of the detection target gas and the value of the first wavelength $\lambda_{OFF}$. $k_{ON}$ indicates an absorption coefficient of the second wavelength light $L_{ON}$ due to the detection target gas. The value of $k_{ON}$ is determined depending on the type of the detection target gas and the value of the second wavelength $\lambda_{ON}$. The unit of the absorption coefficients $k_{OFF}$ and $k_{ON}$ is [/ppm/m].

$$\delta Z=Z(i+1)-Z(i) \qquad (3)$$

The first gas concentration calculation unit 24 stores in advance information indicating the distance resolution $\delta Z$ and information indicating the absorption coefficients $k_{OFF}$ and $k_{ON}$. The first gas concentration calculation unit 24 uses the information stored in advance for the calculation of the above expression (2).

Here, an x-coordinate value in the air conditioning target space S1 of a point corresponding to each distance value Z(i) is expressed by the following expression (4). A y-coordinate value in the air conditioning target space S1 of the point is expressed by the following expression (5). A z coordinate value in the air conditioning target space S1 of the point is expressed by the following expression (6).

$$x=Z(i)\times\sin\varphi \qquad (4)$$

$$y=Z(i)\times\sin\theta\times\cos\varphi \qquad (5)$$

$$z=Z(i)\times\cos\varphi\times\cos\theta \qquad (6)$$

On the basis of the above expressions (4) to (6), the first gas concentration calculation unit 24 determines which first gas detection target area A1 of the plurality of first gas detection target areas A1 the distance section area A3 corresponding to each distance section $\Delta Z(i)$ corresponds to. On the basis of a result of the determination, the first gas concentration calculation unit 24 sets the concentration value n(i) in each distance section area A3 to the first concentration value N1 in the corresponding first gas detection target area A1.

As described above, the lidar 17 performs scanning in the air conditioning target space S1 in a raster scan manner. The first gas concentration calculation unit 24 calculates the concentration value n(i) in the distance section area A3 corresponding to each distance section $\Delta Z(i)$ for each of the plurality of line-of-sight directions D. Then, the first gas concentration calculation unit 24 sets each of these concentration values n (i) as the first concentration value N1 in the corresponding first gas detection target area A1.

As a result, as illustrated in FIG. 4, the first concentration value N1 in each of the plurality of first gas detection target areas A1 is calculated. In the figure, each circle indicates the first concentration value N1 in the corresponding first gas detection target area A1. That is, it is indicated that the darker the color of the circle is, the larger the first concentration value N1 in the corresponding first gas detection target area A1 is. The first gas concentration calculation unit 24 outputs the information indicating the distribution of the first concentration value N1 in the gas detection target space S2, that is, the first gas concentration distribution information to the second gas concentration calculation unit 25.

Next, the second gas concentration calculation unit 25 spatially averages the first concentration value N1 calculated by the first gas concentration calculation unit 24 by using the first gas concentration distribution information output by the first gas concentration calculation unit 24. More specifically, the second gas concentration calculation unit 25 averages the calculated first concentration value N1 for each predetermined distance range (for example, 60 centimeters) with respect to the x direction, the y direction, and the z direction. As a result, the second gas concentration calculation unit 25 calculates the second concentration value N2 in each of the one or more second gas detection target areas A2. As described above, each second gas detection target area A2 is formed by spatially merging the corresponding first gas detection target areas A1 of the plurality of first gas detection target areas A1.

FIG. 5 illustrates an example of the second concentration value N2 in each of a plurality of second gas detection target areas A2 when the plurality of (more specifically, 12) second gas detection target areas A2 are set. In the figure, each sphere illustrates the second concentration value N2 in the corresponding second gas detection target area A2. That is, it is indicated that the darker the color of the sphere is, the larger the second concentration value N2 in the corresponding second gas detection target area A2 is.

The second gas concentration calculation unit 25 outputs information (hereinafter referred to as the "second gas concentration distribution information") indicating a distribution of the second concentration value N2 in the air conditioning target space S1 (more specifically, the gas detection target space S2) to the blowing control unit 23. The blowing control unit 23 executes blowing control (hereinafter referred to as the "blowing control for gas guidance") for guiding the detection target gas in the air conditioning target space S1 to a predetermined area (hereinafter referred to as the "gas guidance target area") A4, by using the output second gas concentration distribution information. Hereinafter, a specific example of the blowing control for gas guidance will be described with reference to FIGS. 6 and 7.

First, the blowing control unit 23 compares the second concentration value N2 in each second gas detection target area A2 with a predetermined threshold value Nth. By this comparison, the blowing control unit 23 determines whether execution of the blowing control for gas guidance is required or not.

For example, when the number of the second gas detection target areas A2 having the second concentration value N2 greater than or equal to the threshold value Nth is greater than or equal to a predetermined number (for example, 1), the blowing control unit 23 determines that the execution of the blowing control for gas guidance is required. On the other hand, when the number of the second gas detection target areas A2 having the second concentration value N2 greater than or equal to the threshold value Nth is less than the predetermined number, the blowing control unit 23 determines that the execution of the blowing control for gas guidance is unrequired. The threshold value Nth is set in consideration of an influence of the detection target gas on a human body, and the like, for each type of the detection target gas.

When it is determined that the execution of the blowing control for gas guidance is required, the blowing control unit 23 executes the blowing control for gas guidance as below.

That is, the blowing control unit 23 stores in advance a table (hereinafter referred to as the "wind direction and wind speed model table") T indicating a correspondence, between a model (hereinafter referred to as the "wind direction and wind speed model") M of a wind direction value (hereinafter may be referred to as the "first wind direction value") $\Phi_M$ with respect to the azimuth direction, a wind direction value (hereinafter may be referred to as the "second wind direction value") $\Theta_M$ with respect to the elevation or depression angle direction, and a wind speed value $V_M$, in each of a plurality of areas (hereinafter referred to as the "unit areas") A5 in the air conditioning target space S1, and the blowing directions $\Phi_B$ and $\Theta_B$ and the blowing air volume $V_B$ for implementing the wind direction and wind speed model M. More specifically, the blowing control unit 23 stores in advance a plurality of the wind direction and wind speed model tables T corresponding to a plurality of the wind direction and wind speed models M. The plurality of unit areas A5 is formed by dividing the air conditioning target space S1 at predetermined intervals in the x direction, the y direction, and the z direction.

FIG. 6 illustrates an example of a portion corresponding to a predetermined x-coordinate value in one wind direction and wind speed model M among the plurality of wind direction and wind speed models M. In the figure, each of a plurality of white arrows indicates a wind vector $D_M$ in the corresponding unit areas A5. That is, the wind vector $D_M$ has a direction corresponding to the wind direction values $\Phi_M$ and $\Theta_M$, and has a magnitude corresponding to the wind speed value $V_M$. Furthermore, a thin line arrow indicates an example of an air flow F1 occurring in the air conditioning target space S1 when the blowing control unit 23 executes the blowing control with the blowing directions $\Phi_B$ and $\Theta_B$ and the blowing air volume $V_B$ corresponding to the one wind direction and wind speed model M.

For example, as illustrated in FIG. 7, it is assumed that a gas appliance (more specifically, a stove stand and a gas stove mounted on the stove stand) E1 is installed in the air conditioning target space S1, and the second concentration value N2 in the second gas detection target area A2 corresponding to an installation position of the gas appliance E1 is greater than or equal to the threshold value Nth. In this case, the blowing control unit 23 selects one of the wind direction and wind speed models M in which an updraft occurs in a unit area A5 corresponding to the installation position of the gas appliance E1 and unit areas A5 arranged above the unit area A5, among the plurality of wind direction and wind speed models M. That is, the wind direction and wind speed model M illustrated in FIG. 6 is selected.

The blowing control unit 23 executes the blowing control with the blowing directions $\Phi_B$ and $\Theta_B$ and the blowing air volume $V_B$ corresponding to the wind direction and wind speed model M selected. By the blowing control, a detection target gas (G in the figure) in the air conditioning target space S1 rises and is guided to an area including a ceiling portion in the air conditioning target space S1. That is, such blowing control is the blowing control for gas guidance, and the area including the ceiling portion is set as the gas guidance target area A4.

The blowing control unit 23 and the gas detection processing unit 26 constitute a main part of a control device 100. A main part of the indoor unit 1 includes the first wind direction plate 11, the second wind direction plate 12, the blowing fan 13, the drive motor 14, the drive motor 15, the drive motor 16, the lidar 17, and the control device 100. The indoor unit 1 and the outdoor unit 2 constitute a main part of the air conditioning device 200.

Next, a hardware configuration of the main part of the control device 100 will be described with reference to FIG. 8.

As illustrated in FIG. 8A, the control device 100 includes a processor 41 and a memory 42. A nonvolatile memory of the memory 42 stores a program corresponding to functions of the blowing control unit 23 and the gas detection processing unit 26. The processor 41 loads the stored program into a volatile memory of the memory 42 and executes the loaded program. As a result, the functions of the blowing control unit 23 and the gas detection processing unit 26 are implemented.

Alternatively, as illustrated in FIG. 8B, the control device 100 includes a processing circuit 43. In this case, the functions of the blowing control unit 23 and the gas detection processing unit 26 are implemented by the dedicated processing circuit 43.

Alternatively, the control device 100 includes the processor 41, the memory 42, and the processing circuit 43 (not illustrated). In this case, some of the functions of the blowing control unit 23 and the gas detection processing unit 26 are implemented by the processor 41 and the memory 42, and the remaining functions are implemented by the dedicated processing circuit 43.

The processor 41 includes, for example, at least one of a central processing unit (CPU), a graphics processing unit (GPU), a microprocessor, a microcontroller, or a digital signal processor (DSP).

The volatile memory of the memory 42 includes, for example, a random access memory (RAM). The nonvolatile memory of the memory 42 includes, for example, at least one of a read only memory (ROM), a flash memory, an erasable programmable read only memory (EPROM), an electrically erasable programmable read only memory (EEPROM), a solid state drive (SSD), or a hard disk drive (HDD).

The processing circuit 43 includes, for example, at least one of an application specific integrated circuit (ASIC), a programmable logic device (PLD), a field-programmable gate array (FPGA), or a system-on-a-chip (SoC), a system large-scale integration (LSI).

Next, with reference to a flowchart of FIG. 9, an operation of the control device 100 will be described focusing on the gas detection processing and the blowing control for gas guidance.

While the blowing control unit 23 executes the blowing control for air conditioning, the lidar 17 repeatedly performs scanning in the air conditioning target space S1. The lidar 17 acquires the distance-intensity characteristic in each of the plurality of line-of-sight directions D in the scanning of each time. The gas detection processing unit 26 executes processing of step ST1 when, for example, the scanning of each time by the lidar 17 ends.

First, in step ST1, the gas detection processing unit 26 executes the gas detection processing. That is, the first gas concentration calculation unit 24 calculates the first concentration value N1 in each first gas detection target area A1, and the second gas concentration calculation unit 25 calculates the second concentration value N2 in each second gas detection target area A2. Since the specific example of the gas detection processing is as described above, the repeated description thereof will be omitted. The gas detection processing unit 26 outputs the second gas concentration distribution information to the blowing control unit 23.

Next, in step ST2, the blowing control unit 23 determines whether the execution of the blowing control for gas guidance is required or not by using the second gas concentration distribution information output by the gas detection processing unit 26. Since the specific example of the determination method by the blowing control unit 23 is as described above, the repeated description thereof will be omitted.

When it is determined that the execution of the blowing control for gas guidance is required (step ST2 "YES"), in step ST3, the blowing control unit 23 stops the blowing control for air conditioning and starts the blowing control for gas guidance. Since the specific example of the blowing control for gas guidance is as described above, the repeated description thereof will be omitted.

After the blowing control for gas guidance is started in step ST3, the scanning by the lidar 17, the gas detection processing by the gas detection processing unit 26, and the determination of the requirement of the execution of the blowing control for gas guidance by the blowing control unit 23 may be repeatedly executed. When a determination result of the requirement of the execution of the blowing control for gas guidance is "not required", that is, when the number of the second gas detection target areas A2 having the second concentration value N2 greater than or equal to the threshold value Nth is less than or equal to a predetermined number, the blowing control unit 23 ends the blowing control for gas guidance. At this time, the blowing control unit 23 may restart the blowing control for air conditioning that is stopped at the timing of step ST2 "YES".

As described above, the air conditioning device 200 executes the gas detection processing using the lidar 17. By using the lidar 17 for the gas detection processing, it is of course possible to detect the detection target gas in an area near an installation position of the indoor unit 1 early, and it is also possible to detect the detection target gas in an area far from the installation position early.

Furthermore, when a high-concentration detection target gas is detected by the gas detection processing (more specifically, when it is determined that the number of the second gas detection target areas A2 having the second concentration value N2 greater than or equal to the threshold value Nth is greater than or equal to the predetermined number), the air conditioning device 200 executes the blowing control for gas guidance. The gas guidance target area A4 is set in, for example, an area including the ceiling portion in the air conditioning target space S1. Usually, there is a low probability that a person is present in the area. Thus, the detection target gas can be guided to an area avoiding the person in the air conditioning target space S1 by such blowing control for gas guidance. Furthermore, when the detection target gas is the city gas, there is a high probability that a gas alarm is provided on the ceiling portion. Thus, it is possible to implement an early alarm output by the gas alarm by such blowing control for gas guidance.

The detection target gas is not limited to the city gas or the propane gas. For example, the detection target gas may be Freon (more specifically, HFC). In this case, the second wavelength $\lambda_{ON}$ may be set to a value within a range of 3000 to 3100 nanometers. Alternatively, for example, the detection target gas may be carbon dioxide. In this case, the second wavelength $\lambda_{ON}$ may be set to 1.6 micrometers and the threshold value Nth may be set to 5000 ppm.

Furthermore, the lidar 17 may be capable of switching the wavelength $\lambda$ of the output laser light L in three or more stages. As a result, the gas detection processing unit 26 may calculate the concentration value N of each of a plurality of types of the detection target gases having mutually different absorption lines.

By using the lidar 17, it is of course possible to detect the detection target gas in an area positioned below the installation position of the indoor unit 1, and it is also possible to detect the detection target gas in an area positioned above the installation position. As a result, when the detection target gas is the city gas and the propane gas, it is possible to implement the detection of each of the city gas and the propane gas.

Furthermore, in the blowing control for gas guidance, a different wind direction and wind speed model M may be selected for each type of the detection target gas. This is because the wind speed value $V_M$ required for guiding the detection target gas (that is, the blowing air volume $V_B$ required for guiding the detection target gas) and the like may differ depending on the viscosity of the detection target gas, the weight of a molecule contained in the detection target gas, the size of the molecule contained in the detection target gas, and the like.

Furthermore, at least some wind direction and wind speed models M of the plurality of wind direction and wind speed models M may be those using a trained model by so-called "machine learning".

Furthermore, the gas detection processing unit 26 does not have to include the second gas concentration calculation unit 25. In this case, the gas detection processing unit 26 may output the first gas concentration distribution information to the blowing control unit 23. The blowing control unit 23 may determine whether the execution of the blowing control for gas guidance is required or not by using the first concentration value N1 instead of the second concentration value N2, and execute the blowing control for gas guidance. However, from a viewpoint of stabilizing the comparison between the concentration value N and the threshold value Nth, that is, from a viewpoint of stabilizing the detection of the detection target gas, it is more preferable to use the second concentration value N2.

Furthermore, in the blowing control unit 23, instead of the wind direction and wind speed model table T, a table (hereinafter referred to as the "wind direction model table") T' may be stored in advance, indicating a correspondence between a model (hereinafter referred to as the "wind direction model") M' of the wind direction values $\Phi_M$ and $\Theta_M$ in each of the plurality of unit areas A5, and the blowing directions $\Phi_B$ and $\Theta_B$ for implementing the wind direction model M'. In this case, the blowing directions $\Phi_B$ and $\Theta_B$ in the blowing control for gas guidance are set to values according to the wind direction model M' selected, whereas the blowing air volume $V_B$ in the blowing control for gas guidance may be set to a value similar to the blowing air volume $V_B$ in the blowing control for air conditioning. However, from a viewpoint of improving the accuracy of guidance by the blowing control for gas guidance, it is more preferable to use the wind direction and wind speed model table T.

Furthermore, the control method for the blowing air volume $V_B$ by the blowing air volume control unit 22 is not limited to the method of controlling the rotation speed of the rotor in the drive motor 16. For example, the indoor unit 1 may include a damper (not illustrated) for air volume adjustment. The blowing air volume control unit 22 may control the blowing air volume $V_B$ by controlling the damper, that is, by changing a duct resistance curve.

Furthermore, the air conditioning device 200 is only required to be a device for air conditioning, and is not limited to the air conditioner. For example, the air conditioning device 200 may include a fan, a blower, or an air duct device.

Furthermore, an air conditioning system may include a plurality of the air conditioning devices 200 for one air conditioning target space S1. In this case, the blowing control for gas guidance by the wind direction and wind speed model M selected may be implemented by cooperation of the plurality of air conditioning devices 200. As a result, it is possible to implement complicated blowing control for gas guidance by a wind direction and wind speed model M. Furthermore, it is possible to cause the detection target gas guided to the area including the ceiling portion by the updraft to stay in the area. As a result, it is possible to prevent the guided detection target gas from falling in the air conditioning target space S1.

As described above, the air conditioning device 200 of the first embodiment includes: the gas detection processing unit 26 for calculating the concentration value N of the detection target gas in the air conditioning target space S1 by using the lidar 17; and the blowing control unit 23 for controlling the air blowing directions $\Phi_B$ and $\Theta_B$ with respect to the air conditioning target space S1 by using the concentration value N. By using the lidar 17, it is possible to detect the detection target gas in the air conditioning target space S1 (more specifically, the gas detection target space S2) early. Furthermore, the detection target gas can be guided to a predetermined area in the air conditioning target space S1 by the blowing control for gas guidance.

Furthermore, the gas detection processing unit 26 includes: the first gas concentration calculation unit 24 for calculating the first concentration value N1 in each of the plurality of first gas detection target areas A1; and the second gas concentration calculation unit 25 for calculating the second concentration value N2 in each of the one or more second gas detection target areas A2 by spatially averaging the first concentration value N1, and the blowing control unit 23 uses the second concentration value N2 for the control of the blowing directions $\Phi_B$ and $\Theta_B$. By using the second concentration value N2, it is possible to stabilize the comparison between the concentration value N and the threshold value Nth as compared with a case where the first concentration value N1 is used. That is, the detection of the detection target gas can be stabilized.

Furthermore, the blowing control unit 23 controls the blowing directions $\Phi_B$ and $\Theta_B$ and the blowing air volume $V_B$ to the air conditioning target space S1 by using the concentration value N. By including the blowing air volume $V_B$ in addition to the blowing directions $\Phi_B$ and $\Theta_B$ as the control target, the accuracy of the guidance by the blowing control for gas guidance can be improved.

Furthermore, the gas detection processing unit 26 includes: the first gas concentration calculation unit 24 for calculating the first concentration value N1 in each of the plurality of first gas detection target areas A1; and the second gas concentration calculation unit 25 for calculating the second concentration value N2 in each of the one or more second gas detection target areas A2 by spatially averaging the first concentration value N1, and the blowing control unit 23 uses the second concentration value N2 for the control of the blowing direction $\Phi_B$ and $\Theta_B$ and the blowing air volume $V_B$. By using the second concentration value N2, it is possible to stabilize the comparison between the concentration value N and the threshold value Nth as compared with a case where the first concentration value N1 is used. That is, the detection of the detection target gas can be stabilized.

Furthermore, the size of each first gas detection target area A1 is set to the value according to the spatial resolution of the lidar 17, and the size of each second gas detection target area A2 is set to the value according to the size of the gas appliance. As a result, for example, when the detection target gas is the city gas or the propane gas, the size of each second gas detection target area A2 can be set to an appropriate size.

Furthermore, the blowing control unit 23 guides the detection target gas to the gas guidance target area A4 in the air conditioning target space S1 by controlling the blowing directions $\Phi_B$ and $\Theta_B$. As a result, for example, the detection target gas can be guided to the area including the ceiling portion in the air conditioning target space S1.

Furthermore, the blowing control unit 23 guides the detection target gas to the gas guidance target area A4 in the air conditioning target space S1 by controlling the blowing directions $\Phi_B$ and $\Theta_B$ and the blowing air volume $V_B$. As a result, for example, the detection target gas can be guided to the area including the ceiling portion in the air conditioning target space S1.

Furthermore, the blowing control unit 23 sets the area including the ceiling portion in the air conditioning target space S1 as the gas guidance target area A4. As a result, the detection target gas can be guided to the area. As a result, for example, when the detection target gas is the city gas, it is possible to implement the early alarm output by the gas alarm.

Furthermore, the wavelength $\lambda$ of the laser light L output by the lidar 17 is switchable, and the gas detection processing unit 26 calculates the concentration value N of each of the plurality of types of the detection target gases. By using the lidar 17 having the plurality of optical oscillators or the lidar 17 having the wavelength-tunable optical oscillator, it is possible to detect each of the plurality of types of the detection target gases.

Furthermore, the control method according to the first embodiment is a control method for the air conditioning device 200, in which the gas detection processing unit 26 calculates the concentration value N of the detection target gas in the air conditioning target space S1 by using the lidar 17, and the blowing control unit 23 controls the blowing directions $\Phi_B$ and $\Theta_B$ with respect to the air conditioning target space S1 by using the concentration value N. As a result, it is possible to obtain an effect similar to the above effect obtained by the air conditioning device 200.

Second Embodiment.

FIG. 10 is a block diagram illustrating a main part of an air conditioning device according to a second embodiment. FIG. 11 is a block diagram illustrating a main part of an indoor unit of the air conditioning device according to the second embodiment. An air conditioning device 200a of the second embodiment will be described with reference to FIGS. 10 and 11.

Note that, in FIG. 10, blocks similar to the blocks illustrated in FIG. 1 are designated by the same reference numerals, and the description thereof will be omitted. Furthermore, in FIG. 11, blocks similar to the blocks illustrated in FIG. 2 are designated by the same reference numerals, and the description thereof will be omitted.

As described in the first embodiment, the lidar 17 acquires the distance-intensity characteristic in each of the plurality of line-of-sight directions D by performing scanning in the air conditioning target space S1. In addition to this, by the scanning, the lidar 17 acquires a wind speed value (hereinafter referred to as the "line-of-sight direction wind speed value") Vr with respect to line-of-sight directions D at a point (hereinafter referred to as the "wind measurement target point") Pr corresponding to at least one distance value Z in each of the plurality of line-of-sight directions D. Since the method of acquiring the line-of-sight direction wind speed value Vr by the lidar of each type is known, detailed description thereof will be omitted. The lidar 17 outputs information (hereinafter referred to as the "line-of-sight direction wind speed information") including the angle values $\theta$ and $\varphi$ and the line-of-sight direction wind speed value Vr to the wind measurement processing unit 29.

The wind measurement processing unit 29 calculates a wind direction value (that is, the first wind direction value) $\Phi_L$ with respect to the azimuth direction, a wind direction value (that is, the second wind direction value) $\Theta_L$ with respect to the elevation or depression angle direction, and a wind speed value $V_L$, in each of N areas (hereinafter referred to as the "wind measurement target areas") A6 in the air conditioning target space S1, by using the line-of-sight direction wind speed information output by the lidar 17. Each of the N wind measurement target areas A6 is, for example, an area surrounded by corresponding M wind measurement target points Pr among a plurality of the wind measurement target points Pr. Here, N is an arbitrary integer greater than or equal to 2, and M is an arbitrary integer greater than or equal to 3.

That is, a main part of the wind measurement processing unit 29 includes a wind direction value calculation unit 27 for calculating the wind direction values $\Phi_L$ and $\Theta_L$, and a wind speed value calculation unit 28 for calculating the wind speed value $V_L$. Hereinafter, processing in which the wind direction value calculation unit 27 calculates the wind direction values $\Phi_L$ and $\Theta_L$, and processing in which the wind speed value calculation unit 28 calculates the wind speed value $V_L$ are collectively referred to as "wind measurement processing".

Here, a specific example of the wind measurement processing by the wind measurement processing unit 29 will be described with reference to FIGS. 12 and 13. Hereinafter, "_n" ($1 \le n \le N$) may be attached to each reference numeral related to an n-th wind measurement target area A6 among the N wind measurement target areas A6. Furthermore, "_n_m" ($1 \le m \le M$) may be attached to each reference numeral related to an m-th wind measurement target point Pr among the M wind measurement target points Pr corresponding to the n-th wind measurement target area A6.

As illustrated in FIG. 12, it is assumed that the lidar 17 outputs the laser light L in each of a line-of-sight direction D_1_1 corresponding to angle values $\varphi$_1_1 and $\theta$_1_1, a line-of-sight direction D_1_2 corresponding to angle values $\varphi$_1_2 and $\theta$_1_2, and a line-of-sight direction D_1_3 corresponding to angle values $\varphi$_1_3 and $\theta$_1_3. As a result, three line-of-sight direction wind speed values Vr_1_1, Vr_1_2, and Vr_1_3 at three wind measurement target points Pr_1_1, Pr_1_2, and Pr_1_3 are acquired, respectively.

Here, the line-of-sight direction wind speed value Vr at each wind measurement target point Pr is expressed by the following expression (7). Vu is a wind speed value in the x direction at the corresponding wind measurement target point Pr. Vv is a wind speed value in the y direction at the corresponding wind measurement target point Pr. Vw is a wind speed value in the z direction at the corresponding wind measurement target point Pr.

$$\begin{aligned} Vr &= Vu \times \sin\varphi \times \cos\theta \\ &+ Vv \times \cos\varphi \times \cos\theta \\ &+ Vw \times \sin\theta \qquad (7) \end{aligned}$$

The angle values $\varphi$_1_1, $\varphi$_1_2, $\varphi$_1_3, $\theta$_1_1, $\theta$_1_2, and $\theta$_1_3, and the line-of-sight direction wind speed values Vr_1_1, Vr_1_2, and Vr_1_3 are assigned to the above expression (7), whereby simultaneous equations in three unknowns including three variables Vu, Vv, and Vw are obtained. The wind measurement processing unit 29 calculates wind speed values Vu_1, Vv_1, and Vw_1 in a first wind measurement target area A6_1 by solving the simultaneous equations in three unknowns. As illustrated in FIG. 12, the first wind measurement target area A6_1 is an area surrounded by the three wind measurement target points Pr_1_1, Pr_1_2, and Pr_1_3.

Next, the wind direction value calculation unit 27 calculates the wind direction value $\Phi_L$ in the first wind measurement target area A6_1 by the following expression (8) by using the wind speed values Vu_1 and Vv_1 calculated by the above expression (7). Furthermore, the wind direction value calculation unit 27 calculates the wind direction value $\Theta_L$ in the first wind measurement target area A6_1 by the following expression (9) by using the wind speed values Vu_1, Vv_1, and Vw_1 calculated by the above expression (7). Furthermore, the wind speed value calculation unit 28 calculates the wind speed value $V_L$ in the first wind measurement target area A6_1 by the following expression (10) by using the wind speed values Vu_1, Vv_1, and Vw_1 calculated by the above expression (7).

$$\Phi_L = \mathrm{atan}(Vu/Vv) \qquad (8)$$

$$\Theta_L = \mathrm{atan}\{Vw/\sqrt{(Vu^2+Vv^2)}\} \qquad (9)$$

$$V_L = \sqrt{(Vu^2+Vv^2+Vw^2)} \qquad (10)$$

Hereinafter, processing similar to the above is repeatedly executed while the lidar 17 performs scanning in the air conditioning target space S1. Finally, the wind direction values $\Phi_L$ and $\Theta_L$ and the wind speed value $V_L$ in an N-th wind measurement target area A6_N are calculated (see FIG. 13).

That is, the wind direction value calculation unit 27 regards that the wind direction and the wind speed in each wind measurement target area A6 are uniform, and calculates the wind direction values $\Phi_L$ and $\Theta_L$ and the wind speed value $V_L$ in each wind measurement target area A6. Thus, it is preferable to set the size of each wind measurement target area A6 to a sufficiently small value so that it is possible to regard that the wind direction and the wind speed in each wind measurement target area A6 are uniform.

For example, a difference value between each two angle values φ_n among M angle values φ_n_1 to φ_n_M is set to a value (for example, 2 degrees) according to the size of an n-th wind measurement target area A6_n. Furthermore, a difference value between each two angle values θ_n among M angle values θ_n_1 to θ_n_M is set to a value (for example, 2 degrees) according to the size of the n-th wind measurement target area A6_n.

A blowing control unit 23a executes the blowing control for air conditioning and the blowing control for gas guidance. As described in the first embodiment, the wind direction and wind speed model M selected among the plurality of wind direction and wind speed models M is used for the blowing control for gas guidance. Hereinafter, the wind direction and wind speed model M selected is referred to as "selected wind direction and wind speed model". Furthermore, the wind direction and wind speed model table T indicating the wind direction and wind speed model M selected is referred to as "selected wind direction and wind speed model table".

Here, the blowing control unit 23a has a function of correcting (that is, compensating) the blowing directions $\Phi_B$ and $\Theta_B$ and the blowing air volume $V_B$ in the blowing control for gas guidance with respect to the blowing directions $\Phi_B$ and $\Theta_B$ and the blowing air volume $V_B$ indicated by the selected wind direction and wind speed model table T by using the wind direction values $\Phi_L$ and $\Theta_L$ and the wind speed value $V_L$ calculated by the wind measurement processing unit 29. Hereinafter, control in which a blowing direction control unit 21a corrects the first blowing direction $\Phi_B$, control in which the blowing direction control unit 21a corrects the second blowing direction $\Theta_B$, and control in which a blowing air volume control unit 22a corrects the blowing air volume $V_B$ are collectively referred to as "compensation control". A specific example of the compensation control is as follows.

First, the blowing direction control unit 21a calculates a difference value $\Phi_E$ between the first wind direction value $\Phi_L$ in each wind measurement target area A6 and the first wind direction value $\Phi_M$ in the corresponding unit area A5 in the selected wind direction and wind speed model M. As a result, N difference values $\Phi_E$ are calculated corresponding to the N wind measurement target areas A6 on a one-to-one basis.

Furthermore, the blowing direction control unit 21a calculates a difference value $\Theta_E$ between the second wind direction value $\Theta_L$ in each wind measurement target area A6 and the second wind direction value $\Theta_M$ in the corresponding unit area A5 in the selected wind direction and wind speed model M. As a result, N difference values $\Theta_E$ are calculated corresponding to the N wind measurement target areas A6 on a one-to-one basis.

Furthermore, the blowing air volume control unit 22a calculates a difference value $V_E$ between the wind speed value $V_L$ in each wind measurement target area A6 and the wind speed value $V_M$ in the corresponding unit area A5 in the selected wind direction and wind speed model M. As a result, N difference values $V_E$ are calculated corresponding to the N wind measurement target areas A6 on a one-to-one basis.

Next, the blowing direction control unit 21a compares at least one difference value (hereinafter referred to as the "comparison difference value") $\Phi_E$ among the N difference values $\Phi_E$ with a predetermined threshold value $\Phi$th. The comparison difference value $\Phi_E$ is, for example, the largest difference value $\Phi_E$ among the N difference values $\Phi_E$. Alternatively, the blowing direction control unit 21a calculates a root mean square (RMS) error $\Phi_{RMSE}$ based on the N difference values $\Phi_E$, and compares the calculated RMS error $\Phi_{RMSE}$ with the predetermined threshold value $\Phi$th. When the comparison difference value $\Phi_E$ or the RMS error $\Phi_{RMSE}$ is greater than or equal to the threshold value $\Phi$th, the blowing direction control unit 21a determines that correction of the first blowing direction $\Phi_B$ is required. On the other hand, when the comparison difference value $\Phi_E$ or the RMS error $\Phi_{RMSE}$ is less than the threshold value $\Phi$th, the blowing direction control unit 21a determines that the correction of the first blowing direction $\Phi_B$ is unrequired.

Furthermore, the blowing direction control unit 21a compares at least one difference value (hereinafter referred to as the "comparison difference value") $\Theta_E$ among the N difference values $\Theta_E$ with a predetermined threshold value $\Theta$th. The comparison difference value $\Theta_E$ is, for example, the largest difference value $\Theta_E$ among the N difference values $\Theta_E$. Alternatively, the blowing direction control unit 21a calculates an RMS error $\Theta_{RMSE}$ based on the N difference values $\Theta_E$, and compares the calculated RMS error $\Theta_{RMSE}$ with the predetermined threshold value $\Theta$th. When the comparison difference value $\Theta_E$ or the RMS error $\Theta_{RMSE}$ is greater than or equal to the threshold value $\Theta$th, the blowing direction control unit 21a determines that correction of the second blowing direction $\Theta_B$ is required. On the other hand, when the comparison difference value $\Theta_E$ or the RMS error $\Theta_{RMSE}$ is less than the threshold value $\Theta$th, the blowing direction control unit 21a determines that the correction of the second blowing direction $\Theta_B$ is unrequired.

Furthermore, the blowing air volume control unit 22a compares at least one difference value (hereinafter referred to as the "comparison difference value") $V_E$ among the N difference values $V_E$ with a predetermined threshold value Vth. The comparison difference value $V_E$ is, for example, the largest difference value $V_E$ among the N difference values $V_E$. Alternatively, the blowing air volume control unit 22a calculates an RMS error $V_{RMSE}$ based on the N difference values $V_E$, and compares the calculated RMS error $V_{RMSE}$ with the predetermined threshold value Vth. When the comparison difference value $V_E$ or the RMS error $V_{RMSE}$ is greater than or equal to the threshold value Vth, the blowing air volume control unit 22a determines that correction of the blowing air volume $V_B$ is required. On the other hand, when the comparison difference value $V_E$ or the RMS error $V_{RMSE}$ is less than the threshold value Vth, the blowing air volume control unit 22a determines that the correction of the blowing air volume $V_B$ is unrequired.

When it is determined that the correction of the first blowing direction $\Phi_B$ is required, the blowing direction control unit 21a calculates a compensation value $\Phi$c according to at least one difference value (hereinafter referred to as the "compensation difference value") $\Phi_E$ of the N difference values $\Phi_E$. The compensation difference value $\Phi_E$ is, for example, the largest difference value $\Phi_E$ among the N difference values $\Phi_E$. On the basis of the calculated compensation value $\Phi_C$, the blowing direction control unit 21a corrects the first blowing direction $\Phi_B$ in the blowing control for gas guidance with respect to the first blowing direction $\Phi_B$ indicated in the selected wind direction and wind speed model table T.

Furthermore, when it is determined that the correction of the second blowing direction $\Theta_B$ is required, the blowing direction control unit 21a calculates a compensation value $\Theta_C$ according to at least one difference value (hereinafter referred to as the "compensation difference value") $\Theta_E$ of the N difference values $\Theta_E$. The compensation difference value $\Theta_E$ is, for example, the largest difference value $\Theta_E$ among the N difference values $\Theta_E$. On the basis of the calculated compensation value $\Theta_C$, the blowing direction control unit 21a corrects the second blowing direction $\Theta_B$ in the blowing control for gas guidance with respect to the second blowing direction $\Theta_B$ indicated in the selected wind direction and wind speed model table T.

Furthermore, when it is determined that correction of the blowing air volume $V_B$ is required, the blowing air volume control unit 22a calculates a compensation value Vc according to at least one difference value (hereinafter referred to as the "compensation difference value") $V_E$ of the N difference values $V_E$. The compensation difference value $V_E$ is, for example, the largest difference value $V_E$ among the N difference values $V_E$. On the basis of the calculated compensation value Vc, the blowing air volume control unit 22a corrects the blowing air volume $V_B$ in the blowing control for gas guidance with respect to the blowing air volume $V_B$ indicated in the selected wind direction and wind speed model table T.

Regarding the wind direction and the wind speed in the air conditioning target space S1, an error may occur of a measured value (that is, $\Phi_E$, $\Theta_L$, $V_L$) with respect to a target value (that is, $\Phi_M$, $\Theta_M$, $V_M$), depending on an installation situation of furniture, or the like in the air conditioning target space S1. At this time, the blowing control unit 23a executes the compensation control, whereby such an error can be reduced. As a result, the accuracy of the guidance by the blowing control for gas guidance can be improved.

Note that, during the execution of the blowing control for gas guidance, the lidar 17 may perform scanning a plurality of times in the air conditioning target space S1, and the wind measurement processing and the compensation control may be executed a plurality of times. As a result, the above error can be gradually reduced. That is, the compensation control may be by so-called "feedback control".

The blowing control unit 23a, the gas detection processing unit 26, and the wind measurement processing unit 29 constitute a main part of a control device 100a. A main part of an indoor unit 1a includes the first wind direction plate 11, the second wind direction plate 12, the blowing fan 13, the drive motor 14, the drive motor 15, the drive motor 16, the lidar 17, and the control device 100a. The indoor unit 1a and the outdoor unit 2 constitute a main part of the air conditioning device 200a.

Since a hardware configuration of the main part of the control device 100a is similar to that described with reference to FIG. 8 in the first embodiment, illustration and description thereof will be omitted. That is, the function of each of the blowing control unit 23a, the gas detection processing unit 26, and the wind measurement processing unit 29 may be implemented by the processor 41 and the memory 42, or may be implemented by the dedicated processing circuit 43.

Next, with reference to a flowchart of FIG. 14, the operation of the control device 100a will be described focusing on the gas detection processing, the blowing control for gas guidance, the wind measurement processing, and the compensation control. Note that, in FIG. 14, steps similar to those illustrated in FIG. 9 are designated by the same reference numerals, and the description thereof will be omitted.

First, as illustrated in FIG. 14A, the processing of steps ST1 to ST3 is executed. Since the processing content of steps ST1 to ST3 is similar to that described with reference to FIG. 9 in the first embodiment, the repeated description thereof will be omitted.

After the blowing control for gas guidance is started in step ST3, the lidar 17 repeatedly performs scanning in the air conditioning target space S1. As illustrated in FIG. 14B, the wind measurement processing and the compensation control are repeatedly executed in accordance with the scanning by the lidar 17 until the blowing control for gas guidance ends.

That is, in step ST11, the wind measurement processing unit 29 executes the wind measurement processing. Since the specific example of the wind measurement processing is as described above, the repeated description thereof will be omitted. By the wind measurement processing in step ST11, the wind direction values $\Phi_L$ and $\Theta_L$ and the wind speed value $V_L$ are calculated in each of the N wind measurement target areas A6.

Next, in step ST12, the blowing direction control unit 21a determines whether the correction of the first blowing direction $\Phi_B$ is required or not by using the N first wind direction values $\Phi_L$ calculated by the wind measurement processing in step ST11. Furthermore, in step ST13, the blowing direction control unit 21a determines whether the correction of the second blowing direction $\Theta_B$ is required or not by using the N second wind direction values $\Theta_L$ calculated by the wind measurement processing in step ST11. Furthermore, in step ST14, the blowing air volume control unit 22a determines whether the correction of the blowing air volume $V_B$ is required or not by using the N wind speed values $V_L$ calculated by the wind measurement processing in step ST11. Since the specific examples of these determination methods are as described above, the repeated description thereof will be omitted.

When it is determined that the correction of the first blowing direction $\Phi_B$ is required (step ST12 "YES"), in step ST15, the blowing direction control unit 21a corrects the first blowing direction $\Phi_B$ in the blowing control for gas guidance with respect to the first blowing direction $\Phi_B$ indicated by the selected wind direction and wind speed model table T in step ST3. On the other hand, when it is determined that the correction of the first blowing direction $\Phi_B$ is unrequired (step ST12 "NO"), the processing of step ST15 is skipped.

Furthermore, when it is determined that the correction of the second blowing direction $\Theta_B$ is required (step ST13 "YES"), in step ST16, the blowing direction control unit 21a corrects the second blowing direction $\Theta_B$ in the blowing control for gas guidance with respect to the second blowing direction $\Theta_B$ indicated by the selected wind direction and wind speed model table T in step ST3. On the other hand, when it is determined that the correction of the second blowing direction $\Theta_B$ is unrequired (step ST13 "NO"), the processing of step ST16 is skipped.

Furthermore, when it is determined that the correction of the blowing air volume $V_B$ is required (step ST14 "YES"), in step ST17, the blowing air volume control unit 22a corrects the blowing air volume $V_B$ in the blowing control for gas guidance with respect to the blowing air volume $V_B$ indicated by the selected wind direction and wind speed model table T in step ST3. On the other hand, when it is determined that the correction of the blowing air volume $V_B$ is unrequired (step ST14 "NO"), the processing of step ST17 is skipped.

That is, in steps ST15 to ST17, the blowing control unit 23a executes the compensation control during the execution of the blowing control for gas guidance. Since the specific example of the compensation control is as described above, the repeated description thereof will be omitted.

Note that, as described in the first embodiment, the lidar 17 is capable of outputting the first wavelength light $L_{OFF}$ and is capable of outputting the second wavelength light $L_{ON}$. It is preferable to use the first wavelength light $L_{OFF}$ to acquire the line-of-sight direction wind speed value Vr. If the second wavelength light $L_{ON}$ is used to acquire the line-of-sight direction wind speed value Vr, when the detection target gas is present in the air conditioning target space S1, the second wavelength light $L_{ON}$ is absorbed by the detection target gas, and it may be difficult to acquire the line-of-sight direction wind speed value Vr. On the other hand, by using the first wavelength light $L_{OFF}$ to acquire the line-of-sight direction wind speed value Vr, the line-of-sight direction wind speed value Vr can be acquired regardless of the presence or absence of the detection target gas in the air conditioning target space S1.

Furthermore, the blowing direction control unit 21a may compare an average value of the N difference values $\Phi_E$, instead of the RMS error $\Phi_{RMSE}$, with the predetermined threshold value $\Phi$th. The blowing direction control unit 21a may compare an average value of the N difference values $\Theta_E$, instead of the RMS error $\Theta_{RMSE}$, with the predetermined threshold value $\Theta$th. The blowing air volume control unit 22a may compare an average value of the N difference values $V_E$, instead of the RMS error $V_{RMSE}$, with a predetermined threshold value Vth.

Furthermore, the compensation control may be targeted only for the blowing directions $\Phi_B$ and $\Theta_B$. That is, the blowing air volume $V_B$ may be excluded from a target of the compensation control. In this case, calculation of the wind speed value $V_L$ in the wind measurement processing is unnecessary. Furthermore, the processing of steps ST14 and ST17 illustrated in FIG. 14B is unnecessary. However, from the viewpoint of improving the accuracy of the guidance by the blowing control for gas guidance, it is more preferable to include the blowing air volume $V_B$ in the target of the compensation control.

Furthermore, the compensation control may be targeted only for the first blowing direction $\Phi_B$. That is, the second blowing direction $\Theta_B$ and the blowing air volume $V_B$ may be excluded from the target of the compensation control. In this case, the term of Vw $\times$ sin $\theta$ in the above expression (7) is unnecessary. As a result, the number of the variables in the above expression (7) is two (that is, Vu and Vv), so that the number of the wind measurement target points Pr corresponding to the individual wind measurement target areas A6 may be M = 2. However, from the viewpoint of improving the accuracy of the guidance by the blowing control for gas guidance, it is more preferable to include the second blowing direction $\Theta_B$ and the blowing air volume $V_B$ in the target of the compensation control.

Furthermore, the blowing control unit 23a may set an area in which a high-concentration detection target gas is present (that is, an area corresponding to the second gas detection target area A2 having the second concentration value N2 greater than or equal to the threshold value Nth) as the wind measurement target area A6, by using the second gas concentration distribution information output by the second gas concentration calculation unit 25. As a result, it is possible to execute the compensation control based on the wind direction values $\Phi_L$ and $\Theta_L$ and the wind speed value $V_L$ in the area in which the high-concentration detection target gas is present.

Furthermore, the lidar 17 may include a pulse type Doppler lidar. As a result, when the lidar 17 outputs the laser light L in one line-of-sight direction D, it is possible to acquire the line-of-sight direction wind speed value Vr at each of the plurality of wind measurement target points Pr arranged along the line-of-sight direction D. Thus, as illustrated in FIG. 15, the plurality of wind measurement target areas A6 arranged along the line-of-sight direction D can be set at one time.

In addition, the air conditioning device 200a can adopt various modifications similar to those described in the first embodiment.

As described above, the air conditioning device 200a of the second embodiment includes the wind measurement processing unit 29 for calculating the wind direction values $\Phi_L$ and $\Theta_L$ in the air conditioning target space S1 by using the lidar 17, and the blowing control unit 23a controls the blowing directions $\Phi_B$ and $\Theta_B$ by using the concentration value N and the wind direction values $\Phi_L$ and $\Theta_L$. By the compensation control targeted for the blowing directions $\Phi_B$ and $\Theta_B$, the accuracy of the guidance by the blowing control for gas guidance can be improved.

Furthermore, the air conditioning device 200a includes the wind measurement processing unit 29 for calculating the wind direction values $\Phi_L$ and $\Theta_L$ and the wind speed value $V_L$ in the air conditioning target space S1 by using the lidar 17, and the blowing control unit 23a controls the blowing direction $\Phi_B$ and $\Theta_B$ and the blowing air volume $V_B$ by using the concentration value N, the wind direction values $\Phi_L$ and $\Theta_L$, and the wind speed value $V_L$. By the compensation control targeted for the blowing directions $\Phi_B$ and $\Theta_B$ and the blowing air volume $V_B$, the accuracy of the guidance by the blowing control for gas guidance can be further improved.

Third Embodiment.

FIG. 16 is a block diagram illustrating a main part of an air conditioning device according to a third embodiment. FIG. 17 is a block diagram illustrating a main part of an indoor unit of the air conditioning device according to the third embodiment. An air conditioning device 200b of the third embodiment will be described with reference to FIGS. 16 and 17.

Note that, in FIG. 16, blocks similar to the blocks illustrated in FIG. 1 are designated by the same reference numerals, and the description thereof will be omitted. Furthermore, in FIG. 17, blocks similar to the blocks illustrated in FIG. 2 are designated by the same reference numerals, and the description thereof will be omitted.

As described in the first embodiment, the lidar 17 acquires the distance-intensity characteristic in each of the plurality of line-of-sight directions D by performing scanning in the air conditioning target space S1. In addition to this, the lidar 17 generates a so-called "intensity image" and "distance image" by the scanning. Each pixel in the intensity image indicates an intensity value of the received signal obtained by outputting the laser light L in the line-of-sight direction D corresponding to the pixel. Each pixel in the distance image indicates a distance value obtained by outputting the laser light L in the line-of-sight direction D corresponding to the pixel. The lidar 17 outputs image information (hereinafter referred to as the "intensity image information") indicating the generated intensity image, and image information (hereinafter referred to as the "distance image information") indicating the generated distance image. Hereinafter, the images generated by the lidar 17 may be collectively referred to as "lidar image".

A human detection processing unit 30 executes processing (hereinafter referred to as the "human detection processing") of detecting a person in the air conditioning target space S1 by using the intensity image information and the distance image information output by the lidar 17. A specific example of the human detection processing is as follows.

First, the human detection processing unit 30 extracts a pixel group corresponding to an object (so-called "hard target") in the lidar image by executing threshold processing on the intensity image. Usually, the intensity value of each pixel included in the pixel group corresponding to the hard target is about $10^4$ times larger than the intensity value of other pixels. For this reason, by executing the threshold processing on the intensity image, it is possible to extract the pixel group corresponding to the hard target in the lidar image. Next, the human detection processing unit 30 determines whether or not the extracted pixel group corresponds to a person by executing pattern matching processing on the intensity image or the distance image.

As a result, it is possible to determine whether or not there is a person in the air conditioning target space S1. Furthermore, when there is a person in the air conditioning target space S1, it is possible to detect a position of the person in the air conditioning target space S1. In particular, by using the distance image in addition to the intensity image, it is of course possible to detect the position of the person in the x direction and the z direction, and it is also possible to detect the position of the person in the y direction. That is, the position of the person can be detected with high accuracy.

The human detection processing unit 30 outputs information (hereinafter referred to as the "detection result information") indicating a result of the human detection processing to the blowing control unit 23. The blowing control unit 23 uses the detection result information output by the human detection processing unit 30 for the blowing control for gas guidance. More specifically, the blowing control unit 23 uses the output detection result information for selection of the wind direction and wind speed model M.

For example, when there is a person in the air conditioning target space S1, the human detection processing unit 30 selects the wind direction and wind speed model M in which blowing to the feet of the person is implemented. By the blowing control based on the wind direction and wind speed model table (that is, the selected wind direction and wind speed model table) T corresponding to the wind direction and wind speed model M selected (that is, the selected wind direction and wind speed model), as illustrated in FIG. 18, an air flow F2 including an updraft along the body of the person (H in the figure) occurs. By the updraft, the detection target gas (G in the figure) can be guided to an area including the ceiling portion.

Note that, when the position of the person (H in the figure) is a position between an indoor unit 1b and the gas appliance E1, by the blowing control based on the selected wind direction and wind speed model table T, an air flow F2 similar to that illustrated in FIG. 18 occurs as illustrated in FIG. 19, and the air flow F1 similar to that illustrated in FIG. 7 also occurs. As a result, the detection target gas (G in the figure) can be guided to the area including the ceiling portion, similarly to the example illustrated in FIG. 7, and similarly to the example illustrated in FIG. 18.

The blowing control unit 23, the gas detection processing unit 26, and the human detection processing unit 30 constitute a main part of a control device 100b. A main part of the indoor unit 1b includes the first wind direction plate 11, the second wind direction plate 12, the blowing fan 13, the drive motor 14, the drive motor 15, the drive motor 16, the lidar 17, and the control device 100b. The indoor unit 1b and the outdoor unit 2 constitute a main part of the air conditioning device 200b.

Since a hardware configuration of the main part of the control device 100b is similar to that described with reference to FIG. 8 in the first embodiment, illustration and description thereof will be omitted. That is, the function of each of the blowing control unit 23, the gas detection processing unit 26, and the human detection processing unit 30 may be implemented by the processor 41 and the memory 42, or may be implemented by the dedicated processing circuit 43.

Next, with reference to a flowchart of FIG. 20, the operation of the control device 100b will be described focusing on the gas detection processing, the human detection processing, and the blowing control for gas guidance. Note that, in FIG. 20, steps similar to those illustrated in FIG. 9 are designated by the same reference numerals, and the description thereof will be omitted.

First, the processing of steps ST1 and ST2 is executed. When it is determined that the execution of the blowing control for gas guidance is required (step ST2 "YES"), the human detection processing unit 30 executes the human detection processing in step ST4. Since the specific example of the human detection processing is as described above, the repeated description thereof will be omitted. The human detection processing unit 30 outputs the detection result information to the blowing control unit 23.

Next, in step ST3, the blowing control unit 23 starts the blowing control for gas guidance. At this time, the blowing control unit 23 uses the detection result information output by the human detection processing unit 30 for the selection of the wind direction and wind speed model M. Since the specific example of the blowing control for gas guidance is as described above, the repeated description thereof will be omitted.

Note that, the method of detecting a person in the human detection processing using the lidar image is not limited to the above specific example. Various known detection methods can be used for the human detection processing.

Furthermore, as illustrated in FIG. 21, the control device 100b may include the wind measurement processing unit 29 and the blowing control unit 23a similar to those described in the second embodiment. In this case, after the processing of step ST3 illustrated in FIG. 20 is executed, the processing of steps ST11 to ST17 similar to that illustrated in FIG. 14B may be executed.

Furthermore, as illustrated in FIG. 22 or 23, the indoor unit 1b may be provided with an infrared camera 18. The infrared camera 18 images the inside of the air conditioning target space S1. The infrared camera 18 outputs image information (hereinafter referred to as the "infrared image information") indicating the imaged image (so-called "infrared image") to the blowing control unit 23 or the blowing control unit 23a. The blowing control unit 23 or the blowing control unit 23a may use the infrared image, instead of the lidar image, for the human detection processing. Generally, a time required for imaging by the infrared camera 18 is shorter than a time required for the scanning by the lidar 17. For this reason, by using the infrared image instead of the lidar image, it is possible to speed up the human detection processing.

However, when the infrared image is used instead of the lidar image for the human detection processing, it is impossible or difficult to detect the position of the person in the y direction although it is possible to detect the position of the person in the x direction and the z direction. Thus, as illustrated in FIG. 24 or 25, the blowing control unit 23 or the blowing control unit 23a may use the infrared image, in addition to the lidar image, for the human detection processing. By increasing the types of images used in the human detection processing, the accuracy of the human detection processing can be further improved.

Furthermore, the gas detection processing unit 26 may set an area corresponding to the position of the person in the air conditioning target space S1 as an area to be a target of the gas detection processing (that is, the first gas detection target area A1 and the second gas detection target area A2) by using the detection result information by the human detection processing unit 30. As a result, it is possible to calculate the concentration value N in the area corresponding to the position of the person.

Furthermore, when the control device 100b includes the wind measurement processing unit 29, the wind measurement processing unit 29 may set the area corresponding to the position of the person in the air conditioning target space S1 as an area (that is, the wind measurement target area A6) to be a target of the wind measurement processing, by using the detection result information by the human detection processing unit 30. As a result, it is possible to calculate the wind direction values $\Phi_L$ and $\Theta_L$ and the wind speed value $V_L$ in the area corresponding to the position of the person. Note that, when there is a plurality of persons in the air conditioning target space S1, for example, an area within a predetermined range (for example, a range with a radius of 1 meter) centered on the position of each person may be set as the target of the wind measurement processing.

In addition, the air conditioning device 200b can adopt various modifications similar to those described in the first and second embodiments. For example, the blowing control for gas guidance may be targeted only for the blowing directions $\Phi_B$ and $\Theta_B$. In this case, the wind measurement processing may be targeted only for the wind direction values $\Phi_L$ and $\Theta_L$. Furthermore, the compensation control may be targeted only for the blowing directions $\Phi_B$ and $\Theta_B$.

As described above, the air conditioning device 200b of the third embodiment includes the human detection processing unit 30 for executing the processing of detecting a person in the air conditioning target space S1, and the blowing control units 23 and 23a use the detection result by the human detection processing unit 30 for the control of the blowing directions $\Phi_B$ and $\Theta_B$. By using the detection result information for the blowing control for gas guidance (more specifically, the selection of the wind direction and wind speed model M), it is possible to generate, in the air conditioning target space S1, an air flow according to the presence and position of a person in the air conditioning target space S1.

Furthermore, the air conditioning device 200b includes the human detection processing unit 30 for executing the processing of detecting a person in the air conditioning target space S1, and the blowing control units 23 and 23a use the detection result by the human detection processing unit 30 for the control of the blowing direction $\Phi_B$ and $\Theta_B$ and the blowing air volume $V_B$. By using the detection result information for the blowing control for gas guidance (more specifically, the selection of the wind direction and wind speed model M), it is possible to generate, in the air conditioning target space S1, an air flow according to the presence and position of a person in the air conditioning target space S1.

Fourth Embodiment.

FIG. 26 is a block diagram illustrating a main part of an air conditioning device according to a fourth embodiment. FIG. 27 is a block diagram illustrating a main part of an indoor unit of the air conditioning device according to the fourth embodiment. An air conditioning device 200c of the fourth embodiment will be described with reference to FIGS. 26 and 27.

Note that, in FIG. 26, blocks similar to the blocks illustrated in FIG. 1 are designated by the same reference numerals, and the description thereof will be omitted. Furthermore, in FIG. 27, blocks similar to the blocks illustrated in FIG. 2 are designated by the same reference numerals, and the description thereof will be omitted.

In the air conditioning target space S1, a device (hereinafter referred to as the "external device") E2 is provided for air purification or ventilation. The external device E2 includes, for example, an air purifier, a ventilation fan, or an automatic opening and closing window. The external device E2 may be managed by a server device (not illustrated) capable of communicating with the external device E2. An indoor unit 1c includes a communication device 19 capable of communicating with the external device E2 or the server device. The communication device 19 includes, for example, a transmitter and a receiver for wireless communication.

The external device E2 or the server device stores information (hereinafter referred to as the "external device information") regarding the external device E2. The external device information includes information (hereinafter referred to as the "external device installation position information") indicating an installation position of the external device E2 in the air conditioning target space S1.

An external device information acquisition unit 31 acquires the external device information stored in the external device E2 or the server device by using the communication device 19. The external device information acquisition unit 31 outputs the acquired external device information to the blowing control unit 23.

The blowing control unit 23 uses the external device information output by the blowing control unit 23 for the blowing control for gas guidance. More specifically, the blowing control unit 23 uses the output external device information for setting of the gas guidance target area A4 and selection of the wind direction and wind speed model M.

For example, it is assumed that coordinate values indicating the installation position of the external device E2 are (x1, y1, z1) on the basis of the external device installation position information. In this case, the blowing control unit 23 sets an area corresponding to the coordinate values (x1, y1, z1), that is, an area corresponding to the installation position of the external device E2 as the gas guidance target area A4.

Furthermore, it is assumed that coordinate values indicating an area in which a high-concentration detection target gas is present are (x2, y2, z2) on the basis of the second gas concentration distribution information. Furthermore, it is assumed that the area is an area corresponding to the installation position of the gas appliance E1. In this case, the blowing control unit 23 calculates a vector $D_F$ having a start point corresponding to the coordinate values (x2, y2, z2) and an end point corresponding to the coordinate values (x1, y1, z1) (see FIG. 28). The blowing control unit 23 selects the wind direction and wind speed model M in which an air flow F3 including an air flow corresponding to the calculated vector $D_F$ is generated.

By the blowing control based on the wind direction and wind speed model table (that is, the selected wind direction and wind speed model table) T indicating the wind direction and wind speed model M selected (that is, the selected wind direction and wind speed model), the detection target gas is guided to the area corresponding to the installation position of the external device E2. The guided detection target gas is removed or absorbed by the external device E2 for air purification. Alternatively, the guided detection target gas is discharged to the outside of the air conditioning target space S1 by the external device E2 for ventilation.

The blowing control unit 23, the gas detection processing unit 26, and the external device information acquisition unit 31 constitute a main part of a control device 100c. A main part of the indoor unit 1c includes the first wind direction plate 11, the second wind direction plate 12, the blowing fan 13, the drive motor 14, the drive motor 15, the drive motor 16, the lidar 17, the communication device 19, and the control device 100c. The indoor unit 1c and the outdoor unit 2 constitute a main part of the air conditioning device 200c.

Since a hardware configuration of the main part of the control device 100c is similar to that described with reference to FIG. 8 in the first embodiment, illustration and description thereof will be omitted. That is, the function of each of the blowing control unit 23, the gas detection processing unit 26, and the external device information acquisition unit 31 may be implemented by the processor 41 and the memory 42, or may be implemented by the dedicated processing circuit 43.

Next, with reference to a flowchart of FIG. 29, the operation of the control device 100c will be described focusing on the gas detection processing and the blowing control for gas guidance. Note that, in FIG. 29, steps similar to those illustrated in FIG. 9 are designated by the same reference numerals, and the description thereof will be omitted.

First, the processing of steps ST1 and ST2 is executed. When it is determined that the execution of the blowing control for gas guidance is required (step ST2 "YES"), the external device information acquisition unit 31 acquires the external device information in step ST5. The external device information acquisition unit 31 outputs the acquired external device information to the blowing control unit 23.

Next, in step ST3, the blowing control unit 23 starts the blowing control for gas guidance. At this time, the blowing control unit 23 uses the external device information output by the external device information acquisition unit 31 for the setting of the gas guidance target area A4 and the selection of the wind direction and wind speed model M. Since the specific example of the blowing control for gas guidance is as described above, the repeated description thereof will be omitted.

Note that, as illustrated in FIG. 30, the control device 100c may include the wind measurement processing unit 29 and the blowing control unit 23a similar to those described in the second embodiment. In this case, after the processing of step ST3 illustrated in FIG. 29 is executed, the processing of steps ST11 to ST17 similar to that illustrated in FIG. 14B may be executed.

In addition, the air conditioning device 200c can adopt various modifications similar to those described in the first and second embodiments.

As described above, the air conditioning device 200c of the fourth embodiment includes the external device information acquisition unit 31 for acquiring the information indicating the installation position of the external device E2 for air purification or ventilation in the air conditioning target space S1, and the blowing control units 23 and 23a set the area corresponding to the installation position of the external device E2 as the gas guidance target area A4 by using the information acquired by the external device information acquisition unit 31. As a result, it is possible to promote the removal or absorption of the detection target gas by the external device E2 for air purification, or the discharge of the detection target gas by the external device E2 for ventilation. As a result, the concentration of the detection target gas in the air conditioning target space S1 can be reduced.

Fifth Embodiment.

FIG. 31 is a block diagram illustrating a main part of an air conditioning device according to a fifth embodiment. FIG. 32 is a block diagram illustrating a main part of an indoor unit of the air conditioning device according to the fifth embodiment. An air conditioning device 200d of the fifth embodiment will be described with reference to FIGS. 31 and 32.

Note that, in FIG. 31, blocks similar to the blocks illustrated in FIG. 1 are designated by the same reference numerals, and the description thereof will be omitted. Furthermore, in FIG. 32, blocks similar to the blocks illustrated in FIG. 2 are designated by the same reference numerals, and the description thereof will be omitted.

An indoor unit 1d has a function of discharging air in the air conditioning target space S1 to the outside of the air conditioning target space S1 by using a dedicated exhaust port. Alternatively, the indoor unit 1d has a function of discharging the air in the air conditioning target space S1 to the outside of the air conditioning target space S1 and supplying air outside the air conditioning target space S1 to the inside of the air conditioning target space S1 by using a dedicated intake and exhaust port. Alternatively, the indoor unit 1d has a function of discharging the air in the air conditioning target space S1 to the outside of the air conditioning target space S1 by using the outdoor unit 2. Alternatively, the indoor unit 1d has a function of discharging the air in the air conditioning target space S1 to the outside of the air conditioning target space S1 and supplying the air outside the air conditioning target space S1 to the inside of the air conditioning target space S1 by using the outdoor unit 2. Hereinafter, these functions are collectively referred to as "ventilation function". That is, the air conditioning device 200d includes an air conditioner of a type having a ventilation function.

An indoor unit information storage unit 32 stores information (hereinafter referred to as the "indoor unit information") regarding the indoor unit 1d. The indoor unit information includes information (hereinafter referred to as the "indoor unit installation position information") indicating an installation position of the indoor unit 1d in the air conditioning target space S1.

The blowing control unit 23 acquires the indoor unit information stored in the indoor unit information storage unit 32, and uses the acquired indoor unit information for the blowing control for gas guidance. More specifically, the blowing control unit 23 uses the acquired indoor unit information for the setting of the gas guidance target area A4 and the selection of the wind direction and wind speed model M.

That is, the blowing control unit 23 sets an area corresponding to the installation position of the indoor unit 1d as the gas guidance target area A4 on the basis of the indoor unit installation position information. Next, the blowing control unit 23 selects the wind direction and wind speed model M for generating an air flow F4 capable of guiding the detection target gas in the air conditioning target space S1 to the set gas guidance target area A4 on the basis of the second gas concentration distribution information (see FIG. 33).

By the blowing control based on the wind direction and wind speed model table (that is, the selected wind direction and wind speed model table) T indicating the wind direction and wind speed model M selected (that is, the selected wind direction and wind speed model), the detection target gas is guided to the area corresponding to the installation position of the indoor unit 1d. The guided detection target gas is discharged to the outside of the air conditioning target space S1 by the ventilation function of the air conditioning device 200d.

Note that, the ventilation function in the example illustrated in FIG. 33 discharges the air in the air conditioning target space S1 to the outside of the air conditioning target space S1, and supplies the air outside the air conditioning target space S1 to the inside of the air conditioning target space S1, by using the outdoor unit 2. In the figure, an arrow $\alpha$ indicates exhaust by the outdoor unit 2, and an arrow $\beta$ indicates intake by the outdoor unit 2.

The blowing control unit 23, the gas detection processing unit 26, and an indoor unit information storage unit 32 constitute a main part of a control device 100d. A main part of the indoor unit 1d includes the first wind direction plate 11, the second wind direction plate 12, the blowing fan 13, the drive motor 14, the drive motor 15, the drive motor 16, the lidar 17, and the control device 100d. The indoor unit 1d and the outdoor unit 2 constitute a main part of the air conditioning device 200d.

Since a hardware configuration of the main part of the control device 100d is similar to that described with reference to FIG. 8 in the first embodiment, illustration and description thereof will be omitted. That is, the function of each of the blowing control unit 23 and the gas detection processing unit 26 may be implemented by the processor 41 and the memory 42, or may be implemented by the dedicated processing circuit 43. Furthermore, the function of the indoor unit information storage unit 32 may be implemented by the nonvolatile memory of the memory 42.

Since the operation of the control device 100d is similar to that described with reference to FIG. 9 in the first embodiment, illustration and description thereof will be omitted. However, when starting the blowing control for gas guidance (step ST3), the blowing control unit 23 acquires the indoor unit information stored in the indoor unit information storage unit 32, and uses the acquired indoor unit information for the setting of the gas guidance target area A4 and the selection of the wind direction and wind speed model M.

As illustrated in FIG. 34, the control device 100d may include the wind measurement processing unit 29 and the blowing control unit 23a similar to those described in the second embodiment. In this case, after the processing of step ST3 is executed, the processing of steps ST11 to ST17 similar to that illustrated in FIG. 14B may be executed.

In addition, the air conditioning device 200d can adopt various modifications similar to those described in the first and second embodiments.

As described above, the air conditioning device 200d of the fifth embodiment includes the indoor unit 1d and the outdoor unit 2, and has a ventilation function, and the blowing control units 23 and 23a set an area corresponding to the installation position of the indoor unit 1d in the air conditioning target space S1 as the gas guidance target area A4. By the ventilation function of the air conditioning device 200d, the detection target gas in the air conditioning target space S1 can be discharged to the outside of the air conditioning target space S1. As a result, the concentration of the detection target gas in the air conditioning target space S1 can be reduced.

Sixth Embodiment.

FIG. 35 is a block diagram illustrating a main part of an air conditioning device according to a sixth embodiment. FIG. 36 is a block diagram illustrating a main part of an indoor unit of the air conditioning device according to the sixth embodiment. An air conditioning device 200e of the sixth embodiment will be described with reference to FIGS. 35 and 36.

Note that, in FIG. 35, blocks similar to the blocks illustrated in FIG. 1 are designated by the same reference numerals, and the description thereof will be omitted. Furthermore, in FIG. 36, blocks similar to the blocks illustrated in FIG. 2 are designated by the same reference numerals, and the description thereof will be omitted.

The indoor unit 1 includes the communication device 19. The communication device 19 is capable of communicating with a server device (not illustrated). The communication device 19 includes, for example, a transmitter and a receiver for wireless communication.

The server device stores information (hereinafter referred to as the "spatial structure information") indicating a structure of a room corresponding to the air conditioning target space S1. The spatial structure information includes, for example, 3-dimensional computer-aided design (3D-CAD) data of the room. Furthermore, the spatial structure information includes information (hereinafter referred to as the "evacuation route information") indicating an evacuation route ER in the air conditioning target space S1. The evacuation route information includes information (hereinafter referred to as the "exit position information") indicating a position of an exit EO in the air conditioning target space S1.

An evacuation route information acquisition unit 33 acquires the spatial structure information stored in the server device by using the communication device 19. The evacuation route information acquisition unit 33 outputs the acquired spatial structure information to the blowing control unit 23.

The blowing control unit 23 uses the spatial structure information output by the evacuation route information acquisition unit 33 for the blowing control for gas guidance. More specifically, the blowing control unit 23 uses the output spatial structure information for the setting of the gas guidance target area A4 and the selection of the wind direction and wind speed model M.

That is, the blowing control unit 23 sets an area avoiding the evacuation route ER in the air conditioning target space S1 as the gas guidance target area A4 on the basis of the evacuation route information. Furthermore, the blowing control unit 23 calculates the vector $D_F$ that can guide the detection target gas in the air conditioning target space S1 to the gas guidance target area A4 and can confine the guided detection target gas in the gas guidance target area A4, on the basis of the second gas concentration distribution information. The blowing control unit 23 selects the wind direction and wind speed model M corresponding to an air flow F5 that can implement the vector $D_F$ by forming a so-called "air curtain" on the basis of the spatial structure information.

For example, as illustrated in FIG. 37, it is assumed that the evacuation route ER is disposed at an end (hereinafter referred to as the "left end") on a side where an x-coordinate value in the air conditioning target space S1 is large. In this case, the blowing control unit 23 sets an area including an end (hereinafter referred to as the "right end") on a side where an x-coordinate value in the air conditioning target space S1 is small, as the gas guidance target area A4, on the basis of the evacuation route information.

Here, as illustrated in FIG. 37A, it is assumed that an area corresponding to the installation position of the gas appliance E1 is an area where a high-concentration detection target gas (G in the figure) due to occurrence of gas leakage from the gas appliance E1. It is assumed that coordinate values indicating the area are (x2, y2, z2). Furthermore, it is assumed that coordinate values indicating the position of the exit EO are (x3, y3, z3) on the basis of the exit position information.

In this case, the blowing control unit 23 calculates the vector $D_F$ having a start point corresponding to the coordinate values (x3, y3, z3) and an end point corresponding to the coordinate values (x2, y2, z2) (see FIG. 37B). Next, the blowing control unit 23 selects the wind direction and wind speed model M corresponding to the air flow F5 that can form the air curtain for implementing the vector $D_F$.

By the blowing control based on the wind direction and wind speed model table (that is, the selected wind direction and wind speed model table) T indicating the wind direction and wind speed model M selected (that is, the selected wind direction and wind speed model), the detection target gas is guided to the right end in the air conditioning target space S1 (see FIG. 37B). Furthermore, the guided detection target gas is confined in the gas guidance target area A4 by the air curtain.

At this time, the communication device 19 transmits the evacuation route information to the remote controller 3, or a mobile information terminal (not illustrated) possessed by a user U. The remote controller 3 or the mobile information terminal displays an image indicating that gas leakage has occurred, an image indicating the evacuation route ER, and the like. The user U can visually recognize the displayed image and evacuate to the outside of the air conditioning target space S1 through an appropriate route (see FIG. 37C).

The blowing control unit 23, the gas detection processing unit 26, and the evacuation route information acquisition unit 33 constitute a main part of a control device 100e. A main part of an indoor unit 1e includes the first wind direction plate 11, the second wind direction plate 12, the blowing fan 13, the drive motor 14, the drive motor 15, the drive motor 16, the lidar 17, the communication device 19, and the control device 100e. The indoor unit 1e and the outdoor unit 2 constitute a main part of the air conditioning device 200e.

Since a hardware configuration of the main part of the control device 100e is similar to that described with reference to FIG. 8 in the first embodiment, illustration and description thereof will be omitted. That is, the function of each of the blowing control unit 23, the gas detection processing unit 26, and the evacuation route information acquisition unit 33 may be implemented by the processor 41 and the memory 42, or may be implemented by the dedicated processing circuit 43.

Next, with reference to a flowchart of FIG. 38, the operation of the control device 100e will be described focusing on the gas detection processing and the blowing control for gas guidance. Note that, in FIG. 38, steps similar to those illustrated in FIG. 9 are designated by the same reference numerals, and the description thereof will be omitted.

First, the processing of steps ST1 and ST2 is executed. When it is determined that the execution of the blowing control for gas guidance is required (step ST2 "YES"), then, in step ST6, the evacuation route information acquisition unit 33 acquires the spatial structure information. The evacuation route information acquisition unit 33 outputs the acquired spatial structure information to the blowing control unit 23.

Next, in step ST3, the blowing control unit 23 starts the blowing control for gas guidance. At this time, the blowing control unit 23 uses the spatial structure information output by the evacuation route information acquisition unit 33 for the setting of the gas guidance target area A4 and the selection of the wind direction and wind speed model M.

As illustrated in FIG. 39, the control device 100e may include the wind measurement processing unit 29 and the blowing control unit 23a similar to those described in the second embodiment. In this case, after the processing of step ST3 illustrated in FIG. 38 is executed, the processing of steps ST11 to ST17 similar to that illustrated in FIG. 14B may be executed.

Furthermore, the control device 100e may include the human detection processing unit 30 similar to that described in the third embodiment (not illustrated). In this case, in addition to the spatial structure information output by the evacuation route information acquisition unit 33, the blowing control unit 23 may use the detection result information output by the human detection processing unit 30 for the setting of the gas guidance target area A4 and the selection of the wind direction and wind speed model M. For example, it is assumed that a person is present in an area avoiding the evacuation route ER. In this case, the control device 100e may set an area avoiding the person in the area avoiding the evacuation route ER as the gas guidance target area A4.

In addition, the air conditioning device 200e can adopt various modifications similar to those described in the first and second embodiments.

As described above, the air conditioning device 200e of the sixth embodiment includes the evacuation route information acquisition unit 33 for acquiring the information indicating the evacuation route ER in the air conditioning target space S1, and the blowing control units 23 and 23a set the area avoiding the evacuation route ER as the gas guidance target area A4 by using the information acquired by the evacuation route information acquisition unit 33. As a result, it is possible to avoid that the detection target gas stays in the evacuation route.

Furthermore, the air conditioning device 200e includes the human detection processing unit 30 for executing the processing of detecting a person in the air conditioning target space S1, and the blowing control units 23 and 23a set the area avoiding the person as the gas guidance target area A4 on the basis of the detection result by the human detection processing unit 30. As a result, for example, when there is a person in the area avoiding the evacuation route ER, the area avoiding the person can be set as the gas guidance target area A4.

Note that, in the invention of the present application, within the scope of the invention, free combination of embodiments, a modification of an arbitrary component of each embodiment, or omission of an arbitrary component in each embodiment is possible as long as the device still falls within the scope of the claims.

## INDUSTRIAL APPLICABILITY

The air conditioning device and control method of the present invention can be used, for example, in an air conditioner for home use or for business use.

## REFERENCE SIGNS LIST

1, 1a, 1b, 1c, 1d, 1e: indoor unit, 2: outdoor unit, 3: remote controller, 11: first wind direction plate, 12: second wind direction plate, 13: blowing fan, 14: drive motor, 15: drive motor, 16: drive motor, 17: lidar, 18: infrared camera, 19: communication device, 21, 21a: blowing direction control unit, 22, 22a: blowing air volume control unit, 23, 23a: blowing control unit, 24: first gas concentration calculation unit, 25: second gas concentration calculation unit, 26: gas detection processing unit, 27: wind direction value calculation unit, 28: wind speed value calculation unit, 29: wind measurement processing unit, 30: human detection processing unit, 31: external device information acquisition unit, 32: indoor unit information storage unit, 33: evacuation route information acquisition unit, 41: processor, 42: memory, 43: processing circuit, 100, 100a, 100b, 100c, 100d, 100e: control device, 200, 200a, 200b, 200c, 200d, 200e: air conditioning device

## Claims

**1.** An air conditioning device (200, 200a, 200b, 200c, 200d, 200e) comprising:

a gas detection processing unit (26) calculating a concentration value (N) of a detection target gas in an air conditioning target space (S1) by using a lidar (17);
a blowing control unit (23, 23a) controlling a blowing direction ($\Phi_\beta$, $\Theta_B$) with respect to the air conditioning target space (S1) by using the concentration value (N); and
a wind measurement processing unit (29) calculating a wind direction value ($\Phi_L$, $\Theta_L$) in the air conditioning target space (S1) by using the lidar (17), wherein
the blowing control unit (23, 23a) controls the blowing direction ($\Phi_\beta$, $\Theta_B$) by using the concentration value (N) and the wind direction value ($\Phi_L$, $\Theta_L$).

**2.** The air conditioning device (200, 200a, 200b, 200c, 200d, 200e) according to claim 1, wherein

the gas detection processing unit (26) includes: a first gas concentration calculation unit (24) calculating a first concentration value (N1) in each of a plurality of first gas detection target areas (A1); and a second gas concentration calculation unit (25) calculating a second concentration value (N2) in each of one or more second gas detection target areas (A2) by spatially averaging the first concentration value (N1), and
the blowing control unit (23, 23a) uses the second concentration value (N2) for control of the blowing direction.

**3.** The air conditioning device (200, 200a, 200b, 200c, 200d, 200e) according to claim 1, wherein the blowing control unit (23, 23a) controls the blowing direction ($\Phi_\beta$, $\Theta_B$) and a blowing air volume ($V_B$) to the air conditioning target space (S1) by using the concentration value.

**4.** The air conditioning device (200, 200a, 200b, 200c, 200d, 200e) according to claim 3, further comprising

a wind measurement processing unit (29) calculating a wind direction value ($\Phi_L$, $\Theta_L$) and a wind speed value ($V_L$) in the air conditioning target space (S1) by using the lidar (17), wherein
the blowing control unit (23, 23a) controls the blowing direction ($\Phi_\beta$, $\Theta_B$) and the blowing air volume ($V_B$) by using the concentration value (N), the wind direction value ($\Phi_L$, $\Theta_L$), and the wind speed value ($V_L$).

5. The air conditioning device (200, 200a, 200b, 200c, 200d, 200e) according to claim 3 or 4, wherein

the gas detection processing unit (26) includes: a first gas concentration calculation unit (24) calculating a first concentration value (N1) in each of a plurality of first gas detection target areas (A1); and a second gas concentration calculation unit (25) calculating a second concentration value (N2) in each of one or more second gas detection target areas (A2) by spatially averaging the first concentration value (N1), and
the blowing control unit (23, 23a) uses the second concentration value (N2) for control of the blowing direction ($\Phi_\beta$, $\Theta_B$) and the blowing air volume ($V_B$).

6. The air conditioning device (200, 200a, 200b, 200c, 200d, 200e) according to claim 2 or 5, wherein

a size of each of the first gas detection target areas (A1) is set to a value according to a spatial resolution of the lidar (17), and
a size of each of the second gas detection target areas (A2) is set to a value according to a size of a gas appliance.

7. The air conditioning device (200, 200a, 200b, 200c, 200d, 200e) according to any one of claims 1 or 2, wherein the blowing control unit (23, 23a) guides the detection target gas to a gas guidance target area (A4) in the air conditioning target space (S1) by controlling the blowing direction ($\Phi_\beta$, $\Theta_B$).

8. The air conditioning device (200, 200a, 200b, 200c, 200d, 200e) according to any one of claims 3 to 5, wherein the blowing control unit (23, 23a) guides the detection target gas to a gas guidance target area (A4) in the air conditioning target space (S1) by controlling the blowing direction ($\Phi_\beta$, $\Theta_B$) and the blowing air volume ($V_B$).

9. The air conditioning device (200b, 200e) according to claim 7, further comprising

a human detection processing unit (30) executing processing of detection of a person in the air conditioning target space (S1), wherein
the blowing control unit (23, 23a) uses a result of the detection of a person by the human detection processing unit (30) for control of the blowing direction ($\Phi_\beta$, $\Theta_B$).

10. The air conditioning device (200b, 200e) according to claim 8, further comprising

a human detection processing unit (30) executing processing of detection of a person in the air conditioning target space (S1), wherein
the blowing control unit (23, 23a) uses a result of the detection of a person by the human detection processing unit (30) for control of the blowing direction ($\Phi_\beta$, $\Theta_B$) and the blowing air volume ($V_B$).

11. The air conditioning device (200, 200a, 200b) according to claim 7 or 8, wherein the blowing control unit (23, 23a) sets an area including a ceiling portion in the air conditioning target space (S1) as the gas guidance target area (A4).

12. The air conditioning device (200c) according to claim 7 or 8, further comprising

an external device information acquisition unit (31) acquiring information indicating an installation position of an external device (E2) for air purification or ventilation in the air conditioning target space (S1), wherein
the blowing control unit (23, 23a) sets an area corresponding to the installation position of the external device (E2) as the gas guidance target area (A4) by using the information acquired by the external device information acquisition unit (31).

13. The air conditioning device (200d) according to claim 7 or 8, wherein

the air conditioning device (200d) includes an indoor unit (1d) and an outdoor unit (2) and has a ventilation function, and
the blowing control unit (23, 23a) sets an area corresponding to an installation position of the indoor unit (1d) in the air conditioning target space (S1) as the gas guidance target area (A4).

14. The air conditioning device (200e) according to claim 7 or 8, further comprising

an evacuation route information acquisition unit (33) acquiring information indicating an evacuation route (ER) in the air conditioning target space (S1), wherein
the blowing control unit (23, 23a) sets an area avoiding the evacuation route (ER) as the gas guidance target area (A4) by using the information acquired by the evacuation route information acquisition unit (33).

**15.** The air conditioning device (200e) according to claim 7 or 8, further comprising

a human detection processing unit (30) executing processing of detection of a person in the air conditioning target space (S1), wherein
the blowing control unit (23, 23a) sets an area avoiding the person as the gas guidance target area (A4) on a basis of a result of the detection of a person executed by the human detection processing unit (30).

**16.** The air conditioning device (200, 200a, 200b, 200c, 200d, 200e) according to any one of claims 1 to 15, wherein

a wavelength ($\lambda$) of laser light (L) output by the lidar is switchable, and
the gas detection processing unit (26) calculates the concentration value (N) of each of a plurality of types of the detection target gases.

**17.** A control method for an air conditioning device (200, 200a, 200b, 200c, 200d, 200e), the control method comprising:

calculating, by a gas detection processing unit (26), a concentration value (N) of a detection target gas in an air conditioning target space (S1) by using a lidar (17);
controlling, by a blowing control unit (23, 23a), a blowing direction ($\Phi_\beta$, $\Theta_B$) with respect to the air conditioning target space (S1) by using the concentration value (N);
calculating, by a wind measurement processing unit (29), a wind direction value ($\Phi_L$, $\Theta_L$) in the air conditioning target space (S1) by using the lidar (17); and
controlling the blowing direction ($\Phi_\beta$, $\Theta_B$), by the blowing control unit (23, 23a), by using the concentration value (N) and the wind direction value ($\Phi_L$, $\Theta_L$).

**Patentansprüche**

**1.** Klimaanlage (200, 200a, 200b, 200c, 200d, 200e), umfassend:

eine Gasdetektionsverarbeitungseinheit (26), berechnend einen Konzentrationswert (N) eines Detektionszielgases in einem Klimatisierungszielraum (S1) unter Verwendung eines Lidars (17);
eine Ausblassteuerungseinheit (23, 23a), die eine Ausblasrichtung ($\phi_B$, $\Theta_B$) in Bezug auf den Klimatisierungszielraum (S1) unter Verwendung des Konzentrationswertes (N) steuert; und
eine Windmessungsverarbeitungseinheit (29), berechnend einen Windrichtungswert ($\phi_L$, $\Theta_L$) in dem Klimatisierungszielraum (S1) unter Verwendung des Lidars (17), wobei
die Ausblassteuerungseinheit (23, 23a) die Ausblasrichtung ($\phi_B$, $\Theta_B$) unter Verwendung des Konzentrationswertes (N) und des Windrichtungswertes ($\phi_L$, $\Theta_L$) steuert.

**2.** Klimaanlage (200, 200a, 200b, 200c, 200d, 200e) gemäß Anspruch 1, wobei

die Gasdetektionsverarbeitungseinheit (26) aufweist: eine erste Gaskonzentrationsberechnungseinheit (24), berechnend einen ersten Konzentrationswert (N1) in jedem einer Vielzahl von ersten Gasdetektionszielbereichen (A1); und eine zweite Gaskonzentrationsberechnungseinheit (25), berechnend einen zweiten Konzentrationswert (N2) in jedem von einem oder mehreren zweiten Gasdetektionszielbereich/en (A2) durch räumliche Mittelung des ersten Konzentrationswertes (N1), und
die Ausblassteuerungseinheit (23, 23a) den zweiten Konzentrationswert (N2) zur Steuerung der Ausblasrichtung nutzt.

**3.** Klimaanlage (200, 200a, 200b, 200c, 200d, 200e) gemäß Anspruch 1, wobei die Ausblassteuerungseinheit (23, 23a) die Ausblasrichtung ($\phi_B$, $\Theta_B$) und ein Ausblasluftvolumen ($V_B$) in den Klimatisierungszielraum (S1) unter Verwendung des Konzentrationswertes steuert.

**4.** Klimaanlage (200, 200a, 200b, 200c, 200d, 200e) gemäß Anspruch 3, ferner umfassend:

eine Windmessungsverarbeitungseinheit (29), berechnend einen Windrichtungswert ($\phi_L$, $\Theta_L$) und einen Windgeschwindigkeitswert ($V_L$) in dem Klimatisierungszielraum (S1) unter Verwendung des Lidars (17), wobei
die Ausblassteuerungseinheit (23, 23a) die Ausblasrichtung ($\phi_B$, $\Theta_B$) und das Ausblasluftvolumen ($V_B$) unter Verwendung des Konzentrationswertes (N), des Windrichtungswertes ($\phi_L$, $\Theta_L$) und des Windgeschwindigkeitswertes (VL) steuert.

**5.** Klimaanlage (200, 200a, 200b, 200c, 200d, 200e) gemäß Anspruch 3 oder 4, wobei

die Gasdetektionsverarbeitungseinheit (26) aufweist: eine erste Gaskonzentrationsberechnungseinheit (24), berechnend einen ersten Konzentrationswert (N1) in jedem einer Vielzahl von ersten Gasdetektionszielbereichen (A1); und eine zweite Gaskonzentrationsberechnungseinheit (25), berechnend einen zweiten Konzentrationswert (N2) in jedem von einem oder mehreren zweiten Gasdetektionszielbereich/en (A2) durch räumliche Mittelung des ersten Konzentrationswertes (N1), und
die Ausblassteuerungseinheit (23, 23a) den zweiten Konzentrationswert (N2) zur Steuerung der Ausblasrichtung ($\phi_B$, $\Theta_B$) und des Ausblasluftvolumens ($V_B$) nutzt.

**6.** Klimaanlage (200, 200a, 200b, 200c, 200d, 200e) gemäß Anspruch 2 oder 5, wobei

eine Größe von jedem der ersten Gasdetektionszielbereiche (A1) auf einen Wert gemäß einer räumlichen Auflösung des Lidars (17) eingestellt wird, und
eine Größe von jedem der zweiten Gasdetektionszielbereiche (A2) auf einen Wert gemäß der Größe eines Gasgeräts eingestellt wird.

**7.** Klimaanlage (200, 200a, 200b, 200c, 200d, 200e) gemäß Anspruch 1 oder 2, wobei die Ausblassteuerungseinheit (23, 23a) das Detektionszielgas zu einem Gasführungszielbereich (A4) in dem Klimatisierungszielraum (S1) durch Steuern der Ausblasrichtung ($\phi_B$, $\Theta_B$) führt.

**8.** Klimaanlage (200, 200a, 200b, 200c, 200d, 200e) gemäß einem der Ansprüche 3 bis 5, wobei die Ausblassteuerungseinheit (23, 23a) das Detektionszielgas zu einem Gasführungszielbereich (A4) in dem Klimatisierungszielraum (S1) durch Steuern der Ausblasrichtung ($\phi_B$, $\Theta_B$) und des Ausblasluftvolumens ($V_B$) führt.

**9.** Klimaanlage (200b, 200e) nach Anspruch 7, ferner umfassend:

eine Mensch-Detektionsverarbeitungseinheit (30), ausführend Verarbeitung von Detektion einer Person in dem Klimatisierungszielraum (S1), wobei
die Ausblassteuerungseinheit (23, 23a) ein Ergebnis der Detektion einer Person durch die Mensch-Detektionsverarbeitungseinheit (30) zur Steuerung der Ausblasrichtung ($\phi_B$, $\Theta_B$) nutzt.

**10.** Klimaanlage (200b, 200e) nach Anspruch 8, ferner umfassend:

eine Mensch-Detektionsverarbeitungseinheit (30), ausführend Verarbeitung von Detektion einer Person in dem Klimatisierungszielraum (S1), wobei
die Ausblassteuerungseinheit (23, 23a) ein Ergebnis der Detektion einer Person durch die Mensch-Detektionsverarbeitungseinheit (30) zur Steuerung der Ausblasrichtung ($\phi_B$, $\Theta_B$) und des Ausblasluftvolumens ($V_B$) nutzt.

**11.** Klimaanlage (200, 200a, 200b) gemäß Anspruch 7 oder 8, wobei die Ausblassteuerungseinheit (23, 23a) einen Bereich, enthaltend einen Deckenabschnitt in dem Klimatisierungszielraum (S1), als den Gasführungszielbereich (A4) festlegt.

**12.** Klimaanlage (200c) nach Anspruch 7 oder 8, ferner umfassend:

eine Externe-Einrichtung-Informationserwerbungseinheit (31), erwerbend Informationen, anzeigend eine Installationsposition einer externen Einrichtung (E2) zur Luftreinigung oder Belüftung in dem Klimatisierungszielraum (S1), wobei
die Ausblassteuerungseinheit (23, 23a) einen Bereich, der der Installationsposition der externen Einrichtung (E2) entspricht, als den Gasführungszielbereich (A4) unter Verwendung der von der Externe-Einrichtung-Informationserwerbungseinheit (31) erworbenen Informationen festlegt.

**13.** Klimaanlage (200d) nach Anspruch 7 oder 8, wobei:

die Klimaanlage (200d) eine Inneneinheit (1d) und eine Außeneinheit (2) umfasst und eine Belüftungsfunktion hat, und
die Ausblassteuerungseinheit (23, 23a) einen Bereich, der einer Installationsposition der Inneneinheit (1d) in dem Klimatisierungszielraum (S1) entspricht, als den Gasführungszielbereich (A4) festlegt.

**14.** Klimaanlage (200e) nach Anspruch 7 oder 8, ferner umfassend:

eine Evakuierungsroute-Informationserwerbungseinheit (33), erwerbend Informationen, anzeigend eine Evakuierungsroute (ER) in dem Klimatisierungszielraum (S1), wobei
die Ausblassteuerungseinheit (23, 23a) einen Bereich, der die Evakuierungsroute (ER) vermeidet, als den Gasführungszielbereich (A4) unter Verwendung der von der Abführungsroute-Informationserwerbungseinheit (33) erworbenen Informationen festlegt.

**15.** Klimaanlage (200e) nach Anspruch 7 oder 8, ferner umfassend:

eine Mensch-Detektionsverarbeitungseinheit (30), ausführend Verarbeitung von Detektion einer Person in dem Klimatisierungszielraum (S1), wobei
die Ausblassteuerungseinheit (23, 23a) einen Bereich, der die Person vermeidet, als den Gasführungszielbereich (A4) auf Grundlage eines Ergebnisses der Detektion einer Person, ausgeführt durch die Mensch-Detektionsverarbeitungseinheit (30), festlegt.

**16.** Klimaanlage (200, 200a, 200b, 200c, 200d, 200e) gemäß einem der Ansprüche 1 bis 15, wobei

eine Wellenlänge ($\lambda$) des von dem Lidar ausgegebenen Laserlichts (L) umschaltbar ist, und
die Gasdetektionsverarbeitungseinheit (26) den Konzentrationswert (N) jedes einer Vielzahl von Typen der Detektionszielgase berechnet.

**17.** Steuerungsverfahren für eine Klimaanlage (200, 200a, 200b, 200c, 200d, 200e), wobei das Steuerungsverfahren umfasst:

Berechnen, durch eine Gasdetektionsverarbeitungseinheit (26), eines Konzentrationswertes (N) eines Detektionszielgases in einem Klimatisierungszielraum (S1) unter Verwendung eines Lidars (17);
Steuern, durch eine Ausblassteuerungseinheit (23, 23a), einer Ausblasrichtung ($\phi_B$, $\Theta_B$) in Bezug auf den Klimatisierungszielraum (S1) unter Verwendung des Konzentrationswertes (N);
Berechnen, durch eine Windmessungsverarbeitungseinheit (29), eines Windrichtungswertes ($\phi_L$, $\Theta_L$) in dem Klimatisierungszielraum (S1) unter Verwendung des Lidars (17); und
Steuern der Ausblasrichtung ($\phi_B$, $\Theta_B$), durch die Ausblassteuerungseinheit (23, 23a), unter Verwendung des Konzentrationswertes (N) und des Windrichtungswertes ($\phi_L$, $\Theta_L$).

## Revendications

**1.** Dispositif de climatisation (200, 200a, 200b, 200c, 200d, 200e) comprenant:

une unité de traitement de détection de gaz (26) calculant une valeur de concentration (N) d'un gaz cible de détection dans un espace cible de climatisation (S1) en utilisant un lidar (17) ;
une unité de contrôle de soufflage (23, 23a) contrôlant une direction de soufflage ($\phi_B$, $\Theta_B$) par rapport à l'espace cible de climatisation (S1)en utilisant la valeur de concentration (N) ; et
une unité de traitement de mesure du flux d'air (29) calculant une valeur de direction du flux d'air ($\phi_L$, $\Theta_L$) dans l'espace cible de climatisation (S1) à l'aide du lidar (17), dans lequel
l'unité de commande de soufflage (23, 23a) contrôle la direction de soufflage ($\phi_B$, $\Theta_B$) en utilisant la valeur de concentration (N) et la valeur de direction du flux d'air ($\phi_L$, $\Theta_L$).

**2.** Dispositif de climatisation (200, 200a, 200b, 200c, 200d, 200e) selon la revendication 1, dans lequel

l'unité de traitement de détection de gaz (26) inclut : une première unité de calcul de concentration en gaz (24) calculant une première valeur de concentration (N1) dans chacune d'une pluralité de premières zones cibles de détection de gaz (A1) ; et une seconde unité de calcul de concentration en gaz (25) calculant une seconde valeur de concentration (N2) dans une ou dans chacune de plusieurs secondes zones cibles de détection de gaz (A2) en moyennant spatialement la première valeur de concentration (N1), et

l'unité de commande de soufflage (23, 23a) utilise la seconde valeur de concentration (N2) pour la commande de la direction de soufflage.

**3.** Dispositif de climatisation (200, 200a, 200b, 200c, 200d, 200e) selon la revendication 1, dans lequel l'unité de commande de soufflage (23, 23a) contrôle la direction de soufflage ($\phi_B$, $\Theta_B$) et un volume d'air de soufflage ($V_B$) vers l'espace cible de climatisation (S1) à l'aide de la valeur de concentration.

**4.** Dispositif de climatisation (200, 200a, 200b, 200c, 200d, 200e) selon la revendication 3, comprenant en outre

une unité de traitement de mesure du flux d'air (29) calculant une valeur de direction du flux d'air ($\phi_L$, $\Theta_L$) et une valeur de vitesse du flux d'air ($V_L$) dans l'espace cible de climatisation (S1) en utilisant le lidar (17), dans lequel l'unité de commande de soufflage (23, 23a) commande la direction de soufflage ($\phi_B$, $\Theta_B$) et le volume d'air de soufflage ($V_B$) à l'aide de la valeur de concentration (N), de la valeur de direction du flux d'air ($\phi_L$, $\Theta_L$), et de la valeur de vitesse du flux d'air ($V_L$).

**5.** Dispositif de climatisation (200, 200a, 200b, 200c, 200d, 200e) selon la revendication 3 ou 4, dans lequel

l'unité de traitement de détection de gaz (26) inclut : une première unité de calcul de concentration en gaz (24) calculant une première valeur de concentration (N1) dans chacune d'une pluralité de premières zones cibles de détection de gaz (A1) ; et une seconde unité de calcul de concentration en gaz (25) calculant une seconde valeur de concentration (N2) dans une ou dans chacune de plusieurs secondes zones cibles de détection de gaz (A2) en moyennant spatialement la première valeur de concentration (N1), et

l'unité de commande de soufflage (23, 23a) utilise la seconde valeur de concentration (N2) pour la commande de la direction de soufflage ($\phi_B$, $\Theta_B$) et le volume d'air de soufflage ($V_B$).

**6.** Dispositif de climatisation (200, 200a, 200b, 200c, 200d, 200e) selon la revendication 2 ou 5, dans lequel

la dimension de chacune des premières zones cibles de détection de gaz (A1) est réglée à une valeur selon la résolution spatiale du lidar (17), et

la dimension de chacune des secondes zones cibles de détection de gaz (A2) est réglée à une valeur selon la dimension d'un appareil à gaz.

**7.** Dispositif de climatisation (200, 200a, 200b, 200c, 200d, 200e) selon la revendication 1 ou 2, dans lequel l'unité de commande de soufflage (23, 23a) guide le gaz cible de détection vers une zone cible de guidage de gaz (A4) dans l'espace cible de climatisation (S1) en contrôlant la direction de soufflage ($\phi_B$, $\Theta_B$).

**8.** Dispositif de climatisation (200, 200a, 200b, 200c, 200d, 200e) selon l'une quelconque des revendications 3 à 5, dans lequel l'unité de commande de soufflage (23, 23a) guide le gaz cible de détection vers une zone cible de guidage de gaz (A4) dans l'espace cible de climatisation (S1) en contrôlant la direction de soufflage ($\phi_B$, $\Theta_B$), et le volume d'air de soufflage ($V_B$).

**9.** Dispositif de climatisation (200b, 200e) selon la revendication 7, comprenant en outre

une unité de traitement de détection humaine (30) exécutant un traitement de détection d'une personne dans l'espace cible de climatisation (S1), dans lequel

l'unité de commande de soufflage (23, 23a) utilise un résultat de la détection d'une personne par l'unité de traitement de détection humaine (30) pour la commande de la direction de soufflage ($\phi_B$, $\Theta_B$).

**10.** Dispositif de climatisation (200b, 200e) selon la revendication 8, comprenant en outre

une unité de traitement de détection humaine (30) exécutant un traitement de détection d'une personne dans l'espace cible de climatisation (S1), dans lequel

l'unité de commande de soufflage (23, 23a) utilise un résultat de la détection d'une personne par l'unité de traitement de détection humaine (30) pour la commande de la direction de soufflage ($\phi_B$, $\Theta_B$) et le volume d'air de soufflage ($V_B$).

11. Dispositif de climatisation (200, 200a, 200b) selon la revendication 7 ou 8, dans lequel l'unité de commande de soufflage (23, 23a) règle une zone incluant une partie plafond dans l'espace cible de climatisation (S1) en tant que zone cible de guidage de gaz (A4).

12. Dispositif de climatisation (200c) selon la revendication 7 ou 8, comprenant en outre

une unité d'acquisition d'informations de dispositif extérieur (31) acquérant des informations qui indiquent une position d'installation d'un dispositif extérieur (E2) d'épuration d'air ou de ventilation dans l'espace cible de climatisation (S1), dans lequel
l'unité de commande de soufflage (23, 23a) règle une zone correspondant à la position d'installation du dispositif extérieur (E2) en tant que zone cible de guidage de gaz (A4) en utilisant les informations acquises par l'unité d'acquisition d'informations de dispositif extérieur (31).

13. Dispositif de climatisation (200d) selon la revendication 7 ou 8, dans lequel

le dispositif de climatisation (200d) inclut une unité intérieure (1d) et une unité extérieure (2) et a une fonction de ventilation, et
l'unité de commande de soufflage (23, 23a) règle une zone correspondant à une position d'installation de l'unité intérieure (1d) dans l'espace cible de climatisation (S1) en tant que zone cible de guidage de gaz (A4).

14. Dispositif de climatisation (200e) selon la revendication 7 ou 8, comprenant en outre

une unité d'acquisition d'informations d'itinéraire d'évacuation (33) acquérant des informations indiquant un itinéraire d'évacuation (ER) dans l'espace cible de climatisation (S1), dans lequel
l'unité de commande de soufflage (23, 23a) règle une zone évitant l'itinéraire d'évacuation (ER) en tant que zone cible de guidage de gaz (A4) en utilisant les informations acquises par l'unité d'acquisition d'informations d'itinéraire d'évacuation (33).

15. Dispositif de climatisation (200e) selon la revendication 7 ou 8, comprenant en outre

une unité de traitement de détection humaine (30) exécutant un traitement de détection d'une personne dans l'espace cible de climatisation (S1), dans lequel
l'unité de commande de soufflage (23, 23a) règle une zone évitant la personne en tant que zone cible de guidage de gaz (A4) sur la base d'un résultat de la détection d'une personne exécutée par l'unité de traitement de détection humaine (30).

16. Dispositif de climatisation (200, 200a, 200b, 200c, 200d, 200e) selon l'une quelconque des revendications 1 à 15, dans lequel

la longueur d'onde ($\lambda$) de la lumière laser (L) délivrée en sortie par le lidar peut être commutée, et
l'unité de traitement de détection de gaz (26) calcule la valeur de concentration (N) de chacun d'une pluralité de types de gaz cibles de détection.

17. Procédé de contrôle d'un dispositif de climatisation (200, 200a, 200b, 200c, 200d, 200e), le procédé de contrôle comprenant les étapes suivantes :

calculer, avec une unité de traitement de détection de gaz (26), une valeur de concentration (N) d'un gaz cible de détection dans un espace cible de climatisation (S1) en utilisant un lidar (17) ;
contrôler, avec une unité de commande de soufflage (23, 23a), une direction de soufflage ($\phi_B$, $\Theta_B$) par rapport à l'espace cible de climatisation (S1) en utilisant la valeur de concentration (N) ;
calculer, avec une unité de traitement de mesure du flux d'air (29), une valeur de direction du flux d'air ($\phi_L$, $\Theta_L$) dans l'espace cible de climatisation (S1) en utilisant le lidar (17) ; et
contrôler, avec l'unité de commande de soufflage (23, 23a), la direction de soufflage ($\phi_B$, $\Theta_B$) en utilisant la valeur de concentration (N) et de la valeur de direction du flux d'air ($\phi_L$, $\Theta_L$).

FIG. 1

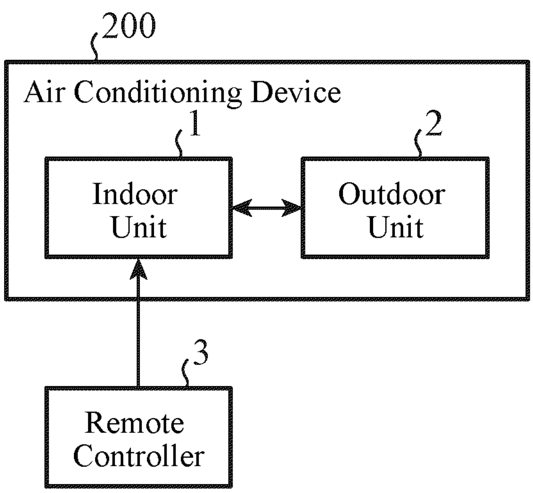
200
Air Conditioning Device
1
2
Indoor Unit
Outdoor Unit
3
Remote Controller

FIG. 2

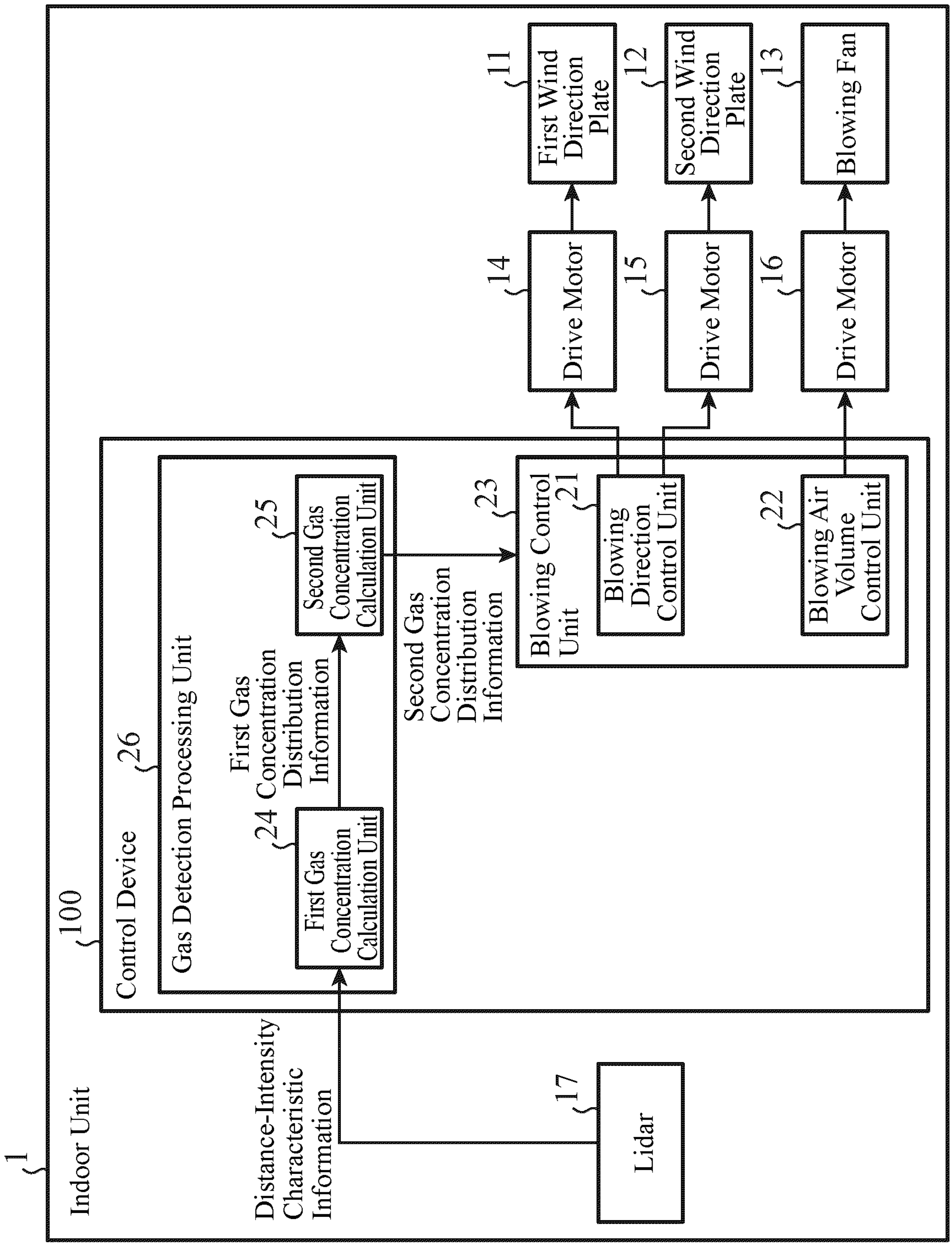
1
Indoor Unit
100
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23
Blowing Control Unit
21
Blowing Direction Control Unit
22
Blowing Air Volume Control Unit
14
Drive Motor
15
Drive Motor
16
Drive Motor
11
First Wind Direction Plate
12
Second Wind Direction Plate
13
Blowing Fan
Distance-Intensity Characteristic Information
17
Lidar

FIG. 3

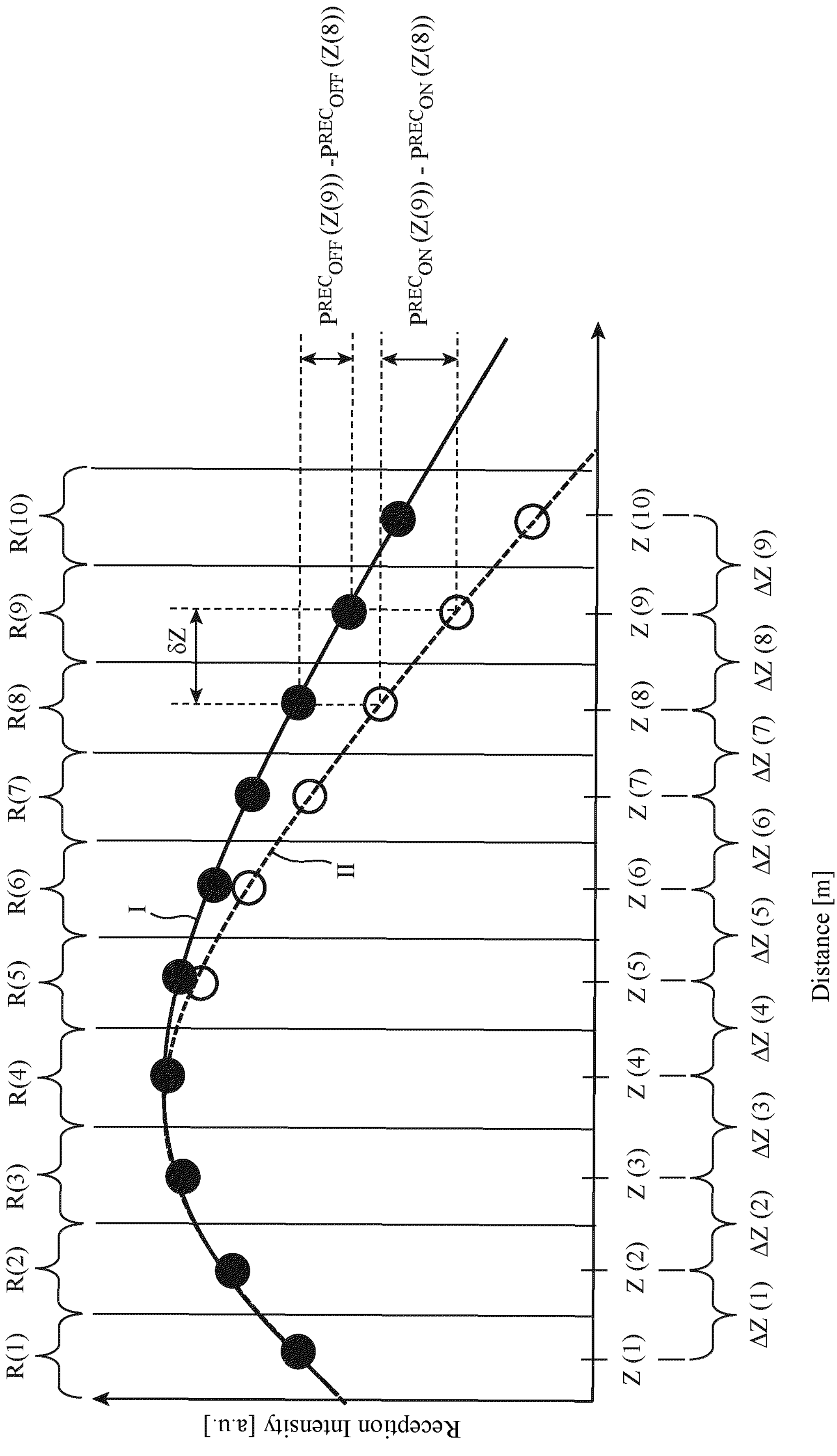
$P_{REC_{OFF}}(Z(9)) - P_{REC_{OFF}}(Z(8))$
$P_{REC_{ON}}(Z(9)) - P_{REC_{ON}}(Z(8))$
R(1)
R(2)
R(3)
R(4)
R(5)
R(6)
R(7)
R(8)
R(9)
R(10)
δZ
I
II
Z (1)
Z (2)
Z (3)
Z (4)
Z (5)
Z (6)
Z (7)
Z (8)
Z (9)
Z (10)
ΔZ (1)
ΔZ (2)
ΔZ (3)
ΔZ (4)
ΔZ (5)
ΔZ (6)
ΔZ (7)
ΔZ (8)
ΔZ (9)
Distance [m]
Reception Intensity [a.u.]

FIG. 4

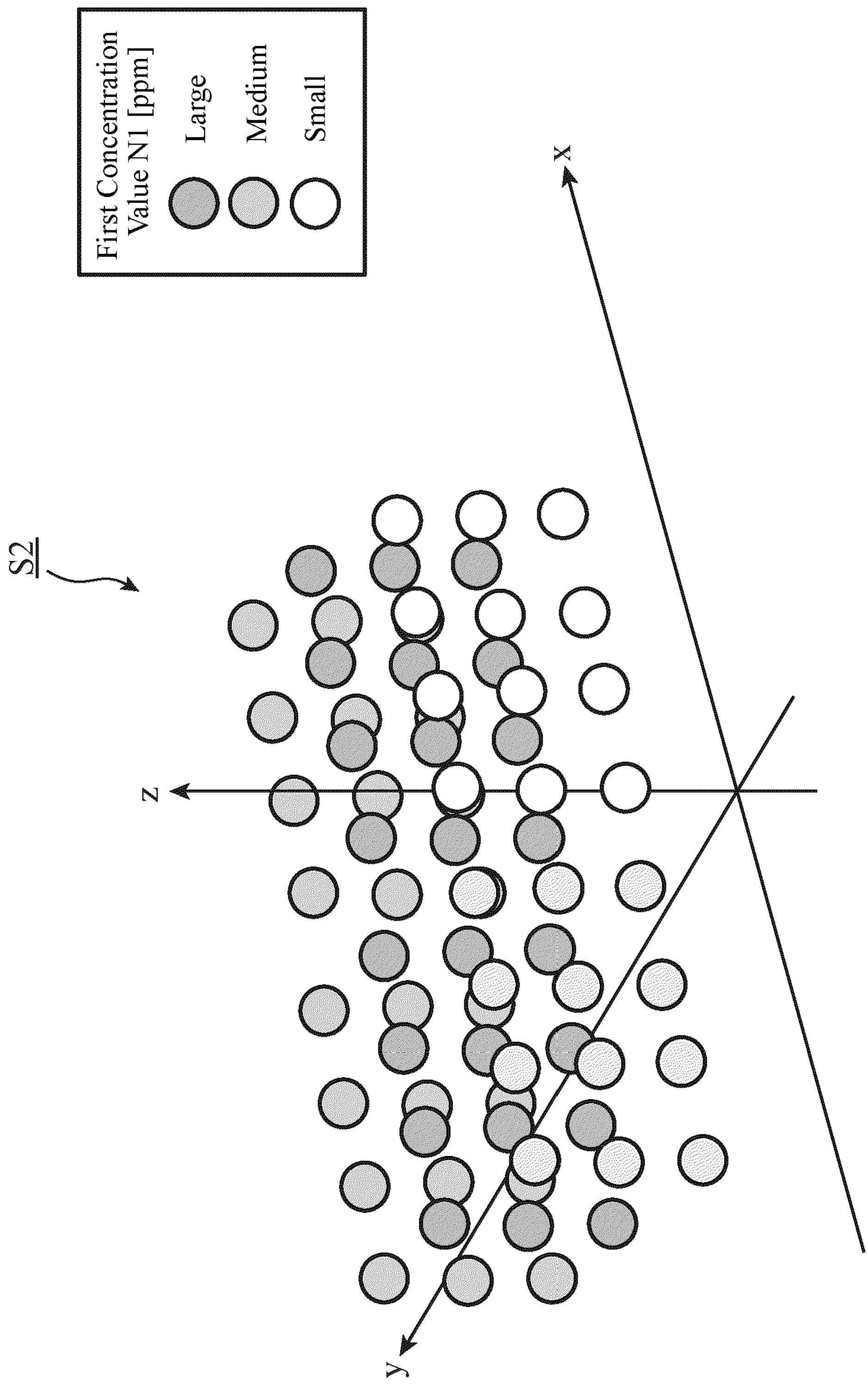

FIG. 5

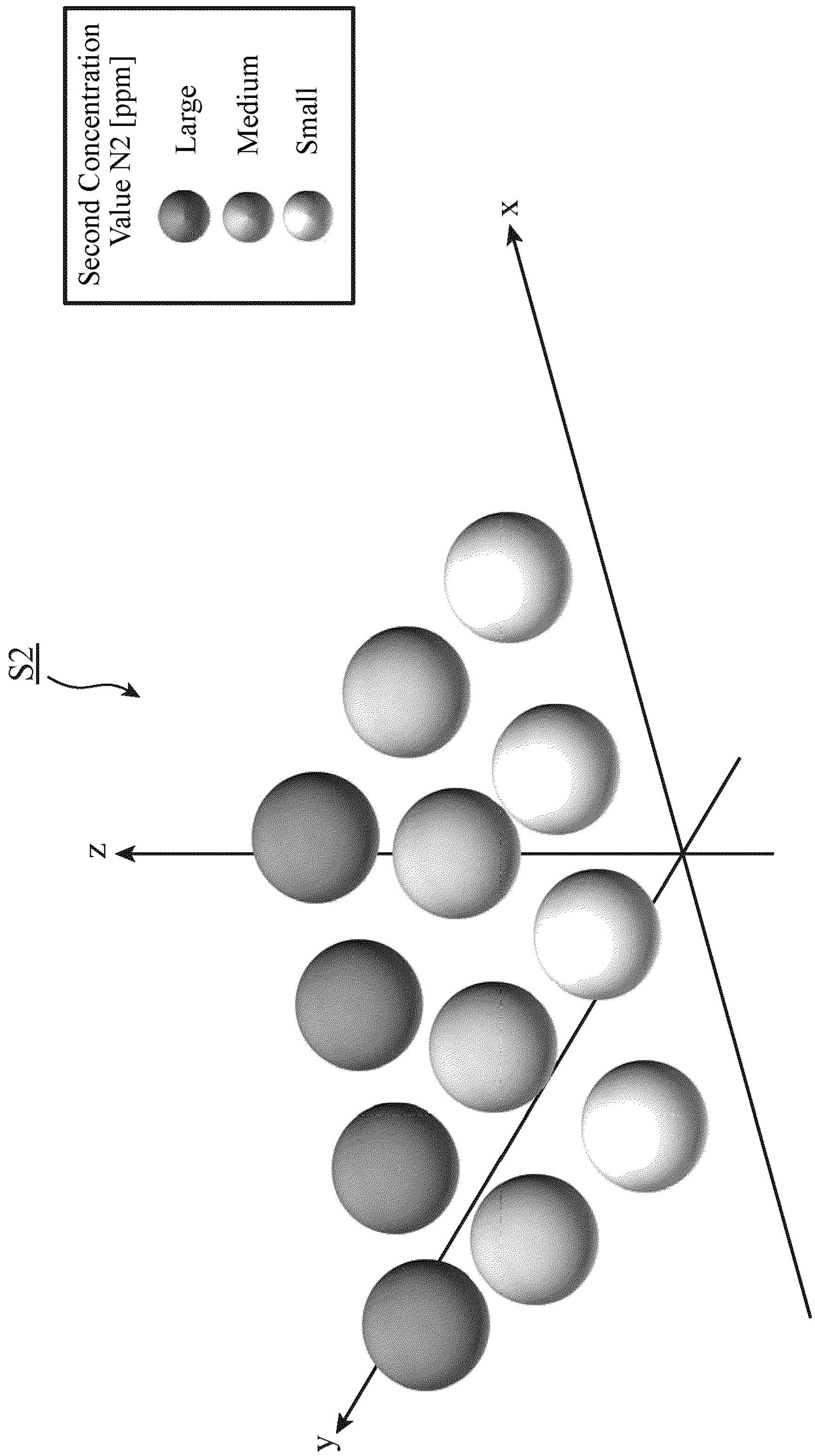
S2
Second Concentration Value N2 [ppm]
Large
Medium
Small
z
x
y

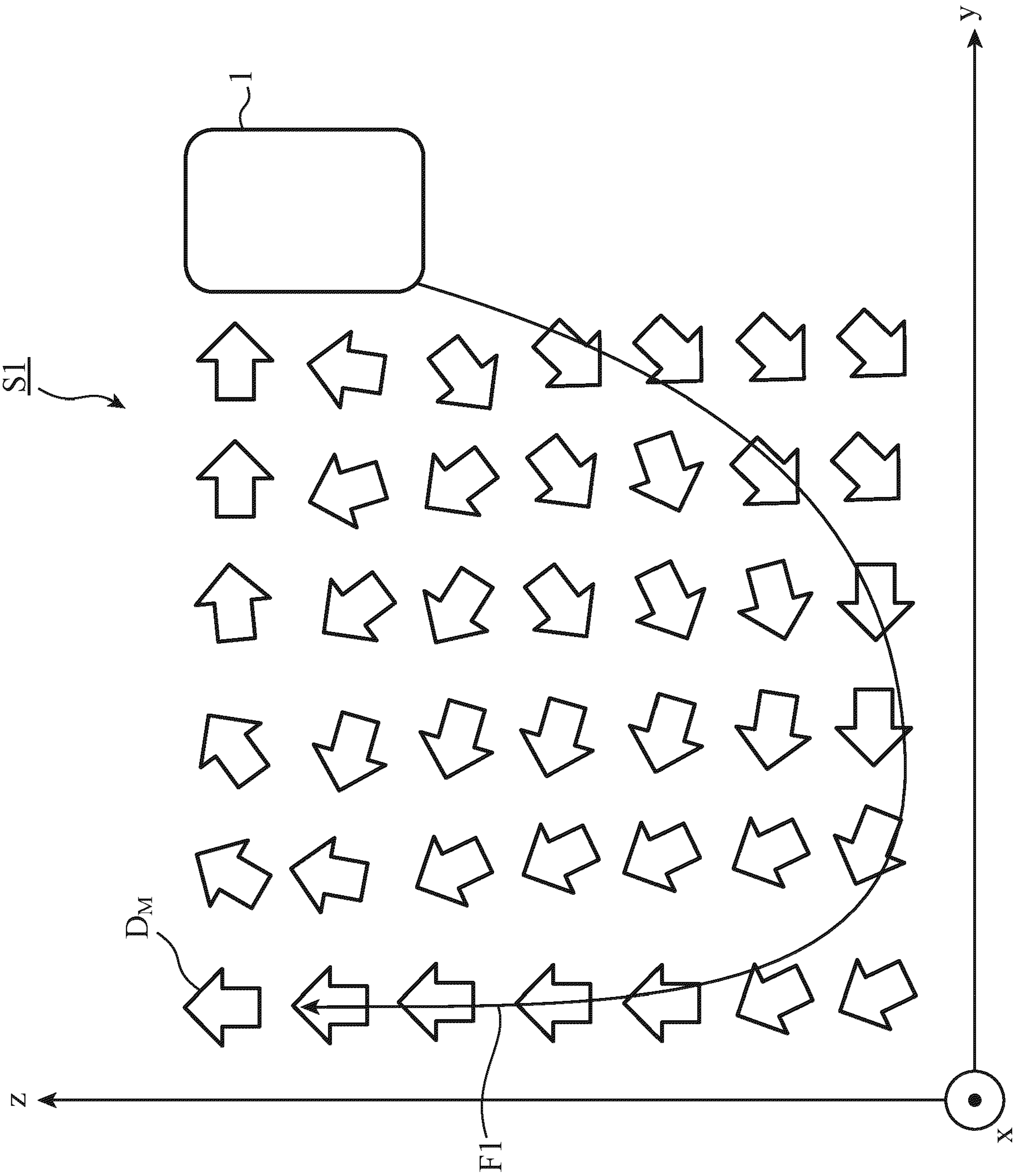


FIG. 6

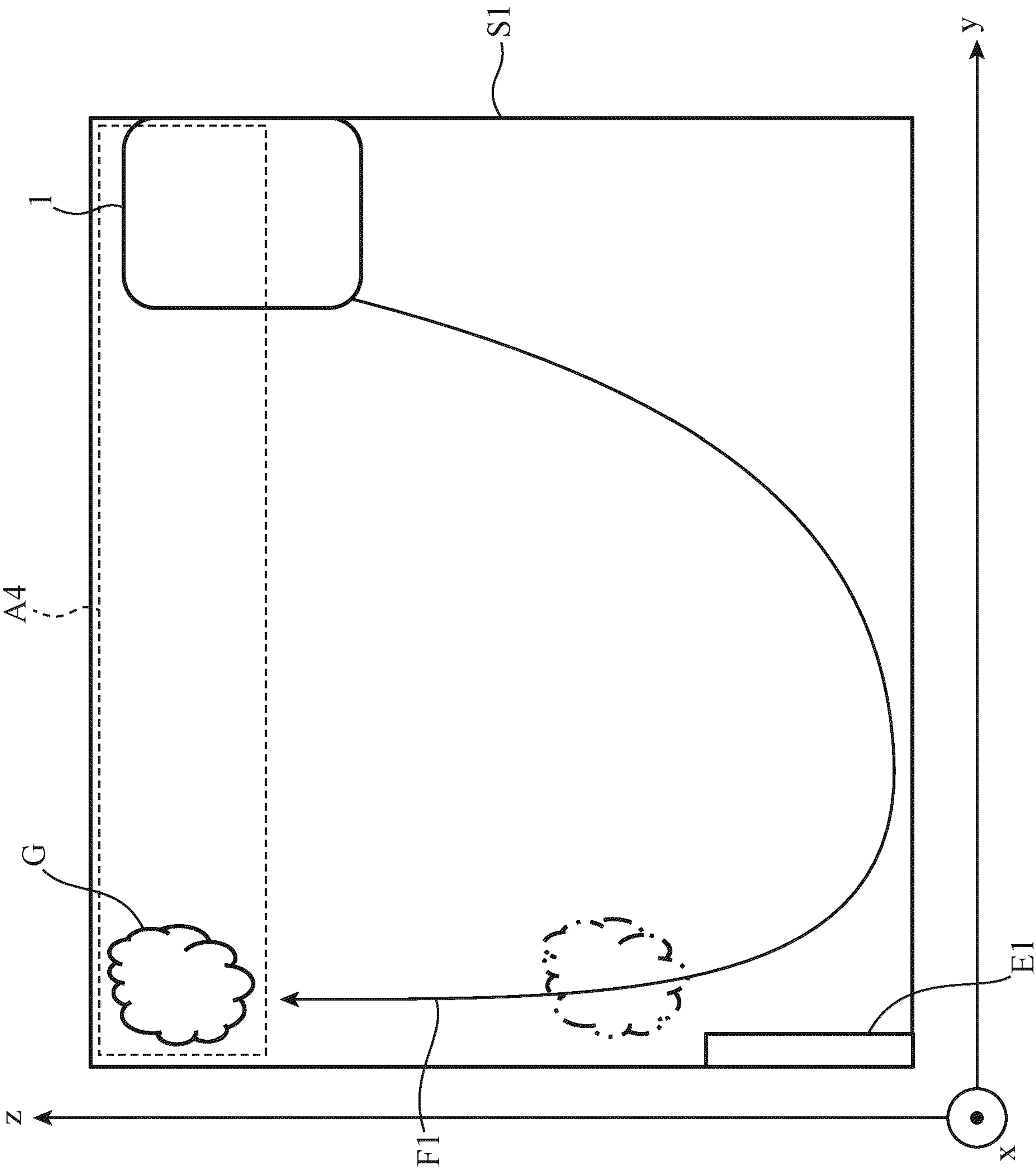


FIG. 7

FIG. 8A

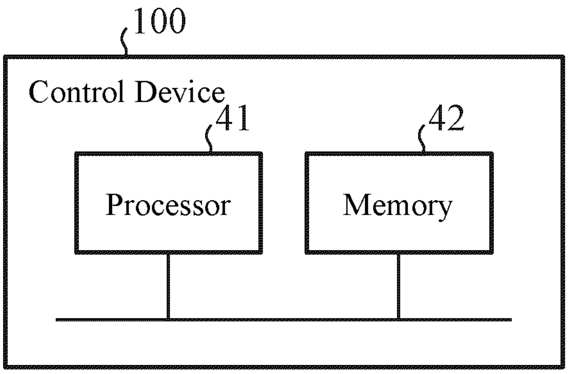
100
Control Device
41
42
Processor
Memory

FIG. 8B

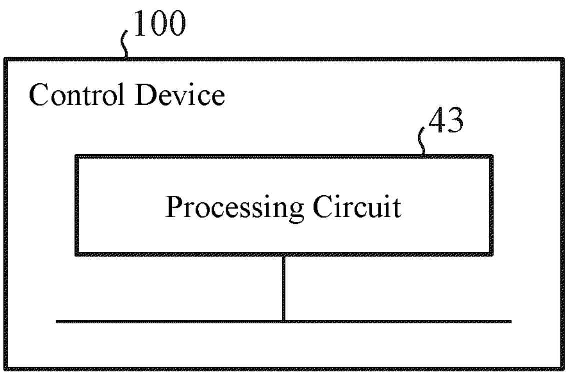
100
Control Device
43
Processing Circuit

FIG. 9

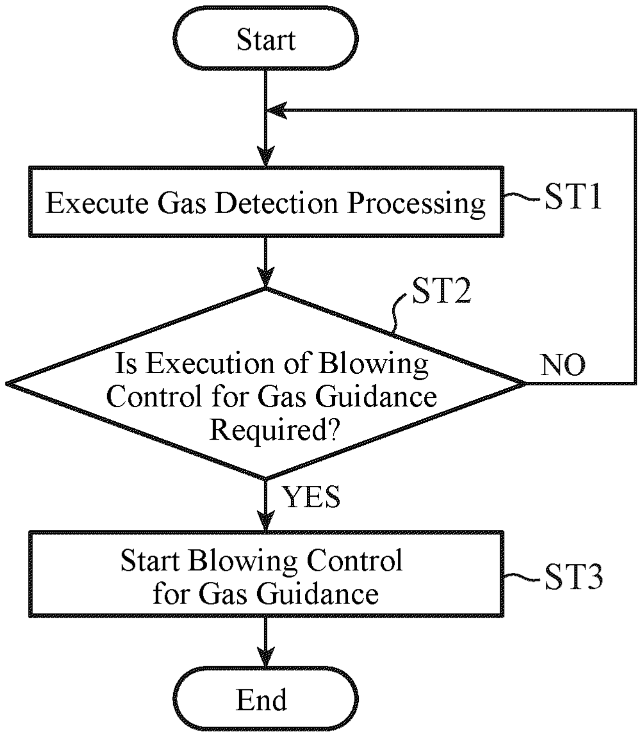
Start
Execute Gas Detection Processing
ST1
ST2
Is Execution of Blowing Control for Gas Guidance Required?
NO
YES
Start Blowing Control for Gas Guidance
ST3
End

FIG.10

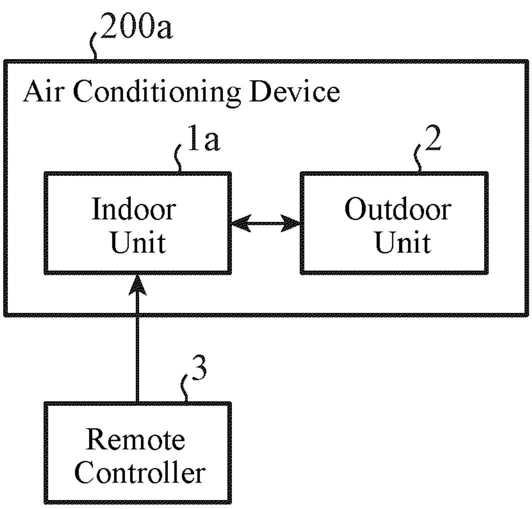
200a
Air Conditioning Device
1a
2
Indoor Unit
Outdoor Unit
3
Remote Controller

FIG. 11

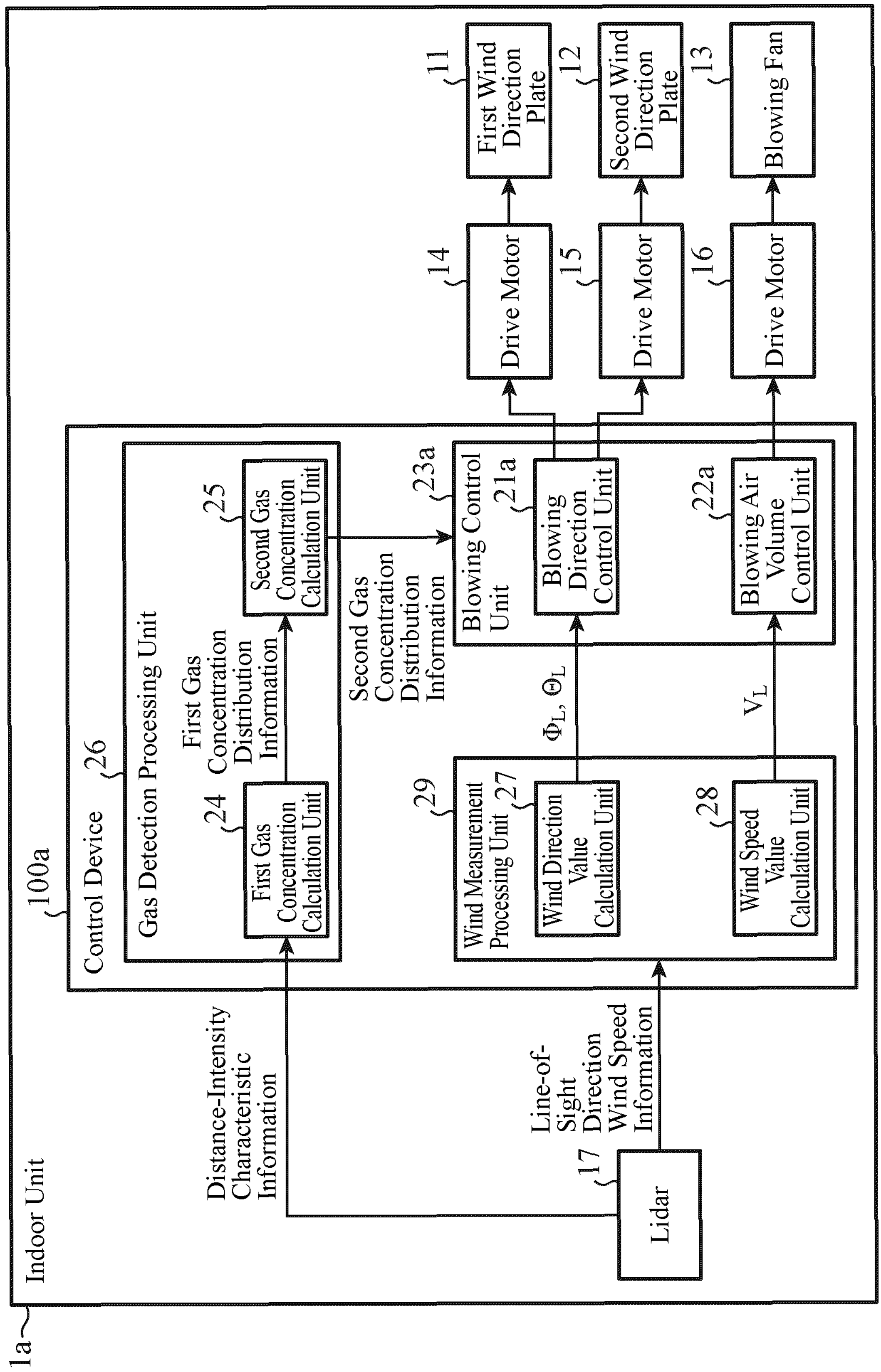
1a
Indoor Unit
100a
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23a
Blowing Control Unit
21a
Blowing Direction Control Unit
22a
Blowing Air Volume Control Unit
29
Wind Measurement Processing Unit
27
Wind Direction Value Calculation Unit
28
Wind Speed Value Calculation Unit
$\Phi_L$, $\Theta_L$
$V_L$
14
Drive Motor
15
Drive Motor
16
Drive Motor
11
First Wind Direction Plate
12
Second Wind Direction Plate
13
Blowing Fan
17
Lidar
Distance-Intensity Characteristic Information
Line-of-Sight Direction Wind Speed Information

FIG. 12

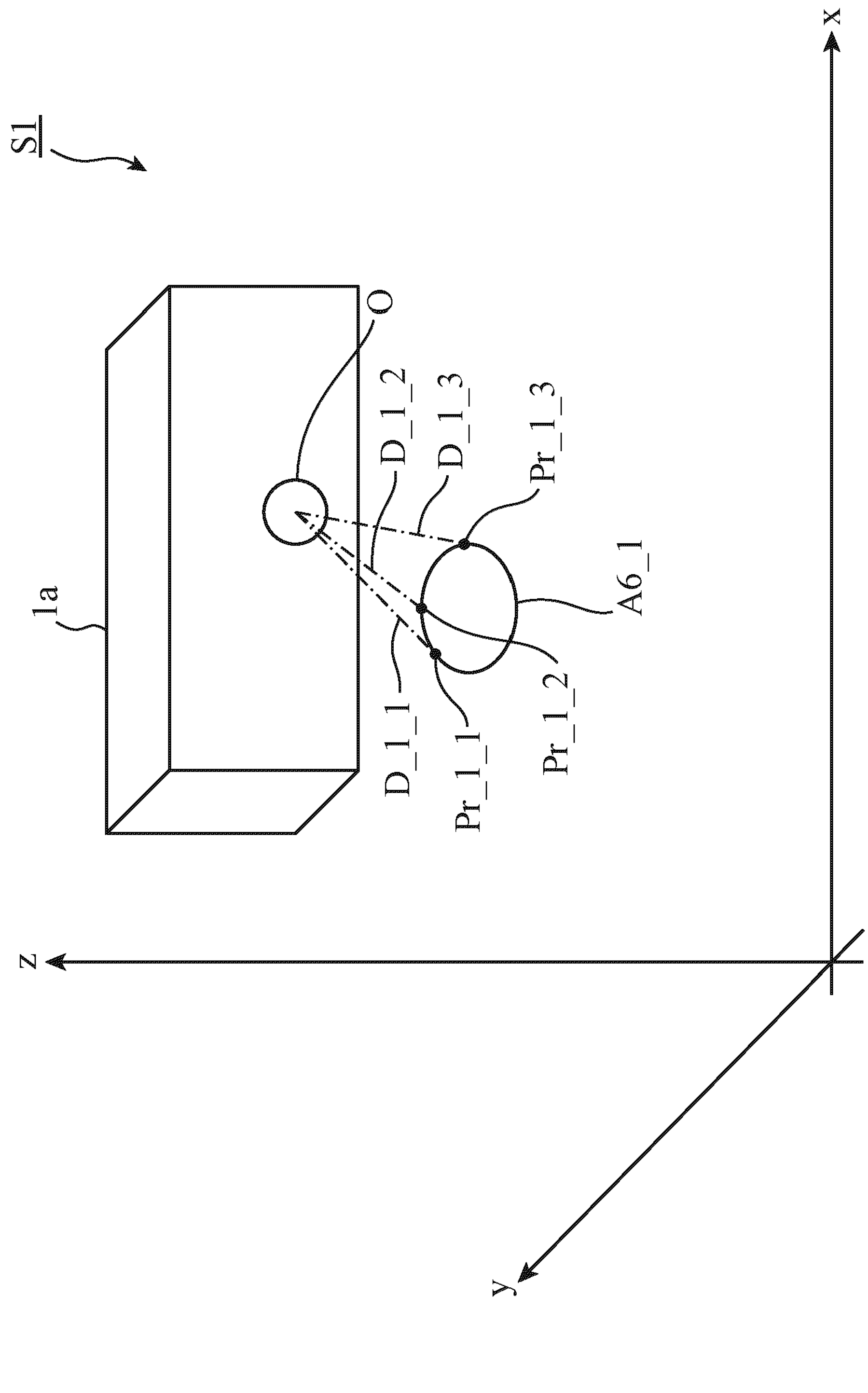

FIG. 13

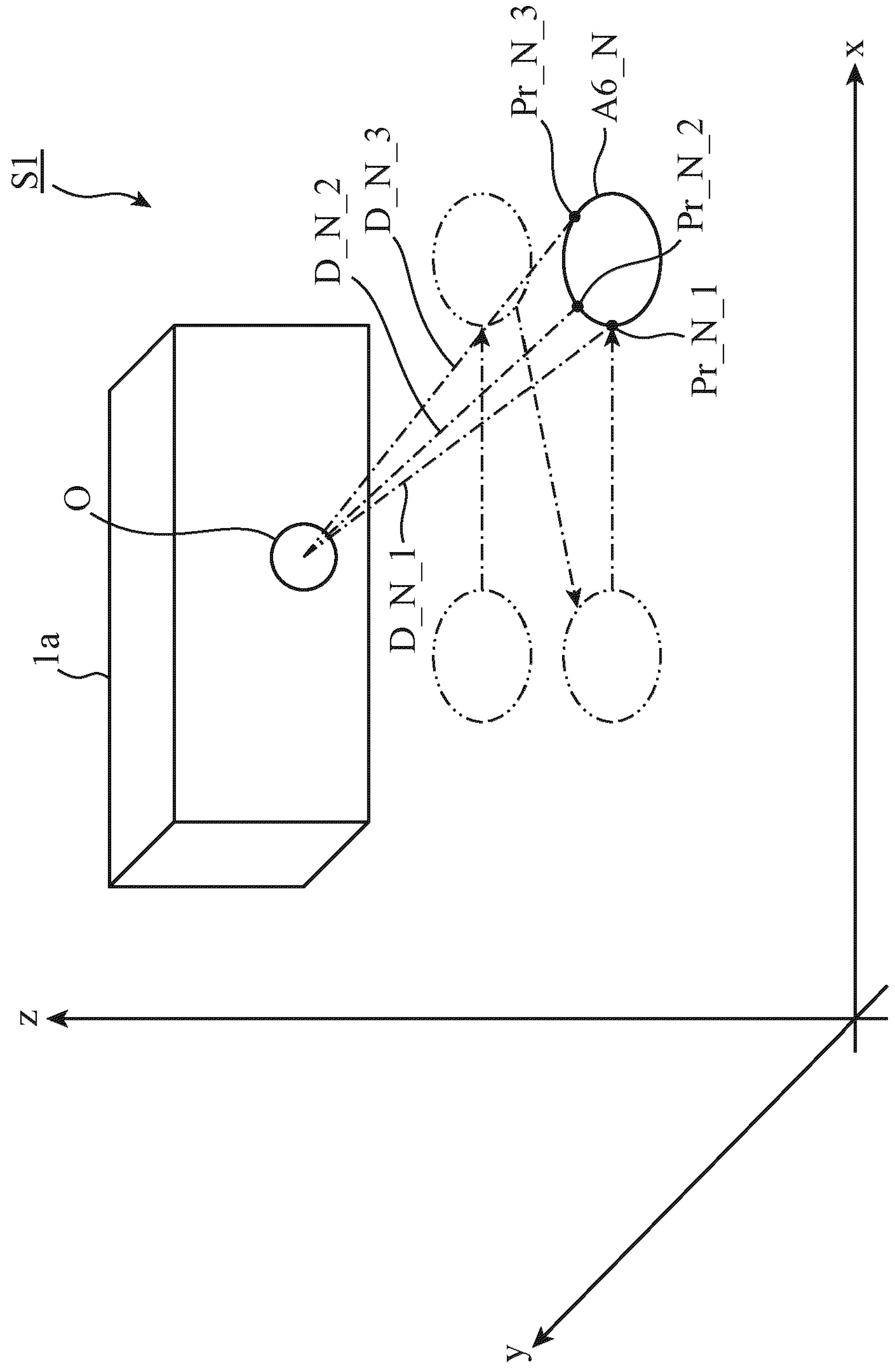

FIG. 14A

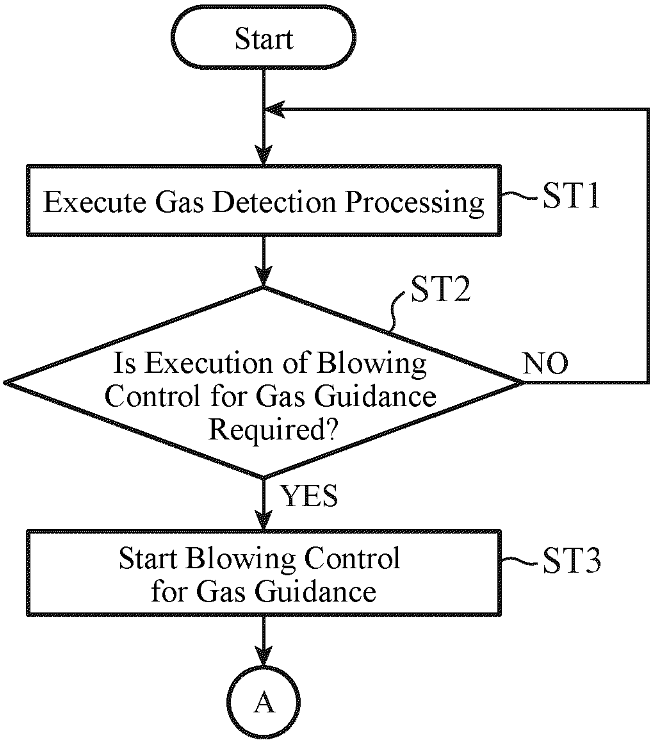
Start
Execute Gas Detection Processing
ST1
ST2
Is Execution of Blowing Control for Gas Guidance Required?
NO
YES
Start Blowing Control for Gas Guidance
ST3
A

FIG. 14B

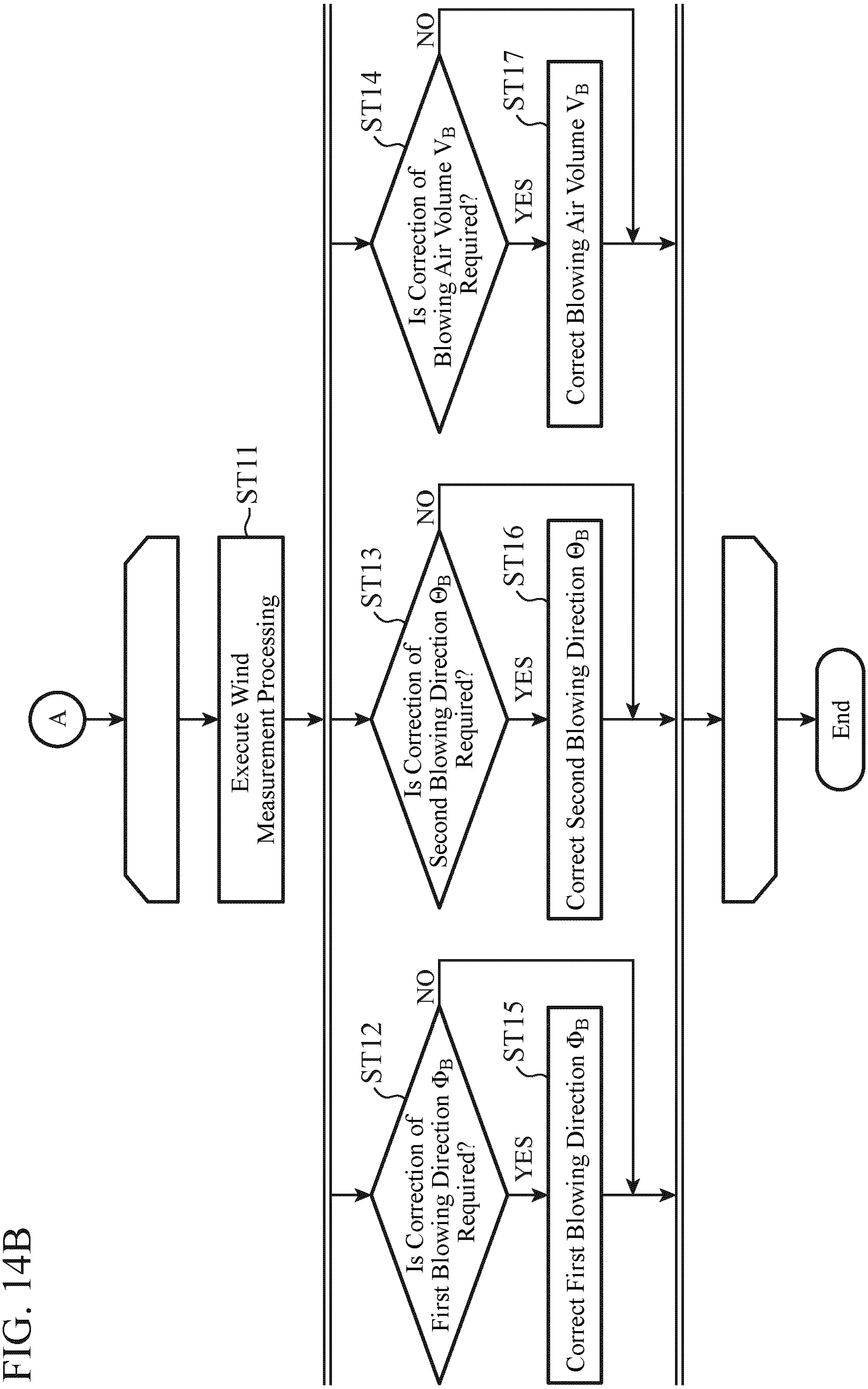
A
Execute Wind Measurement Processing
ST11
ST12
Is Correction of First Blowing Direction $\Phi_B$ Required?
ST13
Is Correction of Second Blowing Direction $\Theta_B$ Required?
ST14
Is Correction of Blowing Air Volume $V_B$ Required?
NO
YES
ST15
Correct First Blowing Direction $\Phi_B$
ST16
Correct Second Blowing Direction $\Theta_B$
ST17
Correct Blowing Air Volume $V_B$
End

FIG. 15

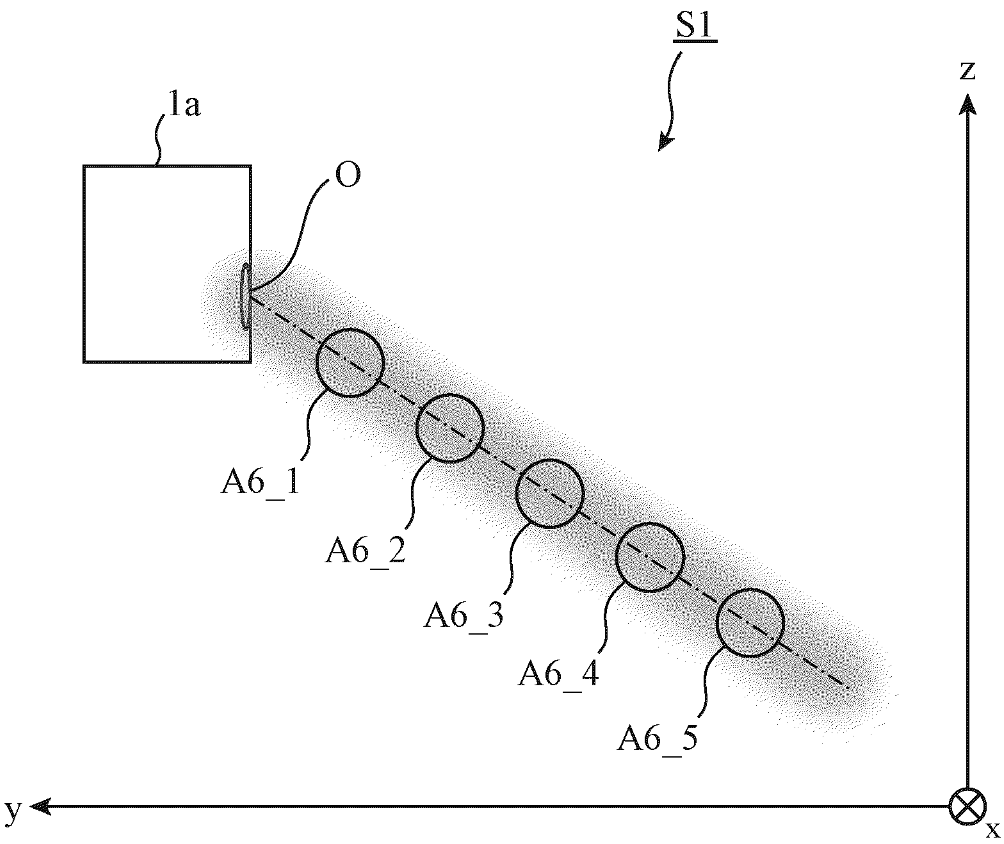
S1
1a
O
A6_1
A6_2
A6_3
A6_4
A6_5
z
y
x

FIG. 16

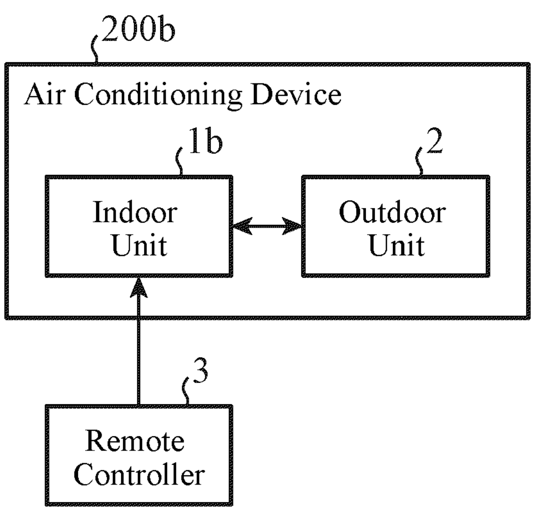
200b
Air Conditioning Device
1b
Indoor Unit
2
Outdoor Unit
3
Remote Controller

FIG. 17

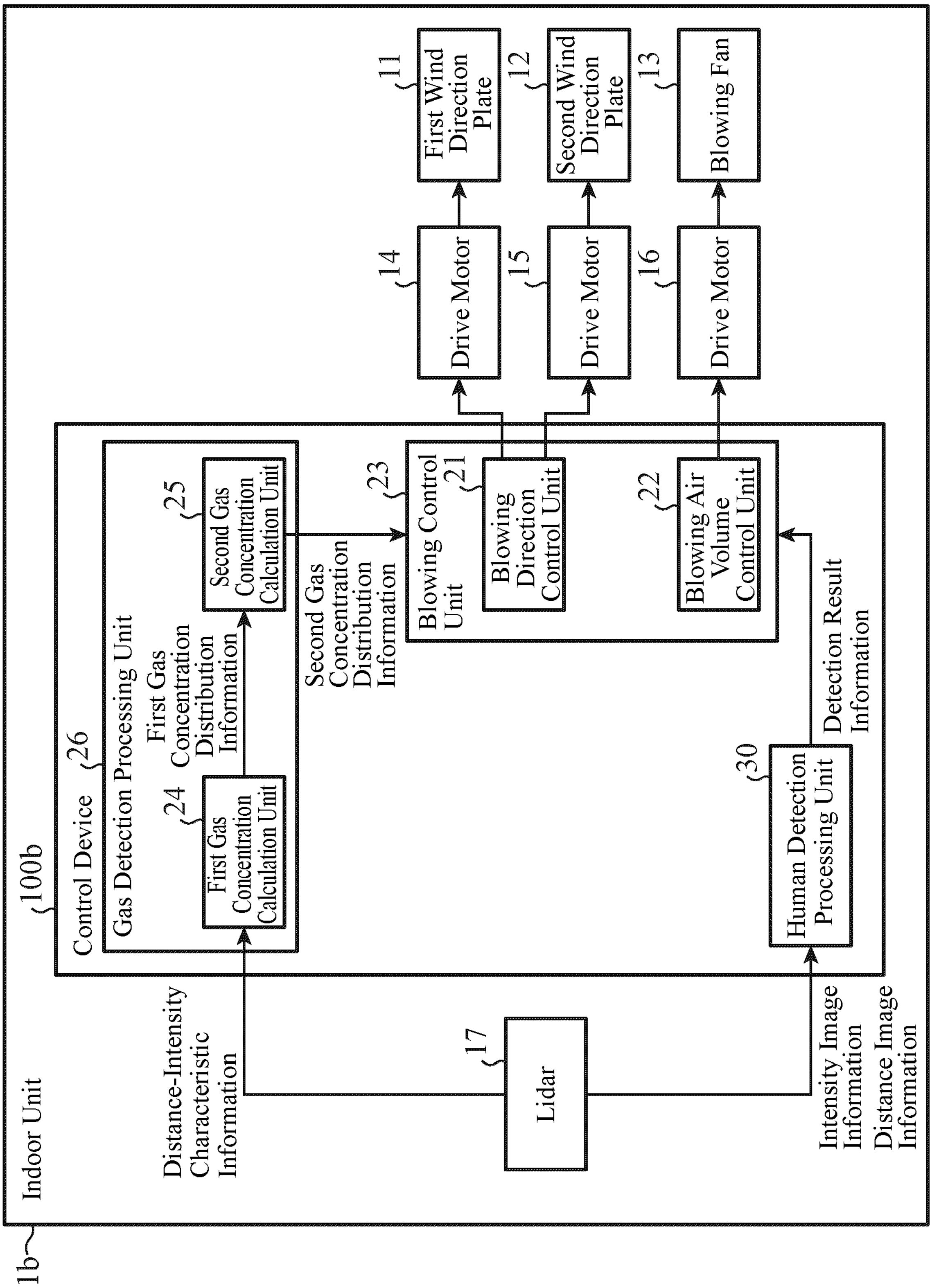
1b
Indoor Unit
17
Lidar
Distance-Intensity Characteristic Information
Intensity Image Information
Distance Image Information
100b
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23
Blowing Control Unit
21
Blowing Direction Control Unit
22
Blowing Air Volume Control Unit
30
Human Detection Processing Unit
Detection Result Information
14
Drive Motor
15
Drive Motor
16
Drive Motor
11
First Wind Direction Plate
12
Second Wind Direction Plate
13
Blowing Fan

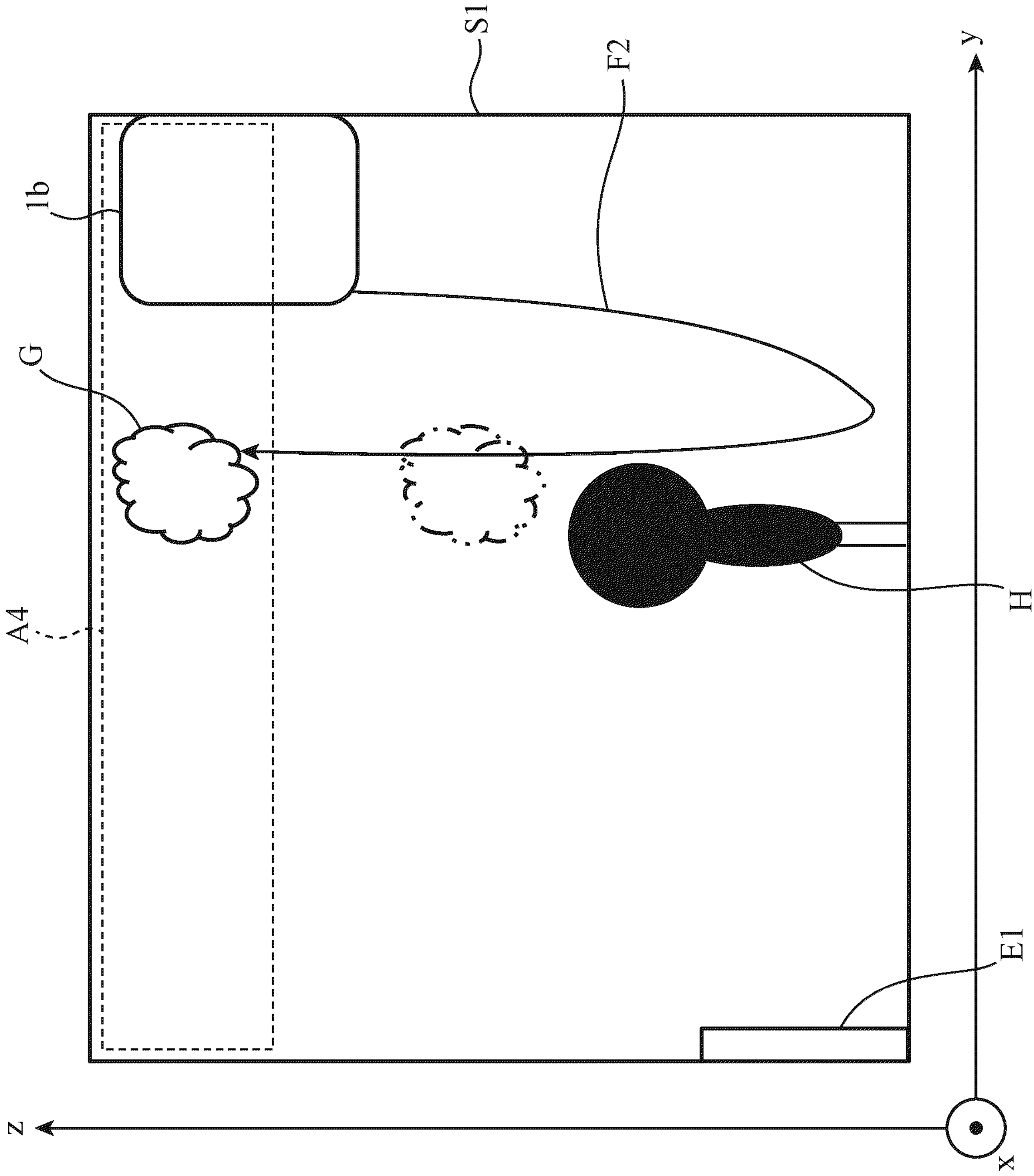


FIG. 18

FIG. 19

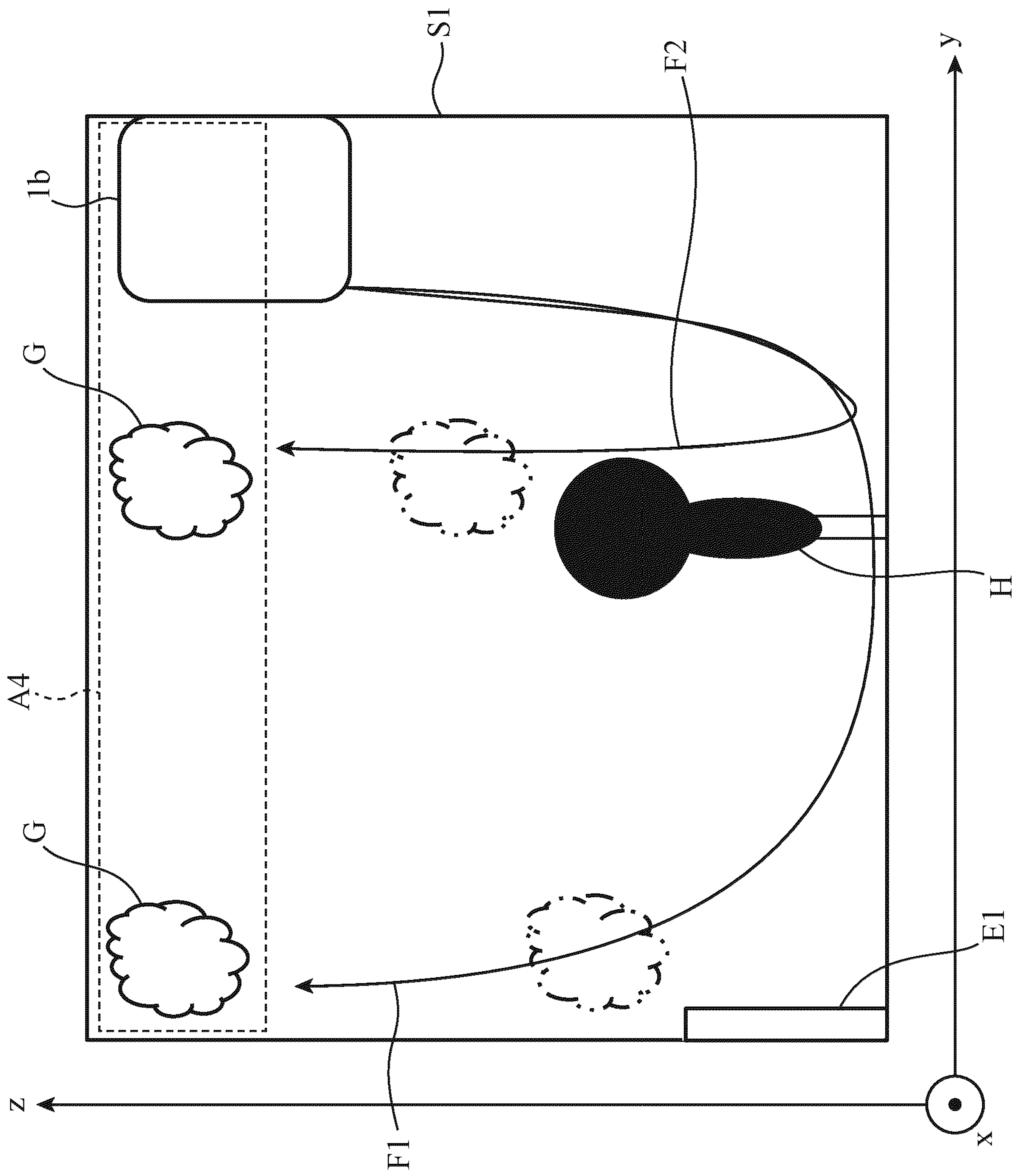

FIG. 20

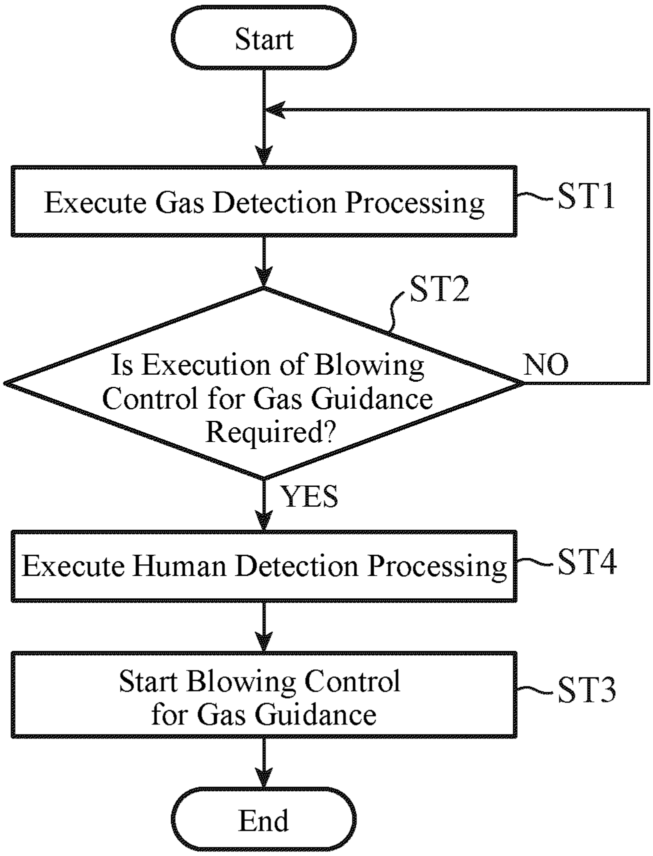
Start
Execute Gas Detection Processing
ST1
ST2
Is Execution of Blowing Control for Gas Guidance Required?
NO
YES
Execute Human Detection Processing
ST4
Start Blowing Control for Gas Guidance
ST3
End

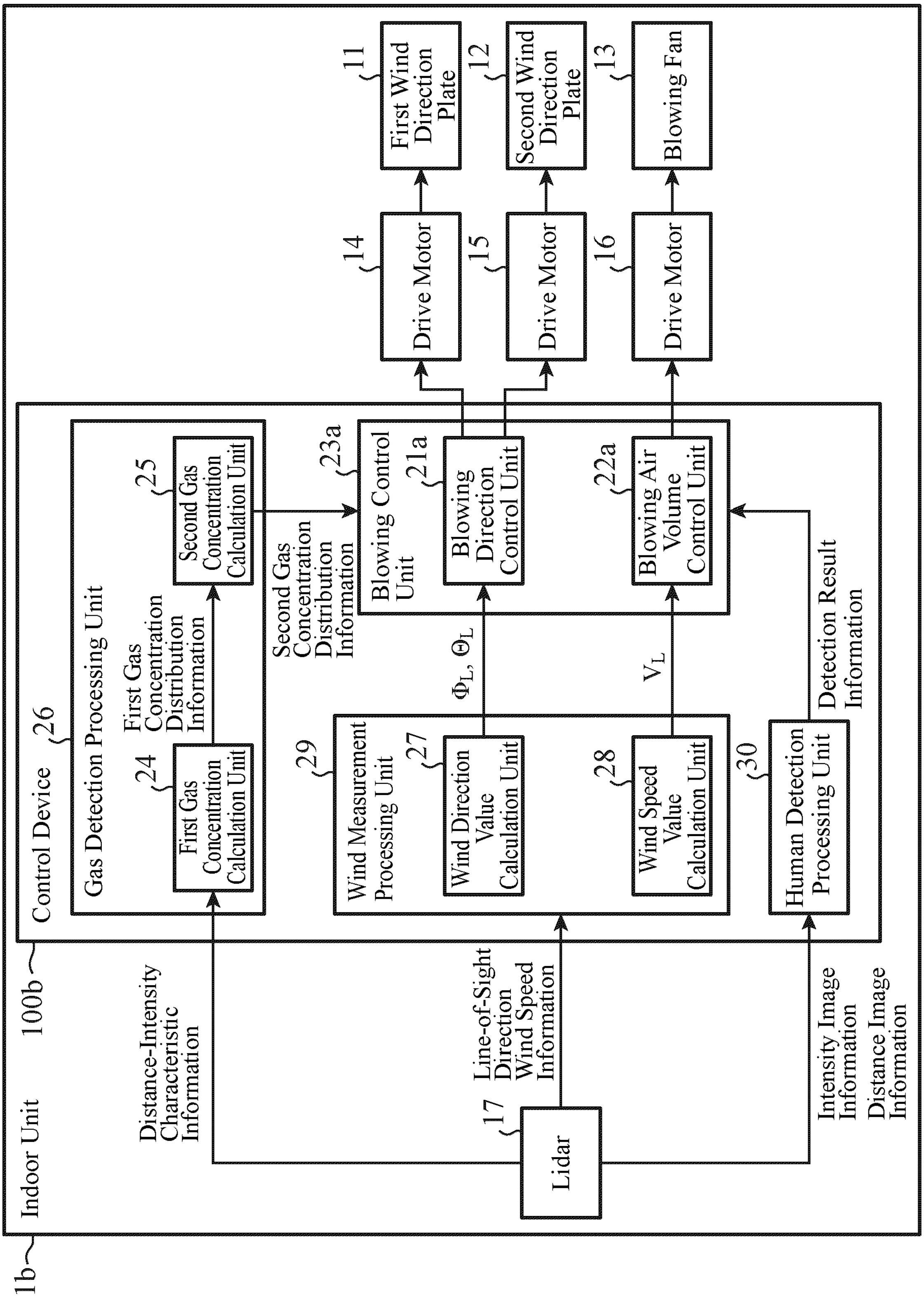
1b
Indoor Unit
100b
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23a
Blowing Control Unit
21a
Blowing Direction Control Unit
22a
Blowing Air Volume Control Unit
29
Wind Measurement Processing Unit
27
Wind Direction Value Calculation Unit
28
Wind Speed Value Calculation Unit
$\Phi_L$, $\Theta_L$
$V_L$
30
Human Detection Processing Unit
Detection Result Information
17
Lidar
Distance-Intensity Characteristic Information
Line-of-Sight Direction Wind Speed Information
Intensity Image Information
Distance Image Information
14
Drive Motor
15
Drive Motor
16
Drive Motor
11
First Wind Direction Plate
12
Second Wind Direction Plate
13
Blowing Fan

FIG. 21

FIG. 22

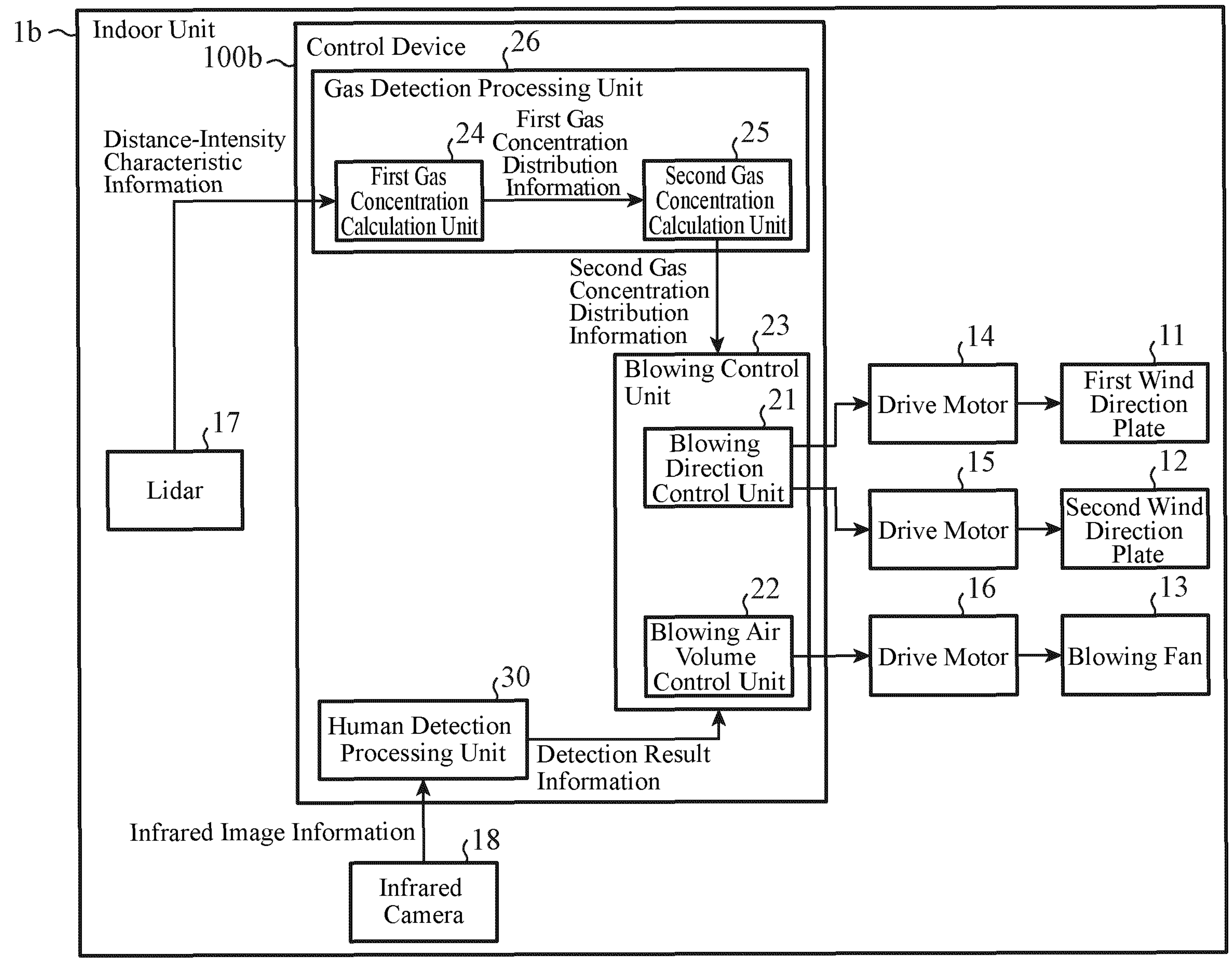
1b
Indoor Unit
100b
Control Device
26
Gas Detection Processing Unit
Distance-Intensity Characteristic Information
24
First Gas Concentration Calculation Unit
First Gas Concentration Distribution Information
25
Second Gas Concentration Calculation Unit
Second Gas Concentration Distribution Information
23
Blowing Control Unit
21
Blowing Direction Control Unit
22
Blowing Air Volume Control Unit
14
Drive Motor
15
Drive Motor
16
Drive Motor
11
First Wind Direction Plate
12
Second Wind Direction Plate
13
Blowing Fan
17
Lidar
30
Human Detection Processing Unit
Detection Result Information
Infrared Image Information
18
Infrared Camera

FIG. 23

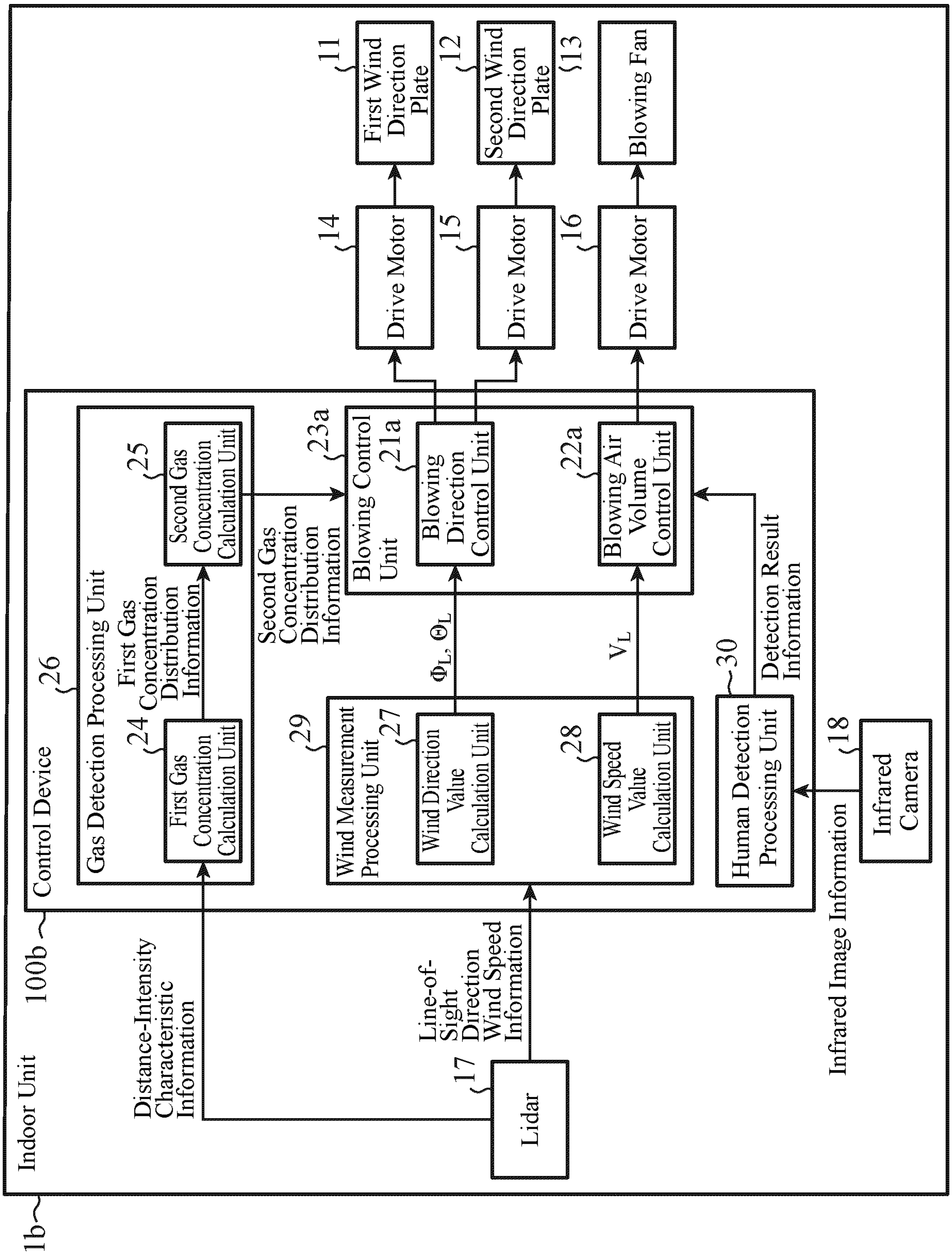
1b
Indoor Unit
100b
Control Device
Gas Detection Processing Unit
26
24
First Gas Concentration Calculation Unit
First Gas Concentration Distribution Information
25
Second Gas Concentration Calculation Unit
Second Gas Concentration Distribution Information
23a
Blowing Control Unit
21a
Blowing Direction Control Unit
22a
Blowing Air Volume Control Unit
29
Wind Measurement Processing Unit
27
Wind Direction Value Calculation Unit
28
Wind Speed Value Calculation Unit
$\Phi_L$, $\Theta_L$
$V_L$
30
Human Detection Processing Unit
Detection Result Information
18
Infrared Camera
Infrared Image Information
17
Lidar
Distance-Intensity Characteristic Information
Line-of-Sight Direction Wind Speed Information
14
Drive Motor
15
Drive Motor
16
Drive Motor
11
First Wind Direction Plate
12
Second Wind Direction Plate
13
Blowing Fan

FIG. 24

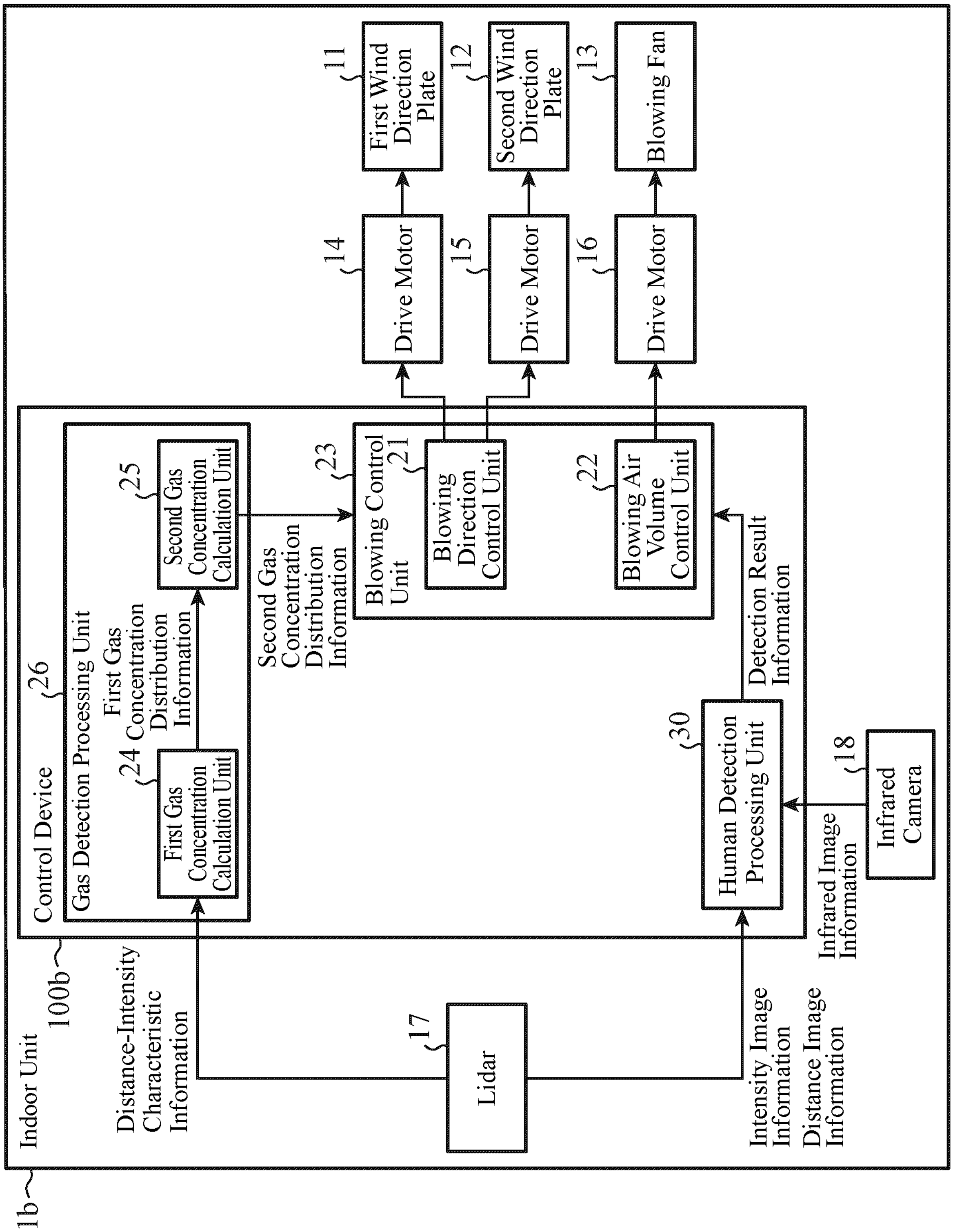
1b
Indoor Unit
100b
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23
Blowing Control Unit
21
Blowing Direction Control Unit
22
Blowing Air Volume Control Unit
30
Human Detection Processing Unit
Detection Result Information
17
Lidar
Distance-Intensity Characteristic Information
Intensity Image Information
Distance Image Information
18
Infrared Camera
Infrared Image Information
14
Drive Motor
15
Drive Motor
16
Drive Motor
11
First Wind Direction Plate
12
Second Wind Direction Plate
13
Blowing Fan

FIG. 25

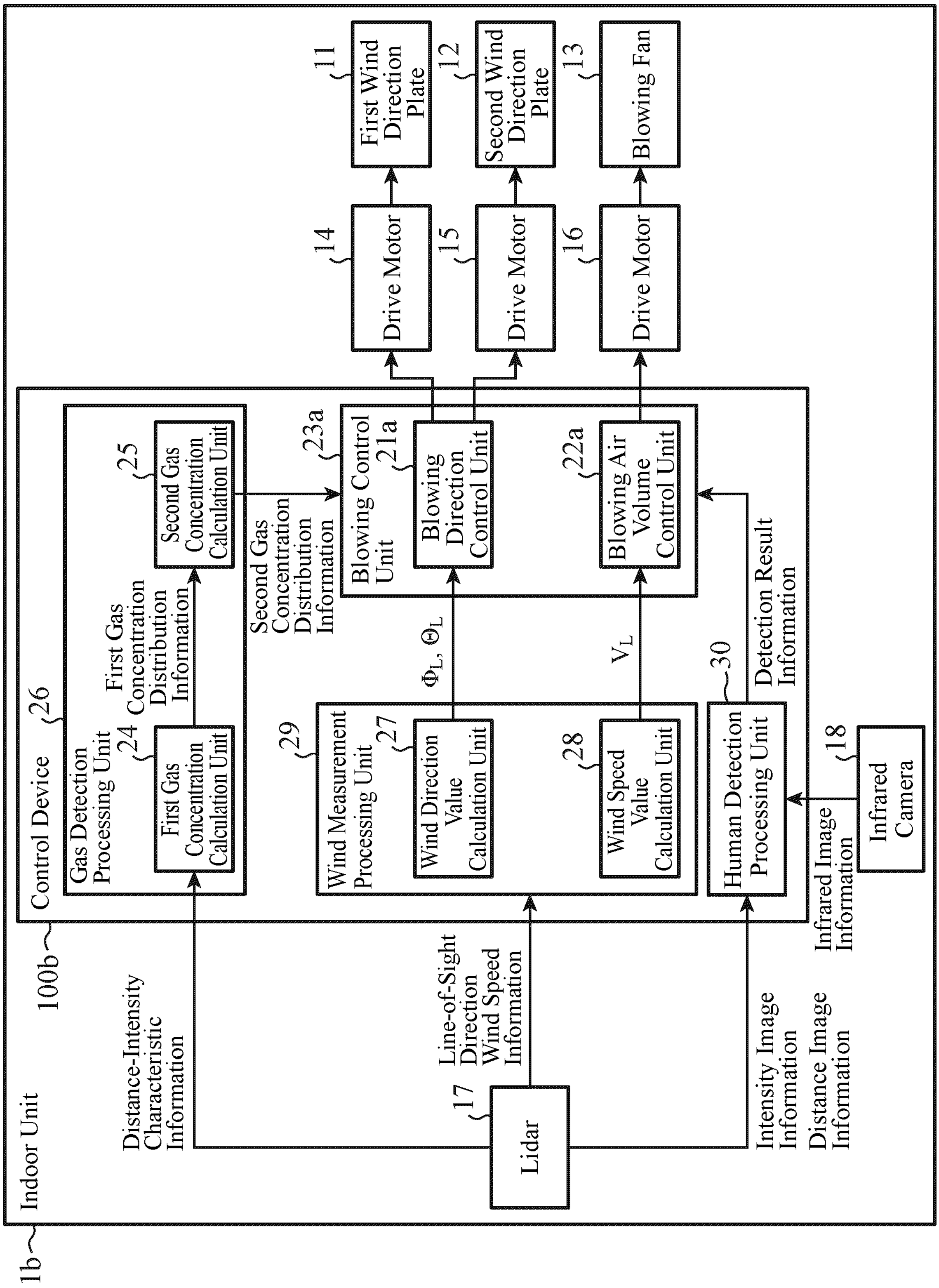
1b
Indoor Unit
100b
Control Device
26
Gas Detection Processing Unit
24
First Gas Concentration Calculation Unit
First Gas Concentration Distribution Information
25
Second Gas Concentration Calculation Unit
Second Gas Concentration Distribution Information
29
Wind Measurement Processing Unit
27
Wind Direction Value Calculation Unit
28
Wind Speed Value Calculation Unit
ΦL, ΘL
VL
23a
Blowing Control Unit
21a
Blowing Direction Control Unit
22a
Blowing Air Volume Control Unit
30
Human Detection Processing Unit
Detection Result Information
18
Infrared Camera
Infrared Image Information
17
Lidar
Distance-Intensity Characteristic Information
Line-of-Sight Direction Wind Speed Information
Intensity Image Information
Distance Image Information
14
Drive Motor
15
Drive Motor
16
Drive Motor
11
First Wind Direction Plate
12
Second Wind Direction Plate
13
Blowing Fan

FIG. 26

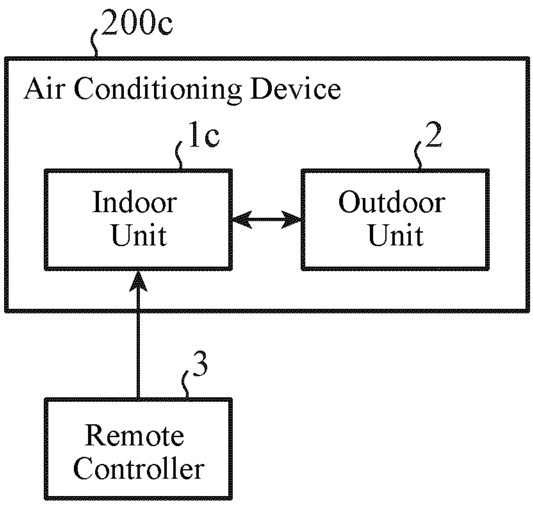
200c
Air Conditioning Device
1c
Indoor Unit
2
Outdoor Unit
3
Remote Controller

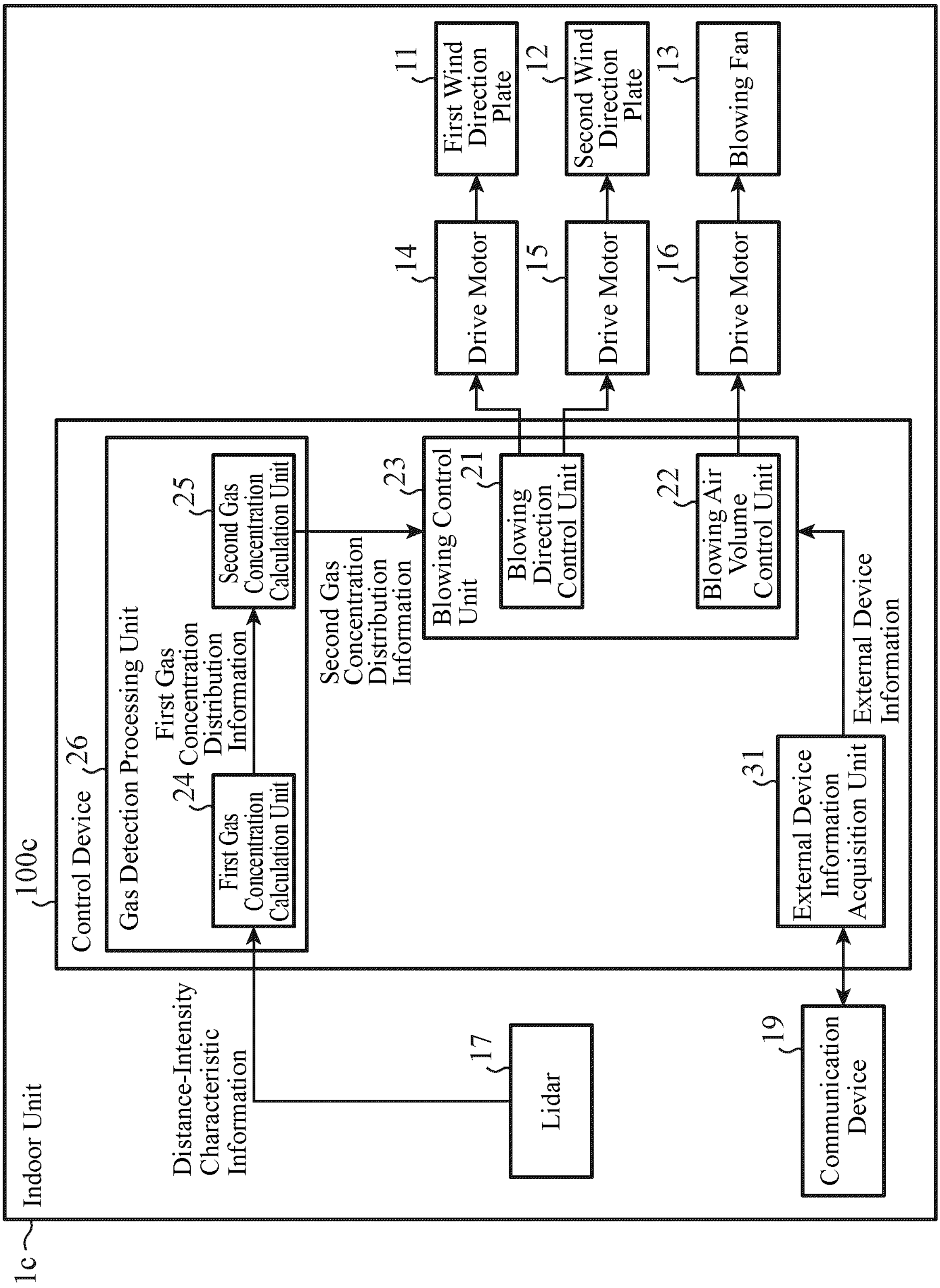

1c
Indoor Unit
100c
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23
Blowing Control Unit
21
Blowing Direction Control Unit
22
Blowing Air Volume Control Unit
31
External Device Information Acquisition Unit
External Device Information
Distance-Intensity Characteristic Information
17
Lidar
19
Communication Device
14
Drive Motor
15
Drive Motor
16
Drive Motor
11
First Wind Direction Plate
12
Second Wind Direction Plate
13
Blowing Fan


FIG. 27

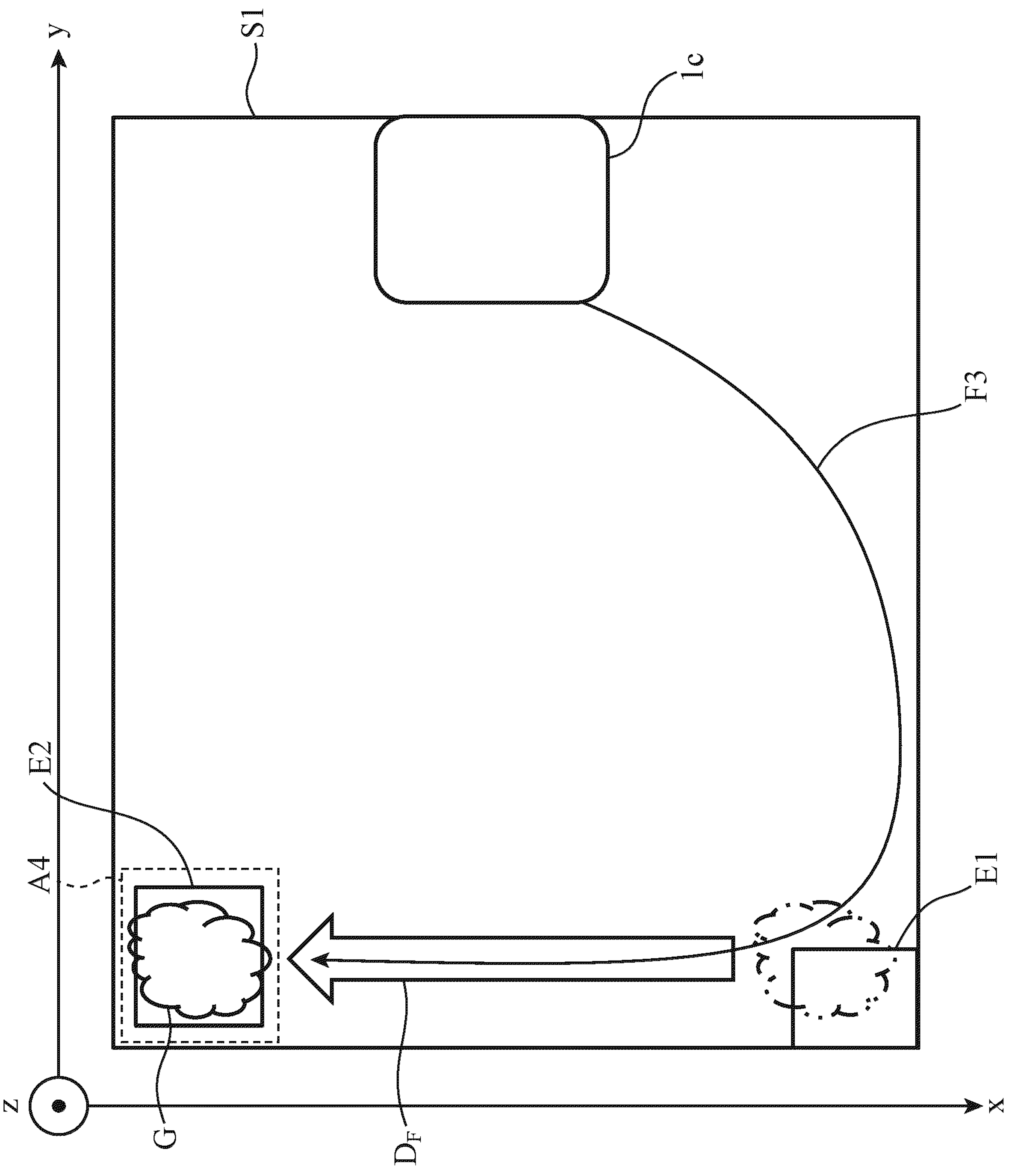


FIG. 28

FIG. 29

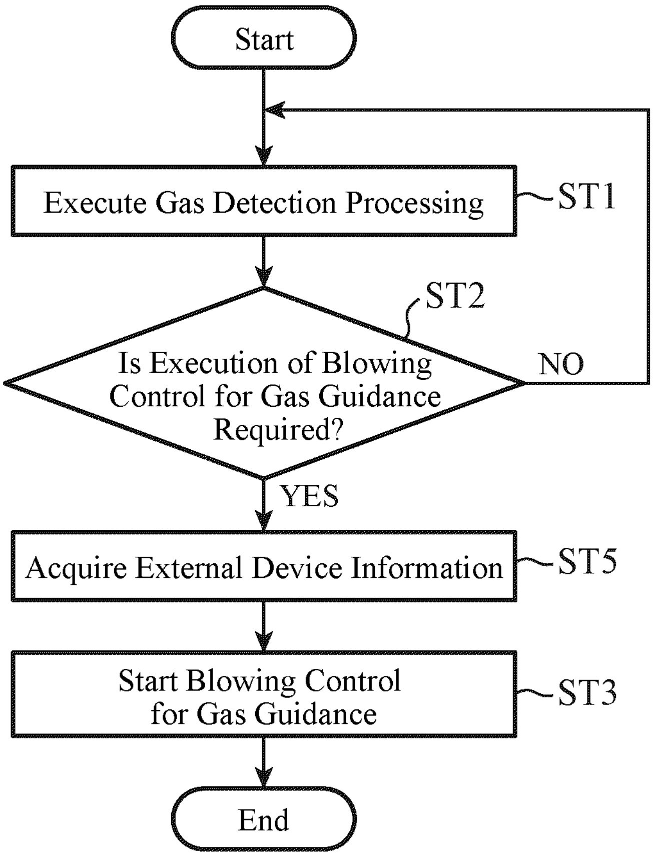
Start
Execute Gas Detection Processing
ST1
ST2
Is Execution of Blowing Control for Gas Guidance Required?
NO
YES
Acquire External Device Information
ST5
Start Blowing Control for Gas Guidance
ST3
End

FIG. 30

1c

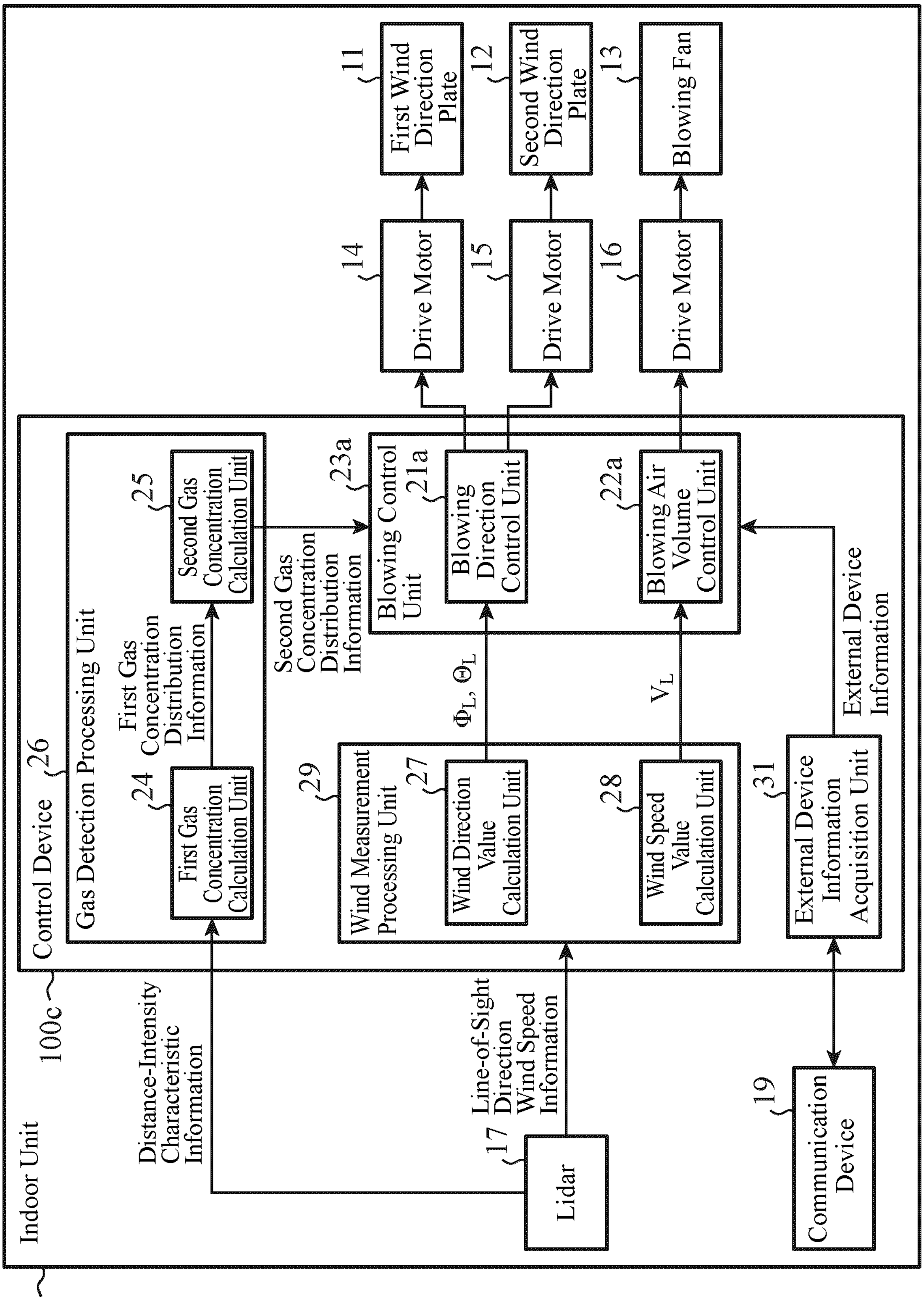
Indoor Unit
100c
Control Device
26
Gas Detection Processing Unit
24
First Gas Concentration Calculation Unit
First Gas Concentration Distribution Information
25
Second Gas Concentration Calculation Unit
Second Gas Concentration Distribution Information
29
Wind Measurement Processing Unit
27
Wind Direction Value Calculation Unit
28
Wind Speed Value Calculation Unit
$\Phi_L$, $\Theta_L$
$V_L$
23a
Blowing Control Unit
21a
Blowing Direction Control Unit
22a
Blowing Air Volume Control Unit
31
External Device Information Acquisition Unit
External Device Information
17
Lidar
Distance-Intensity Characteristic Information
Line-of-Sight Direction Wind Speed Information
19
Communication Device
14
Drive Motor
15
Drive Motor
16
Drive Motor
11
First Wind Direction Plate
12
Second Wind Direction Plate
13
Blowing Fan

FIG. 31

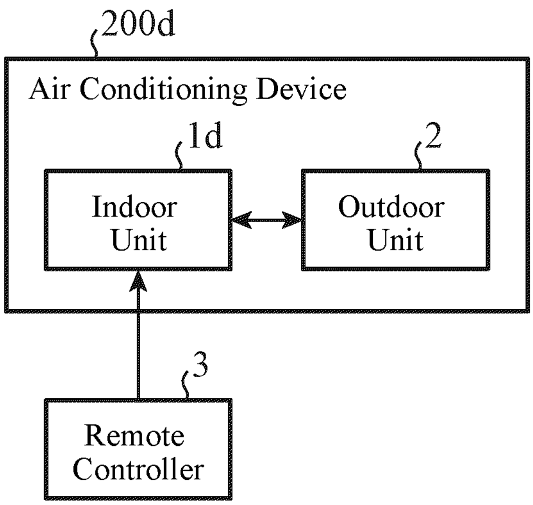
200d
Air Conditioning Device
1d
Indoor Unit
2
Outdoor Unit
3
Remote Controller

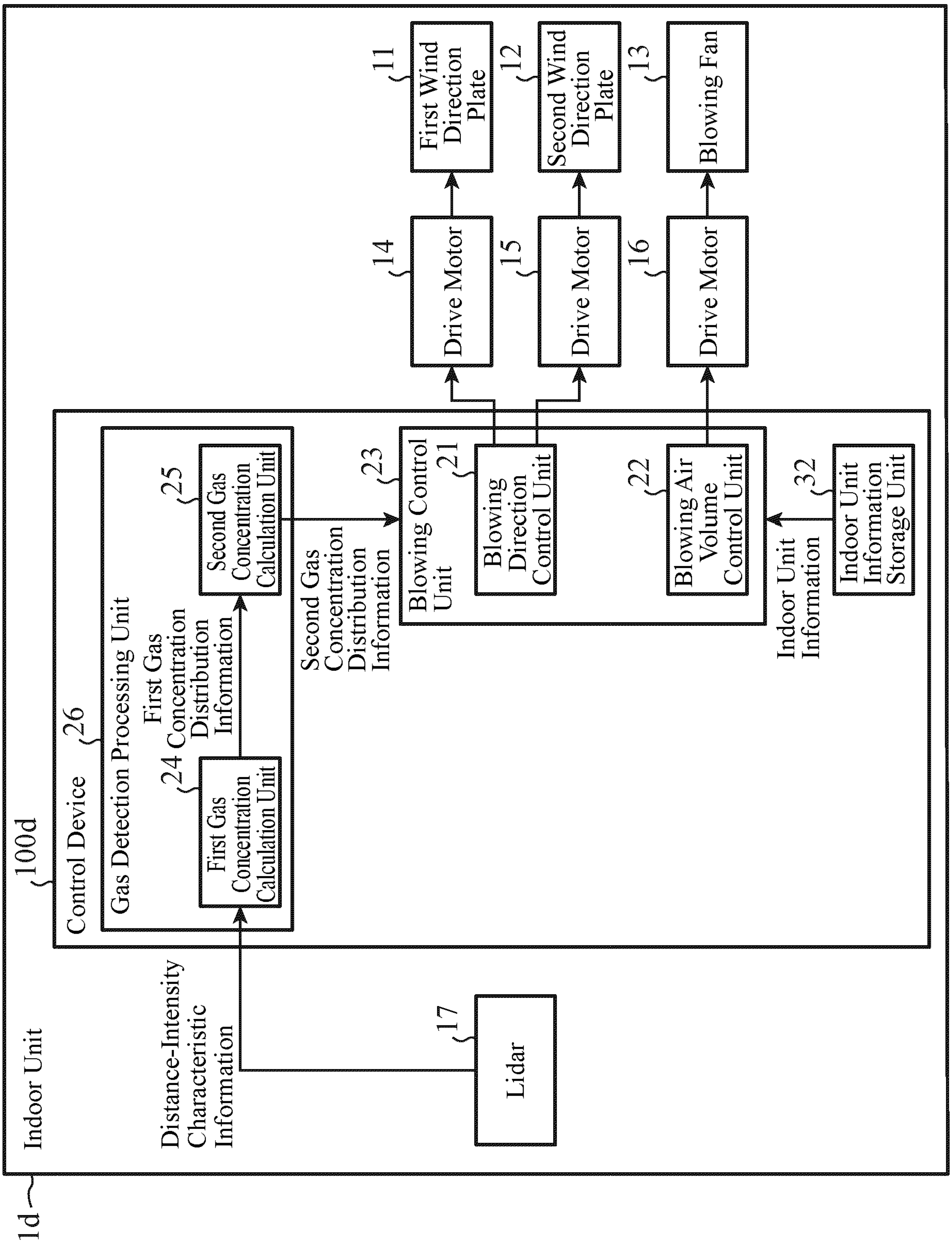
1d
Indoor Unit
100d
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23
Blowing Control Unit
21
Blowing Direction Control Unit
22
Blowing Air Volume Control Unit
32
Indoor Unit Information Storage Unit
Indoor Unit Information
Distance-Intensity Characteristic Information
17
Lidar
14
Drive Motor
15
Drive Motor
16
Drive Motor
11
First Wind Direction Plate
12
Second Wind Direction Plate
13
Blowing Fan

FIG. 32

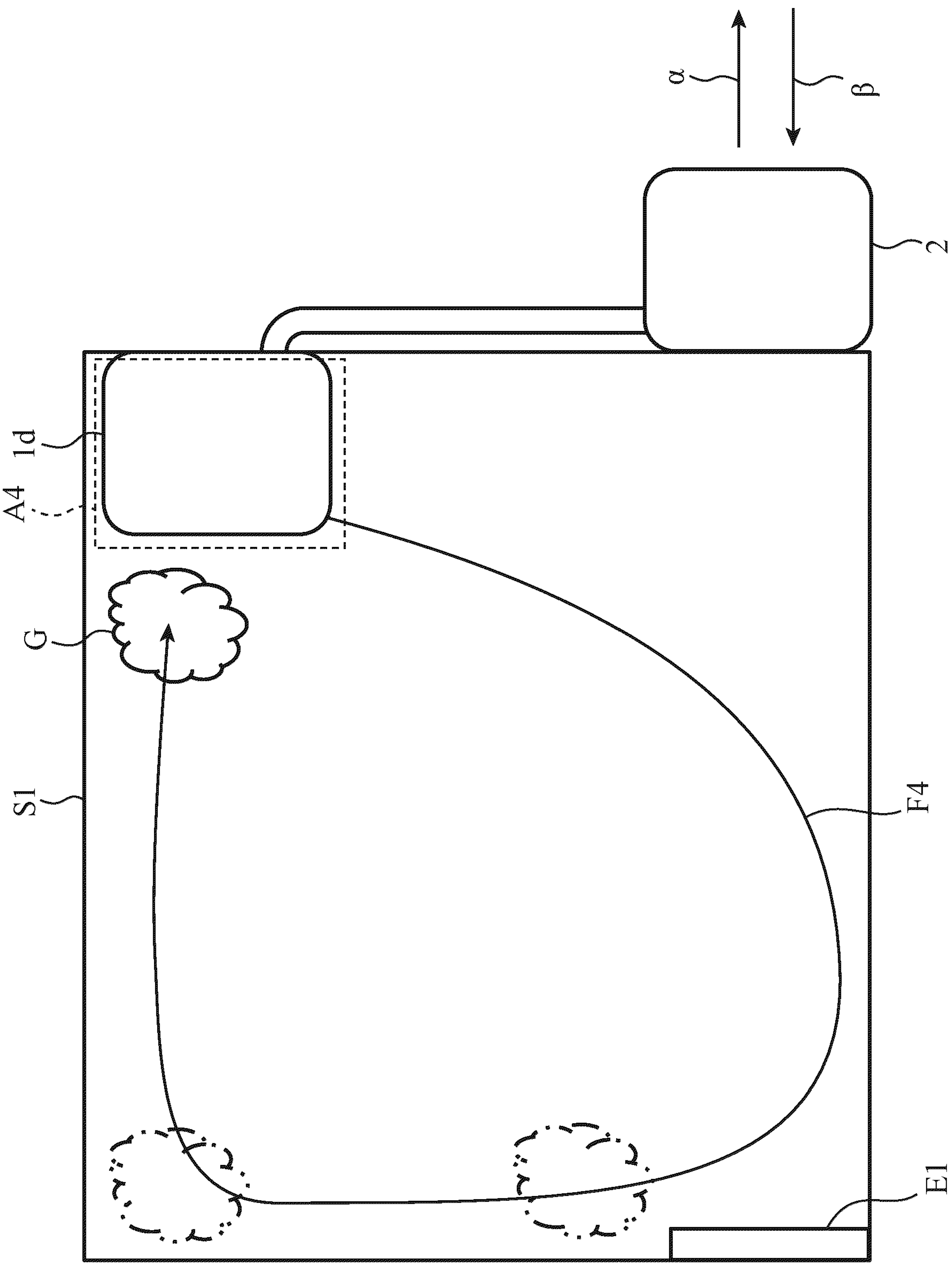


FIG. 33

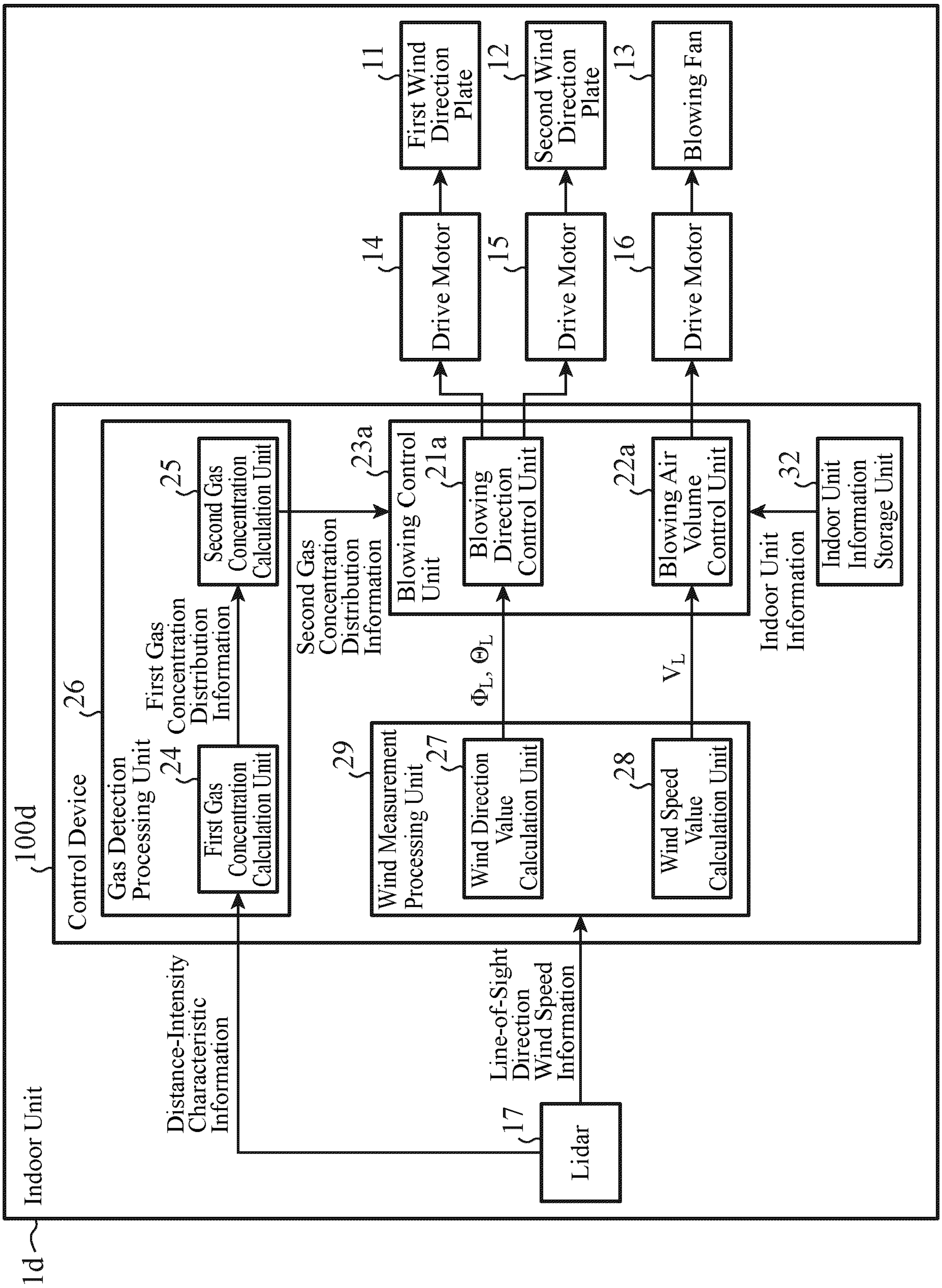
1d
Indoor Unit
100d
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23a
Blowing Control Unit
21a
Blowing Direction Control Unit
22a
Blowing Air Volume Control Unit
32
Indoor Unit Information Storage Unit
Indoor Unit Information
29
Wind Measurement Processing Unit
27
Wind Direction Value Calculation Unit
28
Wind Speed Value Calculation Unit
$\Phi_L$, $\Theta_L$
$V_L$
14
Drive Motor
15
Drive Motor
16
Drive Motor
11
First Wind Direction Plate
12
Second Wind Direction Plate
13
Blowing Fan
17
Lidar
Distance-Intensity Characteristic Information
Line-of-Sight Direction Wind Speed Information

FIG. 34

FIG. 35

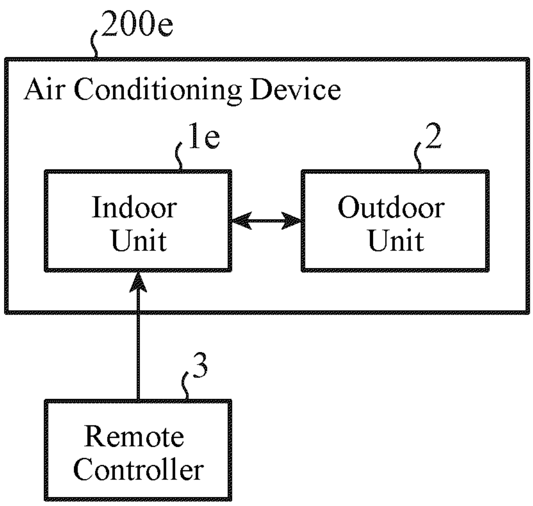
200e
Air Conditioning Device
1e
Indoor Unit
2
Outdoor Unit
3
Remote Controller

FIG. 36

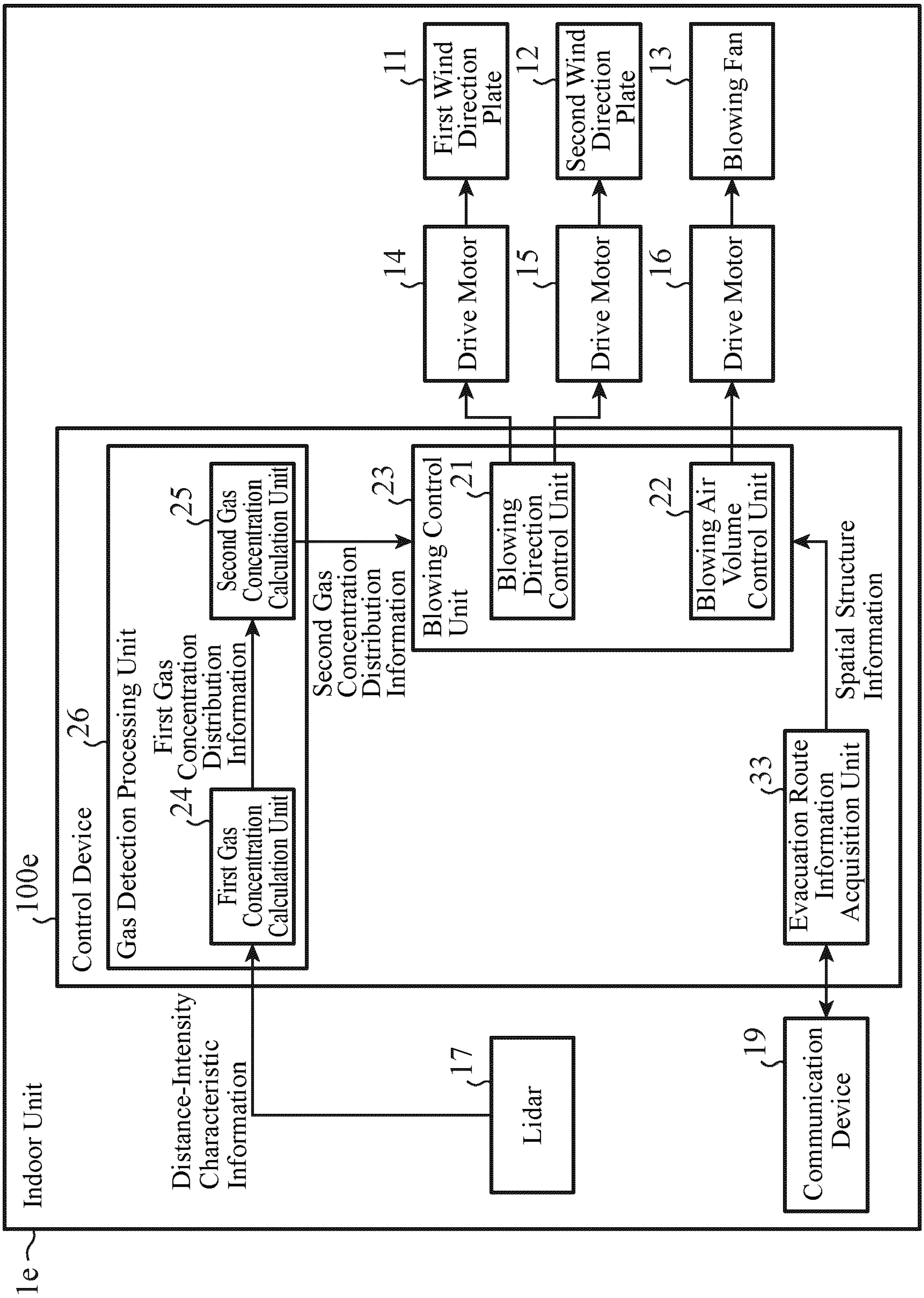
1e
Indoor Unit
100e
Control Device
26
Gas Detection Processing Unit
24
First Gas Concentration Calculation Unit
First Gas Concentration Distribution Information
25
Second Gas Concentration Calculation Unit
Second Gas Concentration Distribution Information
23
Blowing Control Unit
21
Blowing Direction Control Unit
22
Blowing Air Volume Control Unit
Spatial Structure Information
33
Evacuation Route Information Acquisition Unit
Distance-Intensity Characteristic Information
17
Lidar
19
Communication Device
14
Drive Motor
15
Drive Motor
16
Drive Motor
11
First Wind Direction Plate
12
Second Wind Direction Plate
13
Blowing Fan

FIG. 37A

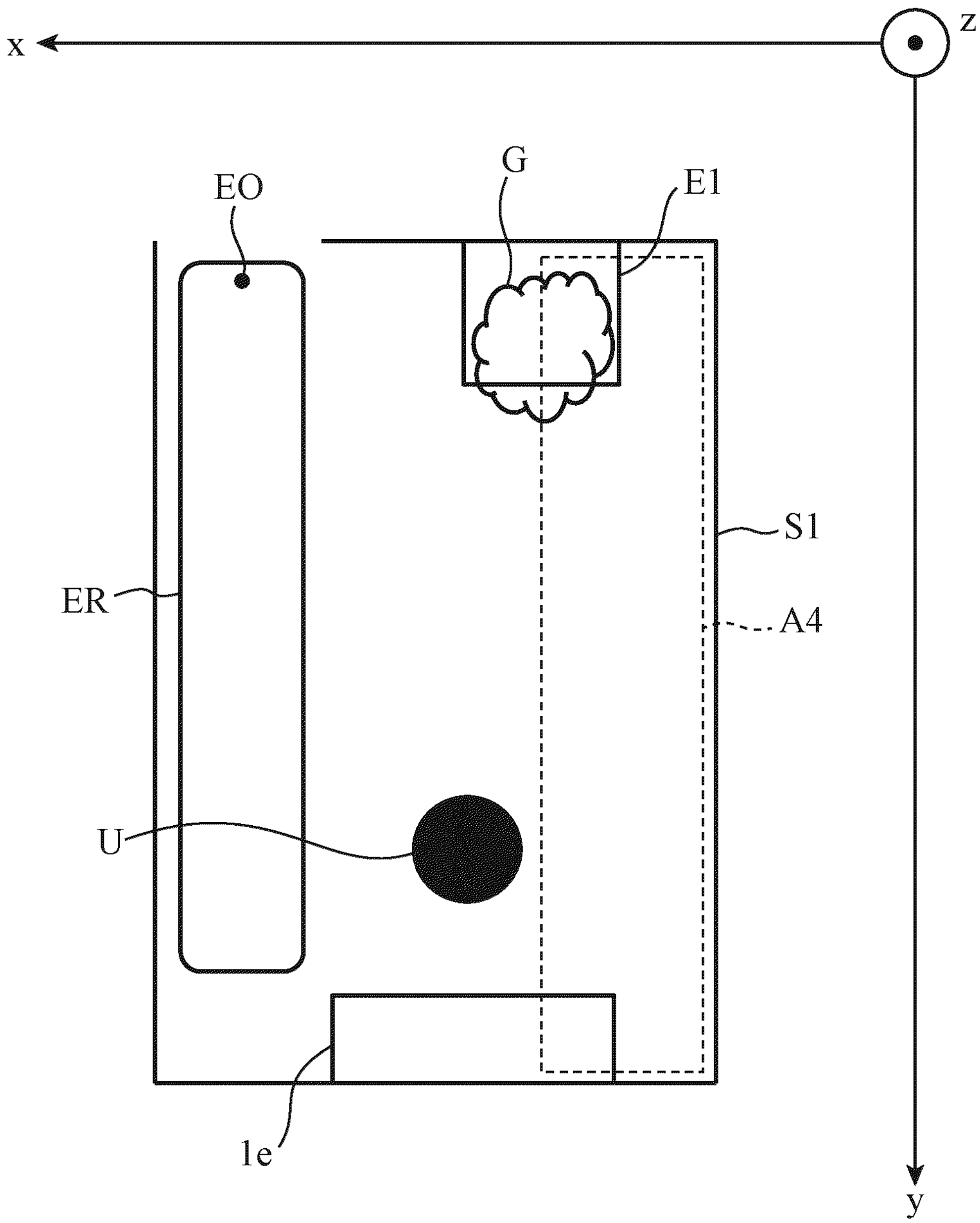

FIG. 37B

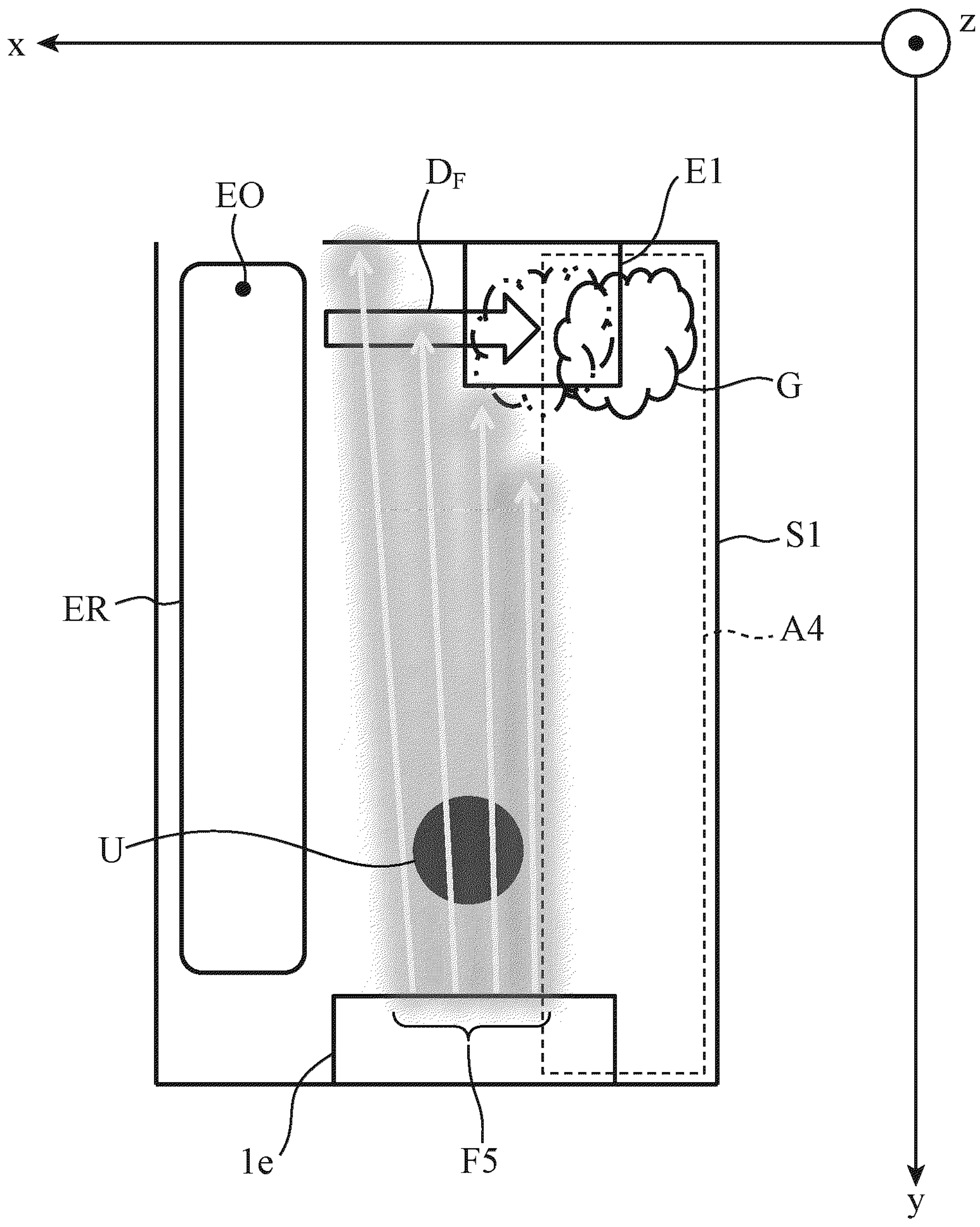

FIG. 37C

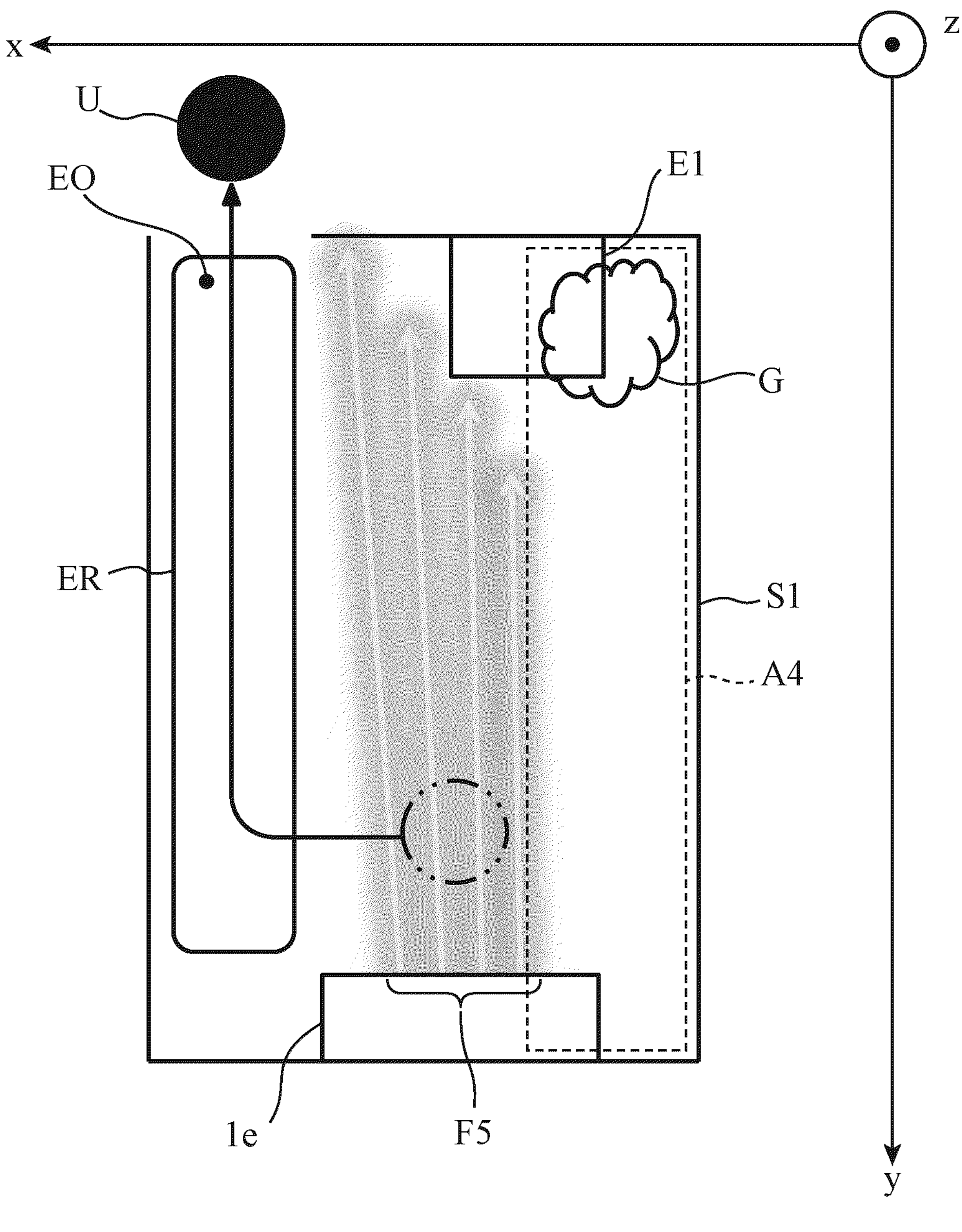

FIG. 38

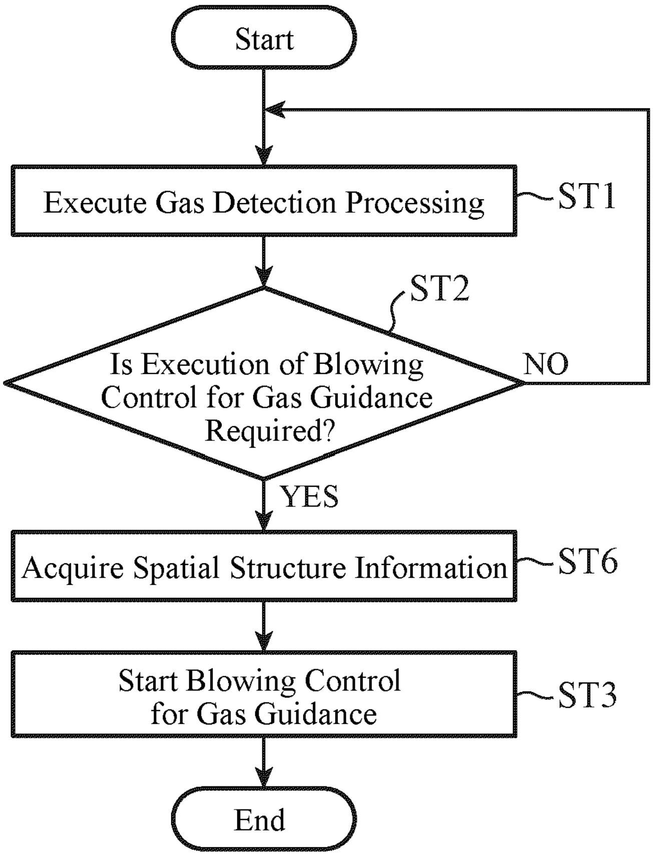
Start
Execute Gas Detection Processing
ST1
ST2
Is Execution of Blowing Control for Gas Guidance Required?
NO
YES
Acquire Spatial Structure Information
ST6
Start Blowing Control for Gas Guidance
ST3
End

FIG. 39

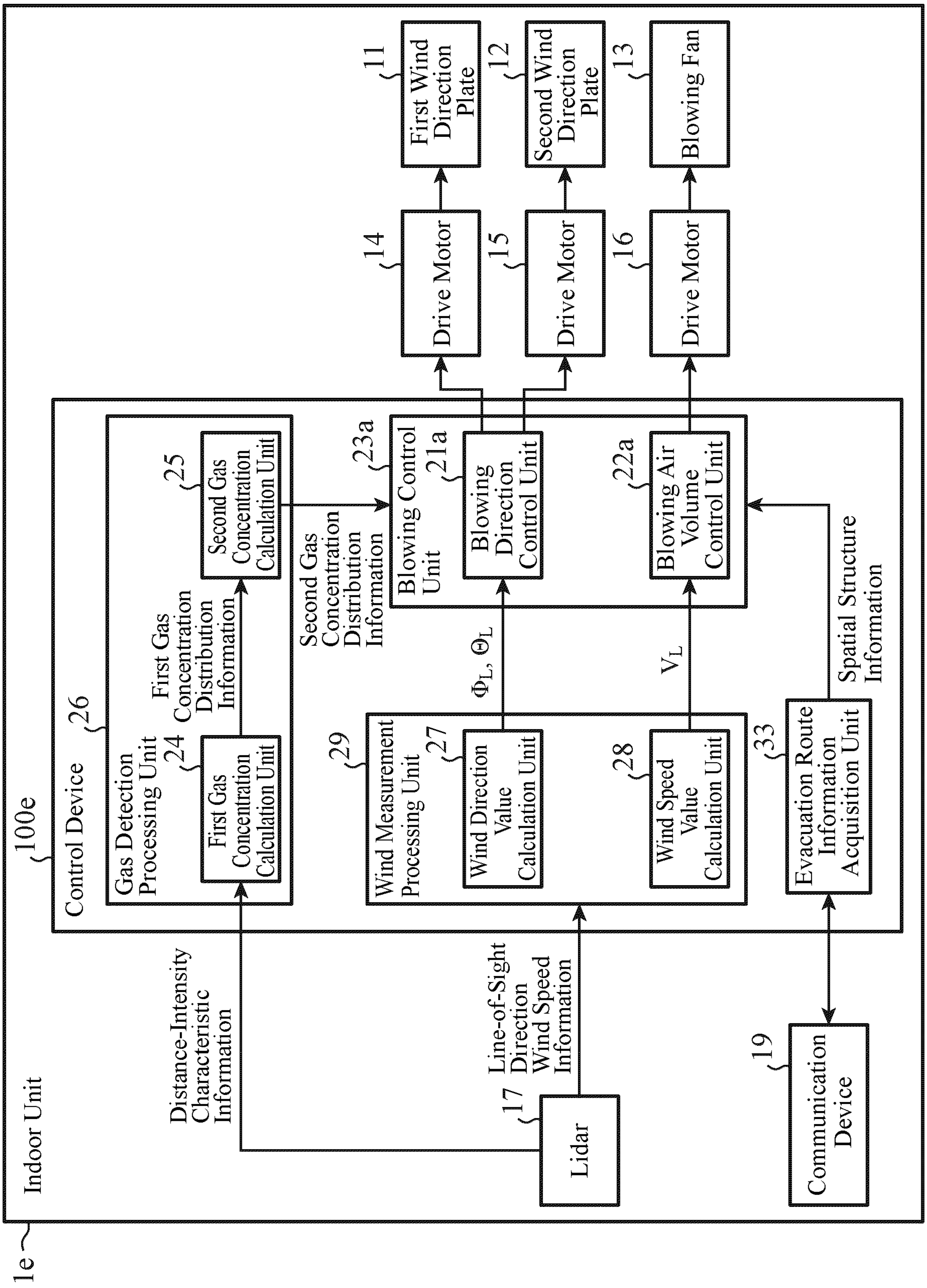

1e
Indoor Unit
100e
Control Device
26
Gas Detection Processing Unit
24
First Gas Concentration Calculation Unit
First Gas Concentration Distribution Information
25
Second Gas Concentration Calculation Unit
Second Gas Concentration Distribution Information
29
Wind Measurement Processing Unit
27
Wind Direction Value Calculation Unit
28
Wind Speed Value Calculation Unit
$\Phi_L$, $\Theta_L$
$V_L$
23a
Blowing Control Unit
21a
Blowing Direction Control Unit
22a
Blowing Air Volume Control Unit
33
Evacuation Route Information Acquisition Unit
Spatial Structure Information
14
Drive Motor
15
Drive Motor
16
Drive Motor
11
First Wind Direction Plate
12
Second Wind Direction Plate
13
Blowing Fan
Distance-Intensity Characteristic Information
Line-of-Sight Direction Wind Speed Information
17
Lidar
19
Communication Device

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017013715 A
- US 2017010008 A1
- JP 2017198536 A
- US 2018363935 A1
- US 9644857 B1
- CN 107062520 A
- US 10030885 B1
- WO 2017183104 A1